(19) Europäisches Patentamt
European Patent Office
Office européen des brevets

(11) **EP 2 267 475 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(51) Int Cl.:
*G01S 3/805* (2006.01)    *G01S 3/808* (2006.01)
*G01S 3/80* (2006.01)

(21) Anmeldenummer: **10163799.9**

(22) Anmeldetag: **25.05.2010**

(54) **Peilverfahren sowie Peilanlage zum Detektieren und Tracken zeitlich aufeinanderfolgender Peilwinkel**

Direction finding method and assembly for detecting and tracking subsequent bearing angles

Procédé de radiogoniométrie et installation de radiogoniométrie destinée à détecter et suivre des angles radiogoniométriques temporellement successifs

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.06.2009 DE 102009024339**

(43) Veröffentlichungstag der Anmeldung:
**29.12.2010 Patentblatt 2010/52**

(73) Patentinhaber: **ATLAS Elektronik GmbH**
**28309 Bremen (DE)**

(72) Erfinder:
 • **Brinkmann, Kevin, Dr.**
 **28359 Bremen (DE)**
 • **Hurka, Jörg, Dr.**
 **26161 Oldenbrug (DE)**
 • **Daun, Martina**
 **56753 Pillig (DE)**
 • **Koch, Wolfgang, Dr.**
 **53424 Remagen-Rolandswerth (DE)**

 • **Ruthotto, Eicke**
 **53117 Bonn (DE)**

(74) Vertreter: **Wasiljeff, Johannes M.B.**
**Jabbusch Siekmann & Wasiljeff**
**Patentanwälte**
**Otto-Lilienthal-Strasse 25**
**28199 Bremen (DE)**

(56) Entgegenhaltungen:
**WO-A1-2008/131826**

 • **WOLFGANG KOCH: "On optimal distributed kalman filtering and retrodiction at arbitrary communication rates for maneuvering targets" MULTISENSOR FUSION AND INTEGRATION FOR INTELLIGENT SYSTEMS, 2008. MFI 2008. IEEE INTERNATIONAL CONFERENCE ON, IEEE, PISCATAWAY, NJ, USA, 20. August 2008 (2008-08-20), Seiten 457-462, XP031346243 ISBN: 978-1-4244-2143-5**

**Beschreibung**

Die Erfindung betrifft ein Peilverfahren zum Detektieren und Tracken zeitlich aufeinanderfolgender Peilwinkel von breitbandig schallabstrahlenden Zielen über das gesamte Azimut-Panorama oder einen vorgebbaren Azimutsektor mit einer Peilanlage zum Empfangen breitbandiger Schallwellen nach dem Oberbegriff des Anspruchs 1 und eine Peilanlage nach dem Oberbegriff des Anspruchs 14.

In der Sonartechnik wird mit einer passiven Peilanlage der gesamte Azimut oder ein Sektor überwacht, um Geräusche schallabstrahlender Ziele wie Oberflächenschiffe, U-Boote, Unterwasserfahrzeuge oder Torpedos zu detektieren und Peilwinkel zu den Zielen zu tracken. Unter dem Begriff "Tracken" ist das Bilden einer Spur zu verstehen. Das Tracken von Peilwinkeln bedeutet somit das Bilden einer oder mehrerer Peilspuren eines bzw. mehrerer Ziele (zur Bedeutung sogenannter "Tracks" vergleiche: KOCH, W. "On Optimal Distributed Kalman Filtering and Retrodiction at Arbitrary Communication Rates for Maneuvering Targets", in: IEEE International Conference on Multisensor Fusion and Integration for Intelligent Systems, 2008. MFI 2008. 20-22 Aug. 2008, S. 457 - 462 XP 03134 6243.

Mit elektroakustischen oder optoakustischen Wandlern einer Empfangsantenne der Peilanlage werden Richtcharakteristiken gebildet, mit denen eine Peilung über eine ihrer Hauptempfangsrichtungen, die in unterschiedliche benachbarte Richtungen weisen, erfolgt, wenn die Intensität, d.h. die Amplitude oder der Pegel, des zugehörigen Gruppensignals über einer vorgebbaren Schwelle liegt und das empfangene Geräusch sich deutlich vom umgebenden Rauschen abhebt. Breitbandig empfangene Empfangssignale einer vorgebbaren Gruppe oder aller Wandler der Empfangsantenne werden abhängig von ihrer Position zu einer Bezugslinie laufzeitverzögert oder phasenkompensiert und konphas zu einem Gruppensignal aufaddiert, dessen zugehörige Richtcharakteristik mit seiner Hauptempfangsrichtung senkrecht zur Bezugslinie einen Peilwinkel angibt. Dazu werden die Amplituden oder die Pegel oder allgemein die Intensitäten der Gruppensignale über den Peilwinkel angezeigt. Anhand dieser Intensitäten der Gruppensignale werden mittels eines geeigneten Detektionsalgorithmus eine Peilung zu einem Ziel oder mehrere Peilungen zu mehreren Zielen detektiert. Diese Anzeige wird ständig von Zeittakt zu Zeittakt erneuert. Wenn das Ziel seinen Kurs bzgl. der Peilanlage ändert, wandert die Peilung zum Ziel aus. Nähert sich das Ziel dabei der Peilanlage, vergrößert sich die Intensität des Gruppensignals. Entfernt sich das Ziel von der Peilanlage, verkleinert sich die Intensität des Gruppensignals, bis sie sich im Umgebungsrauschen verliert.

Durch eine peilwinkelabhängige Anzeige der Gruppensignale in zeitlich aufeinanderfolgenden Intensitätsschrieben baut sich - dem Winkelverlauf der Gruppensignale folgend - über der Zeit eine Peilspur auf, die sich aufgrund ihrer größeren Intensität als die Intensitäten der umgebenden Gruppensignale aus den Intensitätsschrieben heraushebt. Diese Peilspur wird dann manuell mit einem Tracker, d.h. einer Marke bzw. Markierung, markiert, um das zugehörige Ziel über seine Peilungen zeitlich zu verfolgen. Das Tracken des Ziels wird manuell beendet und der zugehörige Tracker gelöscht, wenn der Bediener in der winkelabhängigen Anzeige der Intensitäten der Gruppensignale kein ausgeprägtes Maximum mehr erkennen kann.

Der Erfindung liegt die Aufgabe zugrunde, ein Peilverfahren sowie eine Peilanlage zum Detektieren und Tracken zeitlich aufeinanderfolgender Peilwinkel anzugeben, das bzw. die automatisch Ziele detektiert, Tracker setzt und Tracker löscht.

Diese Aufgabe wird erfindungsgemäß durch die Merkmale des Anspruchs 1 bzw. 14 gelöst. Durch die erfindungsgemäße Prädiktion eines Peilwinkels und ggf. einer Intensität, insbesondere Amplitude oder Pegel, einer Peilspur und seine Zuordnung zu einem gemessenen Peilwinkel und ggf. einer zugehörigen Intensität ist es möglich, die Detektion von Peilwinkeln und das Markieren einer Peilspur zu automatisieren. Es reicht bereits aus, diese Prädiktion allein für den Peilwinkel durchzuführen. Die Prädiktion kann jedoch zusätzlich auch für die Intensität durchgeführt werden. Der geschätzte Peilwinkel und/oder die geschätzte Intensität werden vorteilhafterweise angezeigt.

Peilspuren weisen über der Zeit einen Verlauf auf, der in der Regel im Wesentlichen einer Arctan-Funktion entspricht. Erfindungsgemäß werden diese Peilspuren durch geradlinige Teilstücke approximiert, indem jeweils für ein Teilstück der Verlauf durch einen Anfangswert, nämlich den zuletzt zur Peilspur gehörigen ermittelten Peilwinkel, und die Steigung des Teilstücks bis zur nächsten Messung des Peilwinkels in einem Zustandsvektor vorausgesagt wird und daraus ein nächster Peilwinkel und ggf. eine nächste Intensität auf der Peilspur mit einem Schätzfehler prädiziert wird, der einen zum letzten ermittelten Peilwinkel und ggf. zur letzten ermittelten Intensität gehörenden Spurfehler berücksichtigt. Da die gemessenen Peilwinkel sowie ggf. die gemessenen Intensitäten mit Messfehlern behaftet sind, wird der Approximation erfindungsgemäß ebenfalls ein Rauschprozess zugrunde gelegt.

Anschließend wird eine Zuordnungs-Wahrscheinlichkeit ermittelt, mit der ein gemessener Peilwinkel und ggf. eine gemessene Intensität einer der Peilspuren zugeordnet werden kann. In Abhängigkeit einer ermittelten Zuordnungs-Wahrscheinlichkeit wird dann ein gemessener Peilwinkel und ggf. eine gemessene Intensität zusammen mit einem prädizierten Peilwinkel und ggf. einer prädizierten Intensität zu einem geschätzten Peilwinkel und ggf. einer geschätzten Intensität mittels eines Schätzfilters, insbesondere eines Kalman-Filters geschätzt. Es können aber auch einer Peilspur mehrere während eines Zeittaktes gemessene Peilwinkel und ggf. mehrere während desselben Zeittaktes gemessene Intensitäten zugeordnet werden. Dann werden die jeweiligen anhand dieser Zuordnungen geschätzten Werte (Schätzwerte) für Peilwinkel und Peilrate sowie ggf. für Intensität und Intensitätsrate gewichtet aufsummiert. Der bzw. die auf diese Weise ermittelten Werte - d.h. für den Fall einer Zuordnung mehrerer gemessener Werte zu einer Peilspur die gewichteten summierten Werte - werden dann dem Spurzustandsvektor der betreffenden Peilspur oder bei einer etwaigen Zuordnung zu mehreren Peilspuren den Spurzustandsvektoren der betreffenden Peilspuren zugeordnet. Die somit erhaltenen Werte für einen geschätzten Peilwinkel und ggf. eine geschätzte Intensität werden zusammen mit der geschätzten Peilrate und ggf. Intensitätsrate als Ausgangsgrößen des im nächsten Zeittakt prädizierten Zustandsvektors der betreffenden Peilspur herangezogen. Derart gebildete Peilspuren werden in Abhängigkeit einer Spurgüte angezeigt.

Bei dem erfindungsgemäßen Peilverfahren kann sich die Prädiktion auf den Peilwinkel oder auf den Peilwinkel sowie die Intensität beziehen. Für alle Prädiktionen wird der gleiche Prädiktionsalgorithmus angesetzt, der auf der Approximation eines zeitlichen Verlaufs einer Peilspur mit geradlinigen Teilstücken als Zielbewegungsmodelldynamik beruht.

Ein Vorteil der Erfindung liegt in einer automatischen Initialisierung, Extraktion, Bestätigung sowie Löschung von Peilspuren ohne Bedienereingriff. Ein weiterer Vorteil des erfindungsgemäßen Peilverfahrens besteht darin, dass auch ein voraussichtlich gekrümmter Verlauf einer Peilspur wegen der zeitlichen Dichte der gemessenen Peilwinkel durch geradlinige Teilstücke approximiert werden kann. Dies gilt auch dann, wenn sich der Peilwinkel zu einem Ziel, das sich bzgl. der Peilanlage mit konstantem Kurs und konstanter Geschwindigkeit bewegt, nicht pro konstantem Wegintervall des Ziels um eine konstante Peilrate verändert. Mit der Strukturierung der Modellvarianzen und der Stärke des Prozessrauschens wird eine Approximation erreicht, die dieses Verhalten des Peilwinkels berücksichtigt.

In einer vorteilhaften Weiterbildung des erfindungsgemäßen Peilverfahrens wird die Qualität untersucht, mit der der gemessene Peilwinkel und ggf. die gemessene Intensität in die geschätzte Peilspur hineinpasst und ob der zuletzt geschätzte Peilwinkel als Verlängerung der bisherigen Peilspur angezeigt werden kann. Unter Berücksichtigung einer Dichtevorgabe von neuen Peilspuren im Azimut-Panorama oder im Azimutsektor und einer Dichtevorgabe von Falschmeldungen wird zusammen mit der Zuordnungs-Wahrscheinlichkeit eine Spurgüte je Peilspur bestimmt. Diese Spurgüte wird über eine vorgebbare Anzahl von Zeittakten aufsummiert und berücksichtigt die gesamte oder einen Teil der Vergangenheit der Peilspur. Die jeweils aktuell berechnete Spurgüte wird mit zwei Schranken verglichen, um mit dem Peilwinkel eine neue vorläufige Peilspur einzuleiten oder zu bestätigen oder eine bestehende Peilspur zu bestätigen oder zu löschen. Bei fehlendem Messwert wird die letzte Schätzung durch Prädiktion weitergeführt und die Spurgüte herabgesetzt. Übrig gebliebene Messungen, denen keine Peilspur zugeordnet werden kann, werden als Beginn einer neuen Peilspur gewertet. Die Schranken werden durch vorgebbare Wahrscheinlichkeiten für die Bestätigung einer falschen Peilspur oder das Löschen einer wahren Peilspur festgelegt. Die zuletzt ermittelten Peilspuren und ihre Bewertungen werden in einer Peilspurliste geführt und in einer Anzeige entsprechend der Spurgüte dargestellt. Diese bestätigten Peilspuren können, bspw. farbig, markiert und somit einem Ziel zugeordnet werden.

In einer vorteilhaften Weiterbildung des erfindungsgemäßen Peilverfahrens wird der Peilwinkel und ggf. die Spurintensität aus dem prädizierten Peilwinkel und ggf. der prädizierten Intensität zzgl. der Differenz aus gemessenem und prädizierten Peilwinkel und ggf. gemessener und prädizierter Intensität unter Berücksichtigung des Schätzfehlers und Messfehlers bestimmt. Es ergibt sich, dass der Peilwinkel umso besser in die geschätzte Peilspur eingepasst ist, je weniger der gemessene Peilwinkel und ggf. die gemessene Intensität vom geschätzten Peilwinkel bzw. der geschätzten Intensität abweicht und je kleiner der Schätzfehler ist.

Um den nächsten prädizierten Zustandsvektor vorherzusagen, wird nach einer vorteilhaften Weiterbildung des erfindungsgemäßen Peilverfahrens zum zuletzt ermittelten Peilwinkel und ggf. zur zuletzt ermittelten Spurintensität die aus der bisher geschätzten Peilspur ermittelte Peilrate und ggf. Intensitätsrate oder Steigung der Peilspur bzgl. ihres Winkelverlaufs und ggf. ihrer Intensität mit dem Zeitintervall multipliziert und addiert.

Nach einer weiteren vorteilhaften Weiterbildung der Erfindung wird der Schätzfehler abhängig von dem zuletzt ermittelten Spurfehler, den Modell-Varianzen und der Varianz der zeitlichen Änderung der Peilrate und ggf. Intensitätsrate und der Kovarianz zwischen Peilwinkel und ggf. Intensität und ihrer zeitlichen Änderungen bestimmt. Der Schätzfehler ist umso größer, je größer die Modell-Varianzen vorgegeben sind und die geschätzte Steigung von der bisher ermittelten Steigung abweicht. Durch Vergrößern der Modell-Varianzen werden auch stark streuende gemessene Peilwinkel der geschätzten Peilspur zugeordnet und die Peilspur bei "Ausreißer-Messwerten" nicht sofort unterbrochen, wenn z.B. durch Änderungen des Übertragungsverhaltens im Ausbreitungsweg der Schallwellen zwischen Ziel und Peilanlage das Nutz-/Stör-Verhältnis der Intensität stark schwankt und kein signifikantes Gruppensignal mehr empfangen wird.

Der Vorteil einer Weiterbildung des erfindungsgemäßen Peilverfahrens besteht darin, dass die Sicherheit der Anzeige von Peilspuren durch die obere Schranke der Spurgüte verändert werden kann. Soll die Wahrscheinlichkeit für das Bestätigen einer falschen Peilspur herabgesetzt werden, wird die obere Schranke erhöht und die Anzahl der bestätigten Peilspuren reduziert. Dadurch können Peilspuren, die durch den Empfang von Schallwellen über Nebenzipfel der Richtcharakteristik erzeugt werden, unterdrückt werden. Ebenso werden Peilspuren aus achterlichen Lagen des die Peilanlage tragenden Wasserfahrzeugs unterdrückt, die durch den Schalleinfall eines Antriebspropellers verursacht werden.

Zum Ermitteln der Güte einer geschätzten Peilspur mit prädiziertem Peilwinkel und ggf. prädizierter Intensität wird der quadrierte, normierte statistische Abstand zwischen jedem der gemessenen Peilwinkel und ggf. Intensitätswerte und jedem prädizierten Peilwinkel bzw. Intensitätswert bestimmt, der ein Maß für die Zuordnungs-Wahrscheinlichkeit des gemessenen Peilwinkels bzw. Intensitätswerts zur geschätzten Peilspur ist. In die Bestimmung des quadrierten, normierten statistischen Abstands geht die quadrierte Differenz aus gemessenem und prädiziertem Peilwinkel bzw. Intensitätswert sowie die Summe der zugehörigen Fehler aus Messfehler und Schätzfehler ein, wobei die Wahrscheinlichkeit umso größer ist, je kleiner die Differenz der Peilwinkelwerte bzw. Intensitätswerte ist und je größer die Modell-Varianzen vorgegeben werden und die zugelassenen Abweichungen von der prädizierten Steigung und damit die Abweichungen von der geschätzten Peilspur toleriert werden.

Zur Verringerung der benötigten Rechenkapazität wird gemäß einer weiteren vorteilhaften Ausbildung des erfindungsgemäßen Peilverfahrens ein Gate-Wert eingeführt, mit dem Paare, deren Wahrscheinlichkeit einer Zuordnung unter einem vorgebbaren Wert liegt, unterdrückt werden.

Von Interesse ist die Qualität, mit der sich die gemessenen Peilwinkel in die bisher geschätzten Peilspuren einfügen. Dazu wird aus der Zuordnungs-Wahrscheinlichkeit eine Spurgüte mit Hilfe eines logarithmierten Likelihood-Quotienten bestimmt. Der Likelihood-Quotient ist für Tracks von Zielpositionen aus der Radartechnik bekannt und bspw. in Kapitel 6 im Buch "Design and Analysis of Modern Tracking Systems" von Samuel Blackman und Robert Popoli, Artec House, Boston, London, 1999, beschrieben. In passiven Sonaranlagen können jedoch keine Zielpositionen getrackt werden, da nur Peilwinkel gemessen werden und die Entfernung zwischen Peilanlage und Ziel nicht bekannt ist. Das erfindungsgemäße Tracking-Peilverfahren beruht auf dem Verfolgen von Peilwinkeln, die eine Peilspur bilden, wenn sie zu ein und demselben Ziel gehören. Mit den prädizierten Peilwinkeln und ggf. Intensitäten und Peilraten und ggf. Intensitätsraten werden zusammen mit gemessenen Peilwinkeln und ggf. Intensitäten Peilwinkel und ggf. Spurintensitäten geschätzt und daraus Peilspuren gewonnen und angezeigt.

Um die Güte der Peilspuren zu ermitteln, wird eine Detektionswahrscheinlichkeit $P_D$ für einen neuen echten Peilwinkel im Winkelabstand der Hauptempfangsrichtungen benachbarter Richtcharakteristiken, z.B. entsprechend einer erfahrungsgemäßen Dichte neu detektierter Peilwinkel je Zeittakt im gesamten Azimut-Panorama oder im Azimutsektor vorgegeben, logarithmiert und je Zeittakt ein Güte-Inkrement für die Peilspur hinzuaddiert. Das Güte-Inkrement enthält das logarithmierte Verhältnis aus Detektionswahrscheinlichkeit und vorgegebener Falschalarmwahrscheinlichkeit, die z.B. aus einer erfahrungsgemäßen Dichte von Falschalarmen im Azimut-Panorama oder Azimutsektor für einen Peilwinkel im Winkelabstand der Hauptempfangsrichtungen bestimmt wird. Unter Berücksichtigung der Summe aus Messfehler und Schätzfehler bildet dieser Logarithmus einen ersten Term des Güte-Inkrements, von dem je Zeittakt der halbe quadrierte, normierte statistische Abstand zwischen dem gemessenen und prädizierten Peilwinkel je Peilspur abgezogen wird. Alle oder eine vorgebbare Anzahl zuletzt ermittelter Güte-Inkremente, die zur selben Peilspur gehören, bilden die Spurgüte.

Die Vorteile der apparativen Ausführung der Erfindung mit einer Peilanlage entsprechen denen, die im Zusammenhang mit dem erfindungsgemäßen Peilverfahren aufgeführt wurden. Unterschiedliche Peilsensoren sind hier einsetzbar, die jeweils aus einer Empfangsantenne und einem Richtungsbildner bestehen. Die Empfangsantenne ist auf unterschiedliche Empfangsfrequenzbereiche ausgelegt und besteht bspw. aus einer Zylinderbasis, einer Seitenantenne, einer Schleppantenne, einem sog. Conformal Array bzw. konforme Wandleranordnung oder einem planaren Array bzw. einer planaren Wandleranordnung sowie ihren nachgeordneten Signalverarbeitungsalgorithmen, wie es in der DE 10 2007 019 445 angegeben ist. Die Gruppensignale des Richtungsbildners werden in der erfindungsgemäßen Peilanlage ausgewertet und zum Tracken von Zielen durch Verfolgen ihrer Peilspuren genutzt.

Besonders vorteilhaft ist es für die erfindungsgemäße Signalverarbeitung, ein Kalman-Filter für die Modellierung der linearen Approximation der Peilspur, die Prädiktion von Peilwinkel und ggf. Intensität aus zuletzt ermittelten Peilwinkeln und ggf. Spurintensitäten und ihren Schätzfehlern sowie die Ermittlung des momentanen Peilwinkels und Spurfehlers einzusetzen. In einer Abstandsrechenstufe wird die Wahrscheinlichkeit einer paarweisen Zuordnung von gemessenem Peilwinkel und prädiziertem Peilwinkel unter Berücksichtigung von Messfehler und Schätzfehler nach der Global-Nearest-Neighbor-Methode (GNN-Methode) bzw. Methode zur Ermittlung des global nächsten Nachbarn bestimmt. Diese Global-Nearest-Neighbor-Methode ist in der DE 10 2007 019 445 für die Prüfung der Zuordnung von Peilspuren beschrieben, die von unterschiedlichen Sensoren einer Peilanlage geliefert werden. Der Vorteil besteht insbesondere darin, dass durch die dort angegebene Kostenmatrix nach der JVC-Methode (Jonker, Volgenant, Castañon) die wahrscheinlichste Zuordnung einfach gefunden wird. Am Ausgang der Abstandsrechenstufe erhält man den quadrierten, normierten statistischen Abstand zwischen gemessenem Peilwinkel und prädiziertem Peilwinkel.

Die Wahrscheinlichkeit einer Zuordnung eines gemessenen Peilwinkels zu einer geschätzten Peilspur entsprechend ihrem quadrierten, normierten statistischen Abstand am Ausgang der Abstandsrechenstufe wird in einem Spurgüte-Rechner dazu benutzt, in einer nachgeordneten Rechenstufe eine Spurgüte durch Bestimmen des Likelihood-Quotienten je Peilspur zu ermitteln. Diese Spurgüte wird in einer Schrankenvergleichsanordnung des Spurgüte-Rechners mit einer oberen und einer unteren Schranke verglichen. Ist die Spurgüte größer als eine obere Schranke, die durch vorgegebene Wahrscheinlichkeiten für die Bestätigung einer falschen Peilspur oder das Löschen einer wahren Peilspur ermittelt werden, weist die Peilspur eine hohe Güte auf, ist sie kleiner als eine untere Schranke, die aus den gleichen Wahrscheinlichkeiten gebildet wird, wird die Peilspur gelöscht. Liegt die Spurgüte zwischen den Schranken, dann wird die vorläufige, geschätzte Peilspur durch weitere Messungen entweder bestätigt und die Spurgüte wächst über die obere Schranke und die Peilspur wird zu einer bestätigten Peilspur, oder sie wird nicht bestätigt und die Spurgüte sinkt, bis sie die untere Schranke unterschreitet und die vorläufige Peilspur gelöscht wird. Ebenfalls ist es möglich, eine vorläufige Peilspur, deren Spurgüte beim letzten Zeittakt die obere Schranke $T_2$ überschreitet, in ihrer gesamten Länge anzuzeigen und zu markieren, so dass auch diese in der Vergangenheit liegenden Peilwinkel z.B. für eine passive Entfernungsbestimmung des Ziels gemäß einer sog. Target Motion Analysis hinzugezogen werden können, wie es bspw. in der DE 10 2007 019 445 angegeben ist. Dazu ist die Schrankenvergleichsanordnung am Ausgang des Spurgüte-Rechners mit der Registratur für die Peilspuren verbunden, in der die Peilwinkel jeder Peilspur am Ausgang des Kalman-Filters zusammen mit der Spurgüte registriert werden. Der Ausgang der Schrankenvergleichsanordnung steuert ebenfalls ein Tor an, das zwischen der Registratur und einer Anzeige vorgesehen ist, um bestätigte Peilwinkel als Fortsetzung der zugehörigen Peilspur in einem Intensitätsschrieb je Zeittakt anzuzeigen.

Weitere vorteilhafte Ausführungsformen des erfindungsgemäßen Peilverfahrens und der erfindungsgemäßen Peilanlage ergeben sich aus den Unteransprüchen sowie aus den anhand der Zeichnung näher erläuterten Ausführungsbeispielen. In der Zeichnung zeigt:

Fig. 1    ein Peilungs-Zeit-Diagramm mit einer Peilspur,

Fig. 2    ein Blockschaltbild einer Peilanlage,

Fig. 3    den Verlauf einer Spurgüte über der Zeit,

Fig. 4    ein Blockschaltbild zur Erläuterung des Datenflusses in einem zweiten Ausfüh- rungsbeispiel der Erfindung gemäß einem Multihypothesentrackingverfahren und

Fig. 5    ein Diagramm zur Erläuterung des Datenflusses in dem mit MHT bezeichneten Block aus Fig. 4.

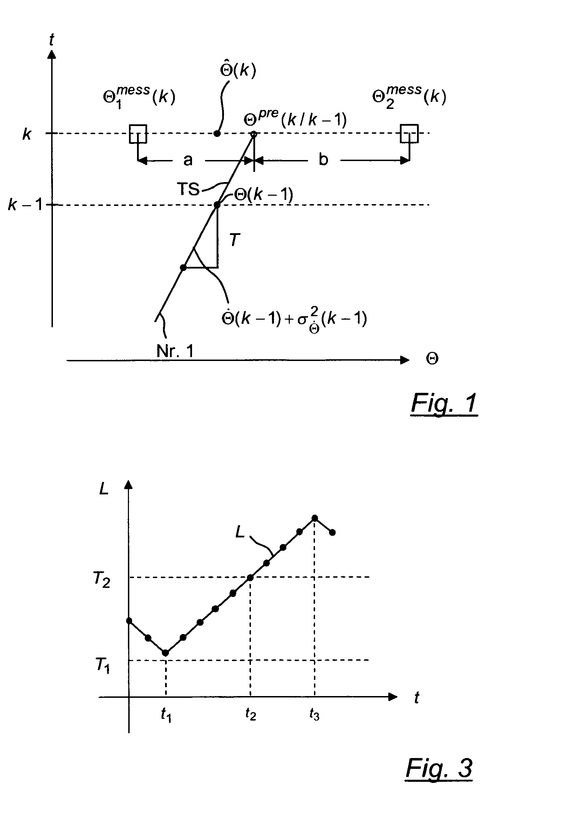

Fig. 1 zeigt ein Peilungs-Zeit-Diagramm, in dem die längs der horizontalen Achse aufgetragene Peilung $\Theta$ über die längs der vertikalen Achse aufgetragene Zeit dargestellt ist. In diesem Diagramm ist ein Teilstück $TS$ einer bis zur Zeit $t = k - 1$ geschätzten Peilspur Nr. 1 gezeigt, das durch Prädiktion des Peilwinkels für die Zeit $t = k$ erhalten wird. Dazu wird ausgehend von einem Peilwinkel $\Theta(k - 1)$ zur Zeit $t = k - 1$ auf der Peilspur Nr. 1 ein Peilwinkel $\Theta^{pre}(k|k$ -1) zur Zeit $t = k$ basierend auf Messdaten der Vergangenheit bis zur Zeit $t = k$ -1 prädiziert. Das Teilstück $TS$ weist einen linearen Verlauf über der Zeit auf. Die Peilrate oder Steigung der Peilspur $\Theta(k$ -1) zur Zeit $t = k$ -1 wird durch Regression aus der Folge der zugeordneten Messungen bis zur Zeit $t = k$ -1 mit einer Standardabweichung $\sigma_\Theta(k - 1)$ ermittelt. Die bei $t = k$ gemessenen zwei Peilwinkel $\Theta_1^{mess}(k)$ und $\Theta_2^{mess}(k)$ werden mit dem prädizierten Peilwinkel

$\Theta_1^{pre}(k/k-1)$ bzgl. einer paarweisen Zuordnung zur Peilspur Nr. 1 geprüft. Der erste gemessene Peilwinkel $\Theta_1^{mess}$

liegt im Abstand $a = \Theta_1^{mess}(k) - \Theta^{pre}(k/k-1)$, der zweite gemessene Peilwinkel $\Theta_2^{mess}$ im Abstand

$b = \Theta_2^{mess}(k) - \Theta^{pre}(k/k-1)$ zum prädizierten Peilwinkel $\Theta^{pre}(k/k$ - 1). Zunächst werden die Wahrscheinlichkeiten einer möglichen Zuordnung jedes der gemessenen zu dem prädizierten Peilwinkel mittels der Abstände $a$ und b und Mess- und Schätzfehlern mit Hilfe eines quadrierten, normierten statistischen Abstands bestimmt. In dem dargestellten Beispiel ist dieser Abstand für das Paar aus gemessenem Peilwinkel $\Theta_1^{mess}(k)$ und prädiziertem Peilwinkel

$\Theta^{pre}(k/k$ - 1) kleiner als für das Paar aus gemessenem Peilwinkel $\Theta_2^{mess}(k)$ und $\Theta^{pre}(k/k$ - 1). Damit ist die Wahrscheinlichkeit der Zuordnung des gemessenen Peilwinkels $\Theta_1^{mess}$ zur Peilspur Nr. 1 am größten, so dass der gemessene Peilwinkel $\Theta_1^{mess}$ der Peilspur Nr. 1 zugeordnet wird. Sodann wird mittels eines Schätzfilters ausgehend von dieser Zuordnung, d.h. unter Berücksichtigung des gemessenen Peilwinkels $\Theta_1^{mess}$ und dem prädizierten Peilwinkel

$\Theta^{pre}(k/k$ - 1), ein Peilwinkel $\hat{\Theta}(k/k)$ für die Zeit $t = k$ geschätzt. Dieses Schätzfilter ist bspw. als Kalman-Filter ausgebildet, das auch die vorgenannte Prädiktion durchführt. Ausgehend von diesem geschätzten Peilwinkel $\hat{\Theta}(k)$ wird der nächste Peilwinkel $\Theta^{pre}(k + 1/k)$ nach einem weiteren Zeittakt $T$ für die Zeit $t = k + 1$ für die Peilspur Nr. 1 prädiziert. Dieses Vorgehen wird in einem folgenden Blockschaltbild veranschaulicht.

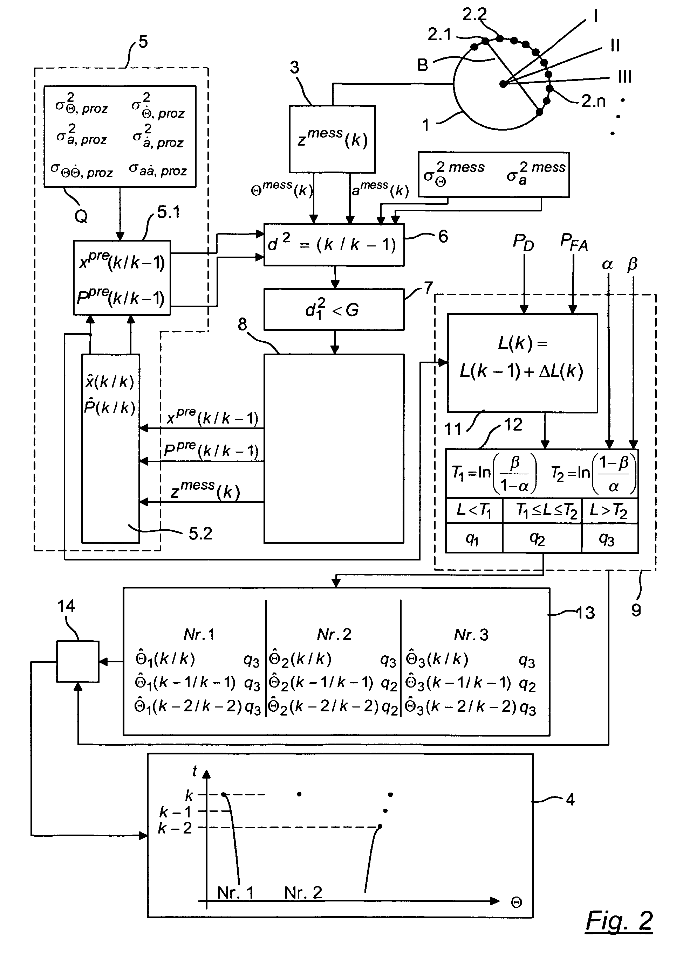

Fig. 2 zeigt ein Blockschaltbild einer Peilanlage. Mit der zylinderförmigen Empfangsantenne 1 werden Richtcharakteristiken in Hauptempfangsrichtungen I, II, III... gebildet, die einen Winkelabstand $\Delta\Theta$ zueinander aufweisen.

Empfangssignale elektroakustischer Wandler 2.1 bis 2.n werden jeweils in einem Richtungsbildner 3 nach Laufzeitverzögerung, bestimmt durch Abstände zwischen jedem Wandler 2.1 bis 2.n und einer Bezugslinie B, zu Gruppensignalen der Richtcharakteristiken konphas addiert und liefern je Richtcharakteristik eine Amplitude $a^{mess}$ und einen Peilwinkel $\Theta^{mess}$. Statt der Amplitude kann auch ein entsprechender Pegel oder allgemein die Intensität des Signals verwendet werden. Gemessene Amplitude und gemessener Peilwinkel bilden Elemente eines Messvektors. Zum Detektieren von Peilwinkeln, die die Richtung zu schallabstrahlenden Zielen angeben, und zum zeitlichen Verfolgen von Peilwinkeln desselben Ziels werden auf einer Anzeige 4 je Zeittakt $T$ Intensitätsschriebe der Intensität (Amplitude oder Pegel) von Gruppensignalen benachbarter Richtcharakteristiken in Abhängigkeit ihrer Hauptempfangsrichtung als Peilwinkel $\Theta$ angezeigt. Zeitlich aufeinanderfolgende Intensitäten über dem gleichen Peilwinkel kennzeichnen die Peilspur eines Ziels (Zielspur), das sich auf dem Peilstrahl der Peilanlage nähert oder von der Peilanlage entfernt. Zeitlich aufeinanderfolgende Intensitäten eines vorbeifahrenden Ziels zeigen als Peilspur einen Arc-tan-Verlauf über dem Peilwinkel, wobei sich der Peilwinkel über der Zeit bei einem weit entfernten Ziel wenig ändert und damit die Peilrate $\Theta$ klein ist. Im Bereich des Vorbeilaufs weist die Peilrate $\Theta$ einen größeren Wert auf, beim Ablauf des Ziels nimmt sie wieder einen kleineren nahezu konstanten Wert an. Die Peilspur Nr. 1 zeigt bis $t = k$ -1 einen nahezu konstanten Peilwinkel, die Peilrate $\Theta$ ist sehr klein. Zeitlich anschließend ändert sich der Peilwinkel $\Theta$ und die Peilrate $\Theta$ nimmt einen anderen Wert an. Die angezeigte Peilspur Nr. 2 beginnt erst für $t = k$, weil zu dieser Zeit ein Ziel detektiert wurde. Die Peilspur Nr. 3 endet bei $t = k$ - 2, da zu dieser Zeit die Peilspur gelöscht wurde.

Mit dem erfindungsgemäßen Peilverfahren und der erfindungsgemäßen Peilanlage werden die Peilwinkel dieser Peilspuren unter der Modellannahme prädiziert, dass Teilstücke der Peilspuren geradlinig sind und ihre Steigung stückweise konstant ist, das heißt die Peilrate konstant ist. Die Prädiktion erfolgt über die Schätzung eines Zustandsvektors mit Schätzfehler, der durch Modell-Varianzen $\sigma^2_{\Theta, proz}, \sigma^2_{\dot{\Theta}, proz}$ bzw. $\sigma^2_{a, proz}, \sigma^2_{\dot{a}, proz}$ in einer Kovarianzmatrix $Q$ in einem Kalman-Filter 5 vorgegeben wird. Mit der voreingestellten oder einstellbaren Stärke $q$ mit $q_\Theta$ für den Peilwinkel und $q_a$ für die Amplitude eines Rauschprozesses wird die Steifigkeit des Filters eingestellt. Die Kovarianzmatrix $Q$ ergibt sich somit zu

$$Q = \begin{bmatrix} f_1(T)q_\Theta & f_2(T)q_\Theta & 0 & 0 \\ f_2(T)q_\Theta & f_3(T)q_\Theta & 0 & 0 \\ 0 & 0 & f_1(T)q_a & f_2(T)q_a \\ 0 & 0 & f_2(T)q_a & f_3(T)q_a \end{bmatrix}$$

$$= \begin{bmatrix} \sigma^2_{\Theta, proz} & \sigma^2_{\Theta\dot{\Theta}, proz} & 0 & 0 \\ \sigma^2_{\Theta\dot{\Theta}, proz} & \sigma^2_{\dot{\Theta}, proz} & 0 & 0 \\ 0 & 0 & \sigma^2_{a, proz} & \sigma^2_{a\dot{a}, proz} \\ 0 & 0 & \sigma^2_{a\dot{a}, proz} & \sigma^2_{\dot{a}, proz} \end{bmatrix}$$

$$\text{mit } f_1(T) = \frac{T^3}{3} \qquad f_3(T) = T \qquad f_2(T) = \frac{T^2}{2}.$$

In einem Prädiktionsteil 5.1 des Kalman-Filters 5 wird ausgehend von einem Spurzustandsvektor $\hat{x}(k - 1/k - 1)$ mit seinen Elementen geschätzter Peilwinkel $\Theta(k - 1/k - 1)$ und geschätzter Spuramplitude $\hat{a}(k -1/k - 1)$ sowie deren zeitlichen Änderungen im vorherigen Zeitpunkt zur Zeit $t = k - 1$ ein Zustandsvektor $x^{pre}(k/k - 1)$ für den momentanen Zeitpunkt zur Zeit $t = k$ zu

$$x^{pre}(k / k - 1) = \begin{bmatrix} \Theta^{pre}(k / k - 1) \\ \dot{\Theta}^{pre}(k / k - 1) \\ a^{pre}(k / k - 1) \\ \dot{a}^{pre}(k / k - 1) \end{bmatrix} = F \cdot x(k - 1 / k - 1)$$

prädiziert mit dem prädizierten Peilwinkel

$\Theta^{pre}(k/k\text{-}1) = \hat{\Theta}(k\text{-}1/k\text{-}1) + \Theta(k\text{-}1/k\text{-}1) \cdot T$

und der prädizierten Peilwinkelrate

$\Theta^{pre}(k/k\text{-}1) = \hat{\dot{\Theta}}(k\text{-}1/k\text{-}1)$

und der prädizierten Amplitude

$a^{pre}(k/k - 1) = \dot{a}(k - 1/k - 1) + \hat{\dot{a}}(k - 1/k - 1) \cdot T$

und deren prädizierten als Amplitudenrate bezeichnete zeitliche Ableitung

$\dot{a}^{pre}(k/k - 1) = \hat{\dot{a}}(k - 1/k - 1),$

der die Modellierung des Teilstücks berücksichtigt, mit einer Kovarianzmatrix des Schätzfehlers

$p^{pre}(k/k - 1) = F \cdot P(k - 1/k - 1) F^T + Q$ mit

$$F = \begin{bmatrix} 1 & T & 0 & 0 \\ 0 & 1 & 0 & 0 \\ 0 & 0 & 1 & T \\ 0 & 0 & 0 & 1 \end{bmatrix}$$

als Übergangsmatrix für den dynamischen Prozess der Modellierung.

Zum Messvektor

$$z^{mess}(k) = \begin{bmatrix} \Theta^{mess}(k) \\ a^{mess}(k) \end{bmatrix}$$

am Ausgang des Richtungsbildners 3, der alle zur Zeit $t = k$ gemessenen Peilwinkel $\Theta^{mess}(k)$ und Amplituden $a^{mess}(k)$ enthält, werden anlagetypische Messfehler $\sigma_\Theta^{mess}$, $\sigma_a^{mess}$ ermittelt, die zusammen mit dem prädizierten Peilwinkel $\Theta^{pre}(k/k - 1)$ bzw. der prädizierten Amplitude $a^{pre}(k/k - 1)$ und dem jeweiligen Schätzfehler $P^{pre}(k/k - 1)$ in einer Abstandsrechenstufe 6 auf die Wahrscheinlichkeit ihrer paarweisen Zuordnung zu einer prädizierten Peilspur untersucht werden. Dazu wird zwischen allen Paaren von Peilwinkeln bzw. Amplituden ein quadrierter, normierter statistischer Abstand $d_1^2$

$$d_1^2(k/k - 1) = y^T(k/k - 1) \cdot S^{-1}(k/k - 1) \cdot y(k/k - 1)$$

mit

$$y(k/k - 1) = z(k) - H\hat{x}^{pre}(k/k - 1)$$

bestimmt, wobei die Summe der quadrierten Peilwinkeldifferenz und der quadrierten Amplitudendifferenz $y$ auf die Fehlersumme $S(k/k - 1)$ aus Messfehler $R$ und dem von $t = k - 1$ auf $t = k$ prädizierten Schätzfehler $P^{pre}(k/k - 1)$ bezogen wird und die Wahrscheinlichkeit der Zuordnung am größten ist, wenn der quadrierte, normierte statistische Abstand $d_1^2$

am kleinsten ist. Der dort verwendete Zuordnungsalgorithmus ist als GNN-Methode bekannt und in der DE 10 2007 019 445 unter Anwendung einer Kostenmatrix-Rechnung beschrieben.

Der Abstandsrechenstufe 6 ist eine Gate-Schaltung 7 nachgeordnet, mit der Paare mit einer zu geringen Wahrscheinlichkeit einer Zuordnung gelöscht werden. Dazu wird der normierte statistische Abstand $d_1^2$ mit einem Gate-Wert $G$

$$G = 2 \cdot \ln \frac{P_D \cdot \Delta\Theta}{(1 - P_D) \cdot (2\pi)^{M/2} P_{FA} \sqrt{|S|}}$$

verglichen, der die Summe $S$ aus Messfehler und Schätzfehler berücksichtigt. M bezeichnet dabei die Dimensionalität des Messvektors, die im Falle einer ausschließlichen Verwendung der Peilung 1 beträgt, im Falle einer Verwendung der Peilung sowie der Intensität 2 beträgt und im Falle einer Verwendung der Peilung, der Intensität und der Frequenz 3 beträgt. Zur Vorgabe des Gate-Werts $G$ wird außerdem eine Detektionswahrscheinlichkeit $P_D$, mit der ein Ziel mit einer Richtcharakteristik detektiert wird, aus einer zu erwartenden Dichte $\beta_{NT}$ neu detektierter Peilwinkel je Zeitintervall $T$ im Azimut-Panorama oder Azimut-Sektor der Peilanlage, und eine Falschalarmwahrscheinlichkeit $P_{FA}$ aus einer zu erwartenden Dichte $\beta_{FT}$ von Falschalarmen unter Berücksichtigung des Winkelabstands $\Delta\Theta$ zwischen den Hauptempfangsrichtungen zweier benachbarter Richtcharakteristiken gewählt. Das gleiche gilt für die Amplituden.

Mittels einer anschließenden Messdatenzuordnungsstufe 8 werden die Paare aus Messvektor $z^{mess}(k)$, prädiziertem Zustandsvektor $x^{pre}(k/k$ - 1) und ihre Fehler einer Filterstufe 5.2 im Kalman-Filter 5 zugeführt.

In der Filterstufe 5.2 wird aus dem prädizierten Zustandsvektor $x^{pre}(k/k$ - 1) und seinem Schätzfehler $P^{pre}(k/k$ - 1) und den Messwerten $Z^{mess}(k)$ und einer Messkovarianzmatrix $R$ der Spurzustandsvektor $\hat{x}(k/k)$ für die Zeit $t = k$ je Peilspur

$$\hat{x}(k/k) = x^{pre}(k/k - 1) + K(k)\left[z(k) - Hx^{pre}(k/k - 1)\right]$$

mit der Messmatrix

$$H = \begin{bmatrix} 1 & 0 & 0 & 0 \\ 0 & 0 & 1 & 0 \end{bmatrix}$$

und der Matrix

$$K(k) = P^{pre}(k/k - 1)H^T\left[H \cdot P^{pre}(k/k - 1) \cdot H^T + R\right]^{-1}$$

sowie die Kovarianzmatrix des Spurfehlers zu

$$\hat{P}(k/k) = \left[I - K(k)H\right] \cdot P^{pre}(k/k - 1) \cdot \left[I - K(k)H\right]^T + K(k) \cdot R \cdot K(k)^T$$

mit der Einheitsmatrix $I$ bestimmt.

Dieser Spurzustandsvektor $\hat{x}(k/k)$ bildet die Grundlage für die Prädiktion des nächsten Zustandsvektors $x^{pre}(k/k$ + 1) und des Schätzfehlers $P^{pre}(k/k$ + 1) zur Zeit $t = k$ + 1.

Ein Spurgüte-Rechner 9 besteht aus einer Rechenstufe 11 zum Ermitteln einer Spurgüte $L$ aus einem logarithmierten Likelihood-Quotienten und einer Schrankenvergleichseinrichtung 12 zum Testen der Spurgüte $L$, ob die zugehörige Peilspur durch den Peilwinkel $\Theta(k)$ bzw. die Spuramplitude $a(k)$ bestätigt und angezeigt oder weiter überprüft oder gelöscht wird. Die Rechenstufe 11 ist eingangsseitig mit dem Ausgang der Filterstufe 5.2 des Kalman-Filters 5 verbunden und erhält den gefilterten bzw. geschätzten Zustandsvektor $\hat{x}(k/k)$ und die Kovarianzmatrix $\hat{P}(k/k)$ als Ein-

gangsgrößen die Messkovarianzen $\sigma_{\Theta}^{2\,mess}$, $\sigma_{a}^{2\,mess}$ und die quadrierten Schätzfehler $\sigma_{\hat{\Theta}}^{2}(k/k-1)$, $\sigma_{\hat{a}}^{2}(k/k-1)$.

In der Rechenstufe 11 wird die aktuelle Spurgüte

$$L(k) = L(k-1) + \Delta L$$

aus der Spurgüte des vorigen Zeittakts und einem Güte-Inkrement $\Delta L$ für die Zugehörigkeit des gemessenen Peilwinkels zur betreffenden Peilspur bestimmt, wobei sich dieses Güte-Inkrement $\Delta L$ zu

$$\Delta L = \ln\frac{P_D \cdot \Delta\Theta}{P_{FA}\sqrt{|S|}} - \frac{d^2(k/k-1) + M \cdot \ln 2\pi}{2}$$

berechnet, das je Zeittakt $T$ aus dem quadrierten, normierten statistischen Abstand $d_1^2$ am Ausgang der Abstandsrechenstufe 6 und der radizierten Summe aus Messvarianz $\sigma^{2\,mess}$ und Schätzvarianzen $\sigma_{\hat{\Theta}}^{2}(k/k-1)$ und $\sigma_{\hat{a}}^{2}(k/k-1)$ ermittelt wird. $M$ bezeichnet dabei, wie oben erläutert, die Dimensionalität des Messvektors. Die Spurgüte $L$ wird je Zeittakt T um das zugehörige Güte-Inkrement $\Delta L$ erhöht oder vermindert.

In der Schrankenvergleichsanordnung 12 werden aus einer vorgegebenen Wahrscheinlichkeit $\alpha$ für die Bestätigung einer falschen Peilspur und einer vorgegebenen Wahrscheinlichkeit $\beta$ für das Löschen einer wahren Peilspur eine untere Schranke $T_1$,

$$T_1 = \ln\left(\frac{\beta}{1-\alpha}\right)$$

und eine obere Schranke $T_2$

$$T_2 = \ln\left(\frac{1-\beta}{\alpha}\right)$$

festgelegt, mit denen die Spurgüte $L$ verglichen wird.

Bei Überschreiten der oberen Schranke $T_2$ wird eine vorläufige Peilspur bestätigt und angezeigt, bei Unterschreiten der unteren Schranke $T_1$, wird eine vorläufige Peilspur gelöscht. Vorläufige Peilspuren, deren Güte zwischen diesen Schranken liegen, werden solange gespeichert, bis sie die obere Schranke übersteigen oder die untere Schranke unterschreitet. Jede nicht zuzuordnende Messung wird als Start einer Peilspur eingestuft. Wenn die Spurgüte einer bestätigten Peilspur durch fehlende Messungen abnimmt, wird die Peilspur gelöscht, wenn die Spurgüte um einen vorbestimmten Wert abgefallen ist.

Die Wahrscheinlichkeit $\alpha$ beruht auf der Kenntnis der Falschalarmrate je Sekunde und der gewünschten mittleren Anzahl von Bestätigungen falscher Peilspuren je Sekunde und ist umso kleiner, je weniger falsche Peilspuren zugelassen sind. Damit liegt die obere Schranke $T_2$ hoch, wenn die Wahrscheinlichkeit $\alpha$ klein ist, also wenn nur wenige falsche Peilspuren zugelassen sind.

Je Peilspur werden die am Ausgang des Spurgüterechners 9 bereitgestellte Spurgüte sowie die mittels der Filterstufe 5.2 des Kalman-Filters 5 geschätzten und dem Spurgüte-Rechner 9 zugeführten und an seinem Ausgang bereitgestellten Werte für den Peilwinkel und die Spuramplitude in einer Registratur 13 gespeichert und über ein Tor 14 an die Anzeige 4 weitergegeben und dort mit einer Markierung angezeigt, wenn die Spurgüte über der oberen Schranke $T_2$ liegt. Ebenfalls ist es möglich, eine vorläufige Peilspur, deren Spurgüte beim letzten Zeittakt die obere Schranke $T_2$ überschreitet, in ihrer gesamten Länge anzuzeigen und zu markieren, so dass auch diese in der Vergangenheit liegenden Peilwinkel z.B. für eine passive Entfernungsbestimmung des Ziels gemäß einer Target Motion Analysis hinzugezogen werden können, wie es bspw. in der DE 10 2007 019 445 angegeben ist.

Fig. 3 zeigt einen typischen Verlauf einer Spurgüte $L$ über der Zeit $t$. Die untere Schranke $T_1$ und die obere Schranke $T_2$ sind angegeben. Bei Unterschreiten der Spurgüte $L$ unter die Schranke $T_1$ wird die Peilspur gelöscht. Spurgüten, die zwischen den Schranken liegen, kennzeichnen vorläufige Peilspuren, die in der Registratur als solche gespeichert werden. Sie werden erst angezeigt, wenn die zugehörige Spurgüte $L$ die obere Schranke $T_2$ überschreitet, und bilden ab dann eine bestätigte Peilspur.

Die Spurgüte $L$ einer vorläufigen Peilspur gemäß Fig. 3 fällt bis zur Zeit $t_1$ ab und nähert sich der unteren Schwelle $T_1$, ohne diese jedoch zu erreichen, und steigt dann wieder an, jedoch zunächst ohne die Schwelle $T_2$ zu überschreiten. Währenddessen wird sie als vorläufige Peilspur geführt. Zur Zeit $t_2$ überschreitet die Spurgüte $L$ die obere Schranke $T_2$, und die vorläufige Peilspur wird zu einer bestätigten Peilspur. Sinkt die Spurgüte $L$ bspw. beginnend ab der Zeit $t_3$ um einen vorbestimmten Wert ab, bspw. weil das Ziel über einen Zeitraum nicht mehr erfasst werden kann, wird die Spur gelöscht.

Um das erfindungsgemäße Peilverfahren oder die erfindungsgemäße Vorrichtung zu initialisieren, werden zur Zeit $t = 1$ die ersten Gruppensignale gebildet, die erste Messvektoren $z(1)$ mit $m_1$ gemessenen Peilwinkeln und ggf. Amplituden liefern. Zu jedem gemessenen Peilwinkel bzw. gemessener Amplitude wird eine vorläufige Peilspur gestartet und ein Zustandsvektor $\hat{x}(1)$ mit

$$\hat{\Theta}(1) = \Theta^{mess}(1) \text{ und } \hat{a}(1) = a^{mess}(1)$$

bestimmt.

Der Schätzfehler wird durch

$$\hat{P}(1) = P_0$$

vorgegeben. Die Spurgüte beträgt $L(1) = 0$. Mit diesen Eingangsgrößen wird das Kalman-Filter 5 gestartet.

Zur Zeit $t = k$ werden $m_k$ Messvektoren $z(k)$ gemessen. Zustandsvektoren

$$x^{pre}(k/k-1) = \begin{bmatrix} \Theta^{pre}(k/k-1) \\ \dot{\Theta}^{pre}(k/k-1) \\ a^{pre}(k/k-1) \\ \dot{a}^{pre}(k/k-1) \end{bmatrix}$$

werden prädiziert und die paarweise Zuordnung zu den vorliegenden Peilspuren in der Abstandsrechenstufe 6 gefunden, die bei ausreichend hoher Wahrscheinlichkeit im Kalman-Filter 5 verarbeitet werden. Im Spurgüterechner 9 wird die Spurgüte $L$ jeder Peilspur bestimmt und die vorläufigen Peilspuren in der Registratur 13 notiert. Neue Messungen initiieren vorläufige Peilspuren. Abhängig von der im Laufe der Zeittakte ermittelten Spurgüten werden vorläufige Peilspuren zu bestätigten Peilspuren oder gelöscht. Gibt es zu einer prädizierten Peilspur keine neue Messung, so werden die zuletzt ermittelten Zustandsvektoren und Zustandsfehler in den nächsten Zeittakt prädiziert.

Gemäß dem vorstehend beschriebenen Peilverfahren erfolgt eine breitbandige Signalverarbeitung, bei der im Wesentlichen die gesamte in einem großen Frequenzbereich abgestrahlte Schallenergie bei jeder Detektion betrachtet wird. Informationen, die in Frequenzen der einfallenden Schallenergie enthalten sind, werden somit nicht weiter berücksichtigt. Eine Detektion wird daher durch einen Messvektor beschrieben, der auf einen gemessenen Peilwinkel und eine gemessene Intensität beschränkt ist.

Alternativ erfolgt die Signalverarbeitung jedoch schmalbandig, wobei zwischen einer sog. DEMON-Signalverarbeitung und einer sog. LOFAR-Signalverarbeitung unterschieden wird. Bei der DEMON-Signalverarbeitung wird die in einem Taktzyklus aufgezeichnete gesamte Schallintensität pro Richtung auf das Vorhandensein einer Amplitudenmodulation untersucht. Für alle Richtcharakteristiken werden aus den jeweiligen Modulationsspektren mit einem Algorithmus mögliche Zieldetektionen gefunden, wobei eine Detektion aus der zum Ziel gehörenden Peilung, einer Modulationsfrequenz und der Intensität der Frequenzlinie besteht.

Bei der sog. LOFAR-Signalverarbeitung wird die gesamte in einem Taktzyklus aufgezeichnete Schallintensität pro Richtung nach auffälligen Frequenzen untersucht. Ein Algorithmus findet für jede Richtcharakteristik mögliche Zieldetektionen, wobei eine Detektion aus der Peilung zum Ziel, der Frequenz und der Intensität der entsprechenden Frequenzlinie besteht.

Nach alledem kann bei einer schmalbandigen Signalverarbeitung zusätzlich eine Frequenzinformation berücksichtigt werden. Dazu wird eine Detektion durch einen Messvektor gegeben, der neben einer Peilung und einer Intensität auch eine Frequenz umfasst.

Infolgedessen umfasst der Spurzustandsvektor bei einer breitbandigen Signalverarbeitung lediglich einen Peilwinkel, sowie dessen als Peilrate bezeichnete zeitliche Ableitung und eine Intensität sowie deren als Intensitätsrate bezeichnete zeitliche Ableitung. Demgegenüber umfasst der Spurzustandsvektor bei einer schmalbandigen Signalverarbeitung zusätzlich eine Frequenz sowie deren als Frequenzrate bezeichnete zeitliche Ableitung. In der Konsequenz ist bei einer schmalbandigen Signalverarbeitung die Kovarianzmatrix Q um Varianzen zu ergänzen, die auf die Frequenz bzw. die Frequenzrate bezogen sind.

Das vorstehend anhand der Figuren 1 bis 3 erläuterte Peilverfahren geht davon aus, dass eine Detektion bzw. Messung jeweils nur einer einzelnen Peilspur zugeordnet wird. Man bezeichnet dieses Verfahren daher auch als Einzelhypothesentrackingverfahren, wobei mit Hypothese die Annahme bezeichnet wird, dass eine Messung einer bestimmten Peilspur zugeordnet wird.

Alternativ sieht die Erfindung jedoch auch den Einsatz eines Multihypothesentrackingverfahrens vor, bei dem eine Messung regelmäßig mehreren Zielspuren zugeordnet wird.

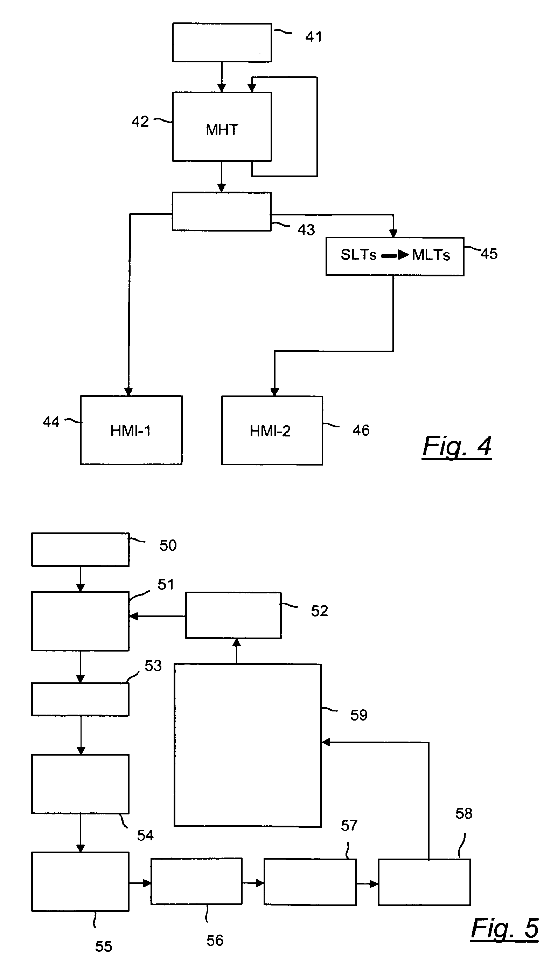

Fig. 4 zeigt prinzipiell den Datenfluss bei einem derartigen Verfahren. Im Block 41 werden von einer Sonaranlage erzeugte Messdaten ausgelesen, welche je nachdem, ob die Signalverarbeitung breitbandig der schmalbandig erfolgt, je Takt eine Liste von Detektionen liefert. Im Fall der Breitbandsignalverarbeitung erhält man somit einen Messvektor zu

$$z_j(k) = \begin{bmatrix} \theta_j^{mess}(k) \\ a_j^{mess}(k) \end{bmatrix}$$

und im Fall der Schmalbandsignalverarbeitung einen Messvektor zu

$$z_j(k) = \begin{bmatrix} \theta_j^{mess}(k) \\ v_j^{mess}(k) \\ a_j^{mess}(k) \end{bmatrix}.$$

Der Index $j$ bezeichnet dabei eine zur Zeit $t = k$ erhaltene Messung einer Anzahl von $m(k)$ Messungen mit $j = 1, ..., m(k)$. Die erhaltenen Detektionen enthalten neben den wahren Zieldetektionen jedoch auch Falschmeldungen. Die Messdaten werden vorzugsweise zusammen mit dem aktuellen Wert des Eigenkurses mittels eines Daten-Lese-Moduls des Blocks 41 aus der Sonaranlage ausgelesen, so dass für den $k$-ten Zeittakt die folgenden Listen von $m(k)$ Detektionen vorliegen für den Fall der Breitbandsignalverarbeitung:

$$\begin{array}{lll} 1: & \theta_1^{mess}(k), & a_1^{mess}(k) \\ 2: & \theta_2^{mess}(k), & a_2^{mess}(k) \\ & \vdots & \vdots \\ m(k): & \theta_{m(k)}^{mess}(k), & a_{m(k)}^{mess}(k) \end{array}$$

und für den Fall der Schmalbandsignalverarbeitung:

$$\begin{array}{llll} 1: & \theta_1^{mess}(k), & v_1^{mess}(k) & a_1^{mess}(k) \end{array}$$

(fortgesetzt)

$$
2: \quad \theta_2^{mess}(k), \quad v_2^{mess}(k) \quad a_2^{mess}(k)
$$

$$
\cdot \qquad \cdot \qquad \cdot
$$
$$
\cdot \qquad \cdot \qquad \cdot
$$
$$
\cdot \qquad \cdot \qquad \cdot
$$

$$
m(k): \quad \theta_{m(k)}^{mess}(k), \quad v_{m(k)}^{mess}(k) \quad a_{m(k)}^{mess}(k)
$$

Diese Daten, welche den Komponenten des jeweiligen o.g. Messvektors entsprechen, werden dann zusammen mit dem Eigenkurs an einen Multihypothesen-Tracking-Block 42 weitergegeben. Die Aufgabe dieses Blocks ist es, potenzielle Zielspuren aus den Daten zu extrahieren, indem er alle Detektionen (in ihrer zeitlichen Abfolge) dahingehend prüft, ob sie einem Ziel mit einer bestimmten vorgegebenen Bewegungscharakteristik zuzuordnen sind. Werden solche zeitlich mit einem Bewegungsmodell korrespondierenden Detektionen gefunden, wird eine Zielzustandsschätzung durchgeführt. Speziell wird der Bewegungszustand eines Ziels im Tracking-System durch einen (zu schätzenden) Zustandsvektor und eine Gleichung zur Modellierung der zeitlichen Änderung des Zustandsvektors beschrieben. Der Zustandsvektor $x_i(k)$ des $i$-ten Ziels zum $k$-ten Zeittakt enthält neben Schätzungen der im jeweiligen o.g. Messvektor vorliegenden Größen zusätzlich auch Schätzungen über deren zeitliche Änderung, d.h. zur geschätzten Peilung $\Theta$ die durch zeitliche Ableitung gebildete Peilrate $\dot{\Theta}$, zur Frequenz $v$ die durch zeitliche Ableitung gebildete Frequenzrate $\dot{v}$ und zur Amplitude $a$ die die durch zeitliche Ableitung gebildete Amplitudenrate $\dot{a}$. Für den Fall der Breitbandsignalverarbeitung ergibt sich somit der Zustandsvektor zu

$$
x_i(k) = \begin{bmatrix} \Theta_i(k) \\ \dot{\Theta}_i(k) \\ a_i(k) \\ \dot{a}_i(k) \end{bmatrix}
$$

und für den Fall der Schmalbandsignalverarbeitung zu

$$
x_i(k) = \begin{bmatrix} \Theta_i(k) \\ \dot{\Theta}_i(k) \\ v_i(k) \\ \dot{v}_i(k) \\ a_i(k) \\ \dot{a}_i(k) \end{bmatrix}.
$$

Die Änderung des Zustandsvektors wird durch einen linearen Markov-Prozess über die Gleichung

$$
x_i(k) = F x_i(k-1) + q_i(k-1)
$$

modelliert, wobei F die Übergangsmatrix darstellt und $q_i(k-1)$ eine Realisierung eines gaußschen Zufallsprozesses mit Mittelwert 0 und bekannter Kovarianzmatrix $Q_i(k-1)$ (für den Fall eines weißen Rauschprozesses) ist. Die Übergangsmatrix $F$ sowie die Prozessrauschkovarianz $Q_i(k-1)$ ergeben sich aus der Wahl des Manövermodells. Vorzugsweise wird ein Modell gewählt, das eine geradlinig gleichförmige Bewegung der den Beobachtungsgrößen zugrunde liegenden Ziele beschreibt.

Eine Messung eines Objektes wird durch den Messprozess, formal durch die Gleichung

$$z_j(k) = Hx_j(k) + v_j(k)$$

beschrieben. In der Messgleichung ist $H$ die Messmatrix, welche die Projektion vom Zustandsin den Messraum charakterisiert (und aus der Kenntnis des Zustands- und des Messvektors festgelegt ist) und $v_j(k)$ die Realisierung eines weißen Rauschprozesses mit Mittelwert 0 und Kovarianzmatrix $R_j(k)$, wobei die Messfehler der Einzelgrößen als unkorreliert angesehen werden. Die Messfehlerkovarianz hat damit die folgende Form für die Breitbandsignalverarbeitung:

$$R_j(k) = \begin{bmatrix} \sigma^2_{\theta^{mess}} & 0 \\ 0 & \sigma^2_{a^{mess}} \end{bmatrix}$$

und für die Schmalbandsignalverarbeitung:

$$R_j(k) = \begin{bmatrix} \sigma^2_{\theta^{mess}} & 0 & 0 \\ 0 & \sigma^2_{v^{mess}} & 0 \\ 0 & 0 & \sigma^2_{a^{mess}} \end{bmatrix}$$

wobei die $\sigma_x, x \in \{\theta^{mess}, v^{mess}, a^{mess}\}$ als wählbare Parameter vorzugeben sind. Für den Fall, dass die zur Erzeugung der Detektionslisten verwendete Antenne eine Linearantenne ist, kann mit einem von der aktuellen Messung $z_j(k)$ abhängigen Peilfehler $\sigma_{\theta mess}$, d.h. Messfehler der Peilung, gemäß der Beziehung

$$\sigma_{\theta^{mess}} = \frac{\sigma_\theta^0}{\left|\sin(\theta_j^{mess}(k) - \theta_0(k))\right| \cdot \sqrt{a_j^{mess}(k)}}$$

gerechnet werden. Dabei bezeichnet $\theta_j^{mess}(k)$ die Peilung und $a_j^{mess}(k)$ die Amplitude der Messung, $\theta_0(k)$ den Eigenkurs eines die Peilantenne tragenden oder schleppenden Wasserfahrzeugs und $\sigma_\theta^0$ eine wählbare Konstante.

Der Multihypothesen-Tracking-Block 42 generiert mittels eines vorgegebenen Prozessmodells und eines vorgegebenen Messmodells eine Anzahl von Zielspuren, wobei diese nachfolgend als Tracks bezeichneten Spuren durch einen sequenziellen Likelihood-Quotienten-Test in bestätigte und vorläufige Tracks unterscheidbar werden. Kem des Multihypothesentrackingverfahrens ist eine Trackliste der vorläufigen und bestätigten Tracks. Ein Track $i$ besteht im $k$-ten Zeittakt aus dem Zustandsvektor $x_i(k)$, einer Angabe über den Schätzfehler in Form der Kovarianzmatrix $P_i(k)$, einer Gesamtwahrscheinlichkeit $c_i(k)$, einem Statusanzeiger $SA_i(k)$ zum Anzeigen, ob der betreffende Track bestätigt ist, was durch den Wert "1" angegeben wird, oder vorläufig ist, was durch den Wert "0" angegeben wird, einem Zähler $Z\ddot{A}_i(k)$, der inkrementiert (bzw. dekrementiert) wird, je nachdem ob der Track $i$ den sequenziellen Likelihood-Quotienten-Test im $k$-ten Takt besteht (oder nicht besteht) und einem Indikator $IN_i(k)$, der anzeigt, mit welchem Track $j$ ein bestätigter Track $i$ in einem Auflösungskonflikt steht.

Ein Auflösungskonflikt sei beispielhaft für den Fall der Breitband-Signalverarbeitung definiert: Befinden sich zwei Ziele unter der gleichen Peilung, können sie nicht mehr getrennt detektiert werden. Häufig treten Zielspurkreuzungen auf, bei denen sich zwei Ziele in ihren Peilungen immer stärker annähem und nachfolgend daher in einen Auflösungskonflikt geraten.

Ist der Indikator $IN_i(k)=0$, liegt kein Auflösungskonflikt vor. Die Kovarianzmatrix $P_i(k)$ enthält die Varianzen der Schätzfehler der einzelnen Komponenten des Zustandsvektors auf der Hauptdiagonalen und die Kovarianzen der Schätzfehler zwischen unterschiedlichen Komponenten in den Nicht-Diagonal-Elementen. Der Zustandsvektor und die Kovarianz jedes Tracks $i$ wird approximiert durch eine gewichtete Summe mehrerer einzelner Zustandsvektoren, die daher rühren, dass bei diesem Verfahren mehreren Interpretationshypothesen für eine Zuordnung von Messdaten zu einer bereits bestehenden Zielspur zugelassen werden. Besteht Track $i$ im Zeittakt $k$ bspw. aus $n_{i,hyp}(k)$ Hypothesen der Gewichte $c_{i,j}(k)$, $j = 1,..., n_{i,hyp}(k)$, wobei $n_{i,hyp}(k)$ eine natürliche Zahl ist, ergeben sich für den Track im $k$-ten Zeittakt die Gesamtwahrscheinlichkeit zu

$$c_i(k) = \sum_{j=1}^{n_{i,\text{hyp}}(k)} c_{i,j}(k)$$

der Zustandsvektor zu

$$x_i(k) = \frac{1}{c_i(k)} \sum_{j=1}^{n_{i,\text{hyp}}(k)} c_{i,j}(k)\, x_{i,j}(k)$$

und die Kovarianz zu

$$P_i(k) = \frac{1}{c_i(k)} \sum_{j=1}^{n_{i,\text{hyp}}(k)} c_{i,j}(k) \left[ P_{i,j}(k) + \left( x_{i,j}(k) - x_i(k) \right) \cdot \left( x_{i,j}(k) - x_i(k) \right)^{\mathsf{T}} \right].$$

Somit ist bspw. die Peilung durch

$$\theta_i(k) = \left[ c_{i,1}(k) \cdot \theta_{i,1}(k) + c_{i,2}(k) \cdot \theta_{i,2}(k) + \cdots + c_{i,n_{i,\text{hyp}}(k)}(k) \cdot \theta_{i,n_{i,\text{hyp}}(k)}(k) \right] \Big/ c_i(k) \text{ gegeben.}$$

Zunächst wird die Initialisierung dieses Multihypothesentrackingverfahrens erläutert. Aus den im ersten Zeittakt $k = 1$ vorliegenden Messdaten $z_i(1)$, $i = 1,...,m(1)$ der Detektionsliste werden insgesamt $m(1)$ Tracks mit jeweils nur einer Hypothese generiert. Dazu wird jede Messung in einen Hypothesenzustandsvektor

$$x_{i,1}(1) = H^{\mathsf{T}} \cdot z_i(k) \qquad i = 1,\ldots,m(1)$$

mit dem Gewicht $c_{i,1}(1) = 1$ umgerechnet und der entsprechende Zustand der Tracks gebildet. $H^T$ bezeichnet hierbei die transponierte Messmatrix. Allen Tracks wird eine anfängliche Kovarianzmatrix $P_i(1) = P^0$ gegeben, und es gilt $SA_i(1) = 0$, $Z\ddot{A}_i(1) = 0$ und $IN_i(1) = 0$ für $i = 1,..., m(1)$.

Der Ablauf für einen beliebigen Taktzyklus von einem Zeittakt $k \geq 1$ nach dem Zeittakt $k + 1$ ist durch folgende Schritte gekennzeichnet:

Als Ausgangssituation liegen im $k$-ten Zeittakt $n_B(k)$ bestätigte und $n_T(k)$ vorläufige Zielspuren $i$ vor. Sie besitzen den Zustandsvektor $x_i(k)$, Kovarianz $P_i(k)$ und die Gesamtwahrscheinlichkeit $c_i(k)$, bestehend aus den $n_{j,hyp}(k)$ Hypothesen $j$ mit Zustandsvektor $x_{i,j}(k)$, Kovarianz $P_{i,j}(k)$ und Hypothesengewicht $c_{i,j}(k)$. Hinzu kommen die Statusanzeiger $SA_i(k)$ und Zähler $Z\ddot{A}_i(k)$.

Die Prädiktion der Zielspuren wird folgendermaßen durchgeführt: Für jede Hypothese $j$ eines Tracks $i$ wird gemäß der Dynamik des Prozessmodells bzw. der Zielbewegungsmodelldynamik eine Prädiktion für den $k + 1$-ten Zeittakt berechnet. Der prädizierte Zustand ist durch

$$x_{i,j}^{\text{pre}}(k + 1) = F \cdot x_{i,j}(k)$$

und die zugehörige Kovarianz durch

$$P_{i,j}^{\text{pre}}(k+1) = F \cdot P_{i,j}(k) \cdot F^{\text{T}} + Q_i(k)$$

gegeben, wobei F die Übergangsmatrix und $Q_i(k)$ die Prozesskovarianzmatrix des gewählten Prozessmodells ist.

Neue Messdaten werden folgendermaßen zugeordnet: Die für den $k + 1$-ten Zeittakt erhaltenen $m(k + 1)$ Messdaten $z_l(k + 1)$ werden mit den prädizierten Hypothesen $j$ aller Tracks $i$ verglichen. Ist die $l$-te Messung hinreichend dicht an der prädizierten Messung für die Hypothese $j$ des $i$-ten Tracks, d.h. gilt die Beziehung

$$y_{i,j,l}^{\text{T}}(k+1) \cdot S_{i,j,l}^{-1}(k+1) \cdot y_{i,j,l}(k+1) < \lambda^2$$

mit geeignetem $\lambda$ und den Größen

$$y_{i,j,l}(k+1) = z_l(k+1) - H \cdot x_{i,j}^{\text{pre}}(k+1)$$

$$S_{i,j,l}(k+1) = H \cdot P_{i,j}^{\text{pre}}(k+1) \cdot H^{\text{T}} + R_l(k+1)$$

wobei $R$ die Messfehlerkovarianzmatrix ist, dann wird diese Messung der Hypothese zugeordnet.

Anschließend werden Zielspuren folgendermaßen korrigiert: Aus jeder Hypothese $j$ der Zielspur $i$ werden mit den $n_{i,j}(k + 1)$ zugeordneten Messungen $\alpha_{i,j}$ insgesamt $n_{i,j}(k + 1) + 1$ neue Hypothesen gebildet. Dabei steht der Index $\alpha_{i,j} = 0$ für die sog. Ausfallerhypothese. Diese bedeutet, dass es keine Messung als Fortsetzung der Ausgangshypothese $j$ der Zielspur $i$ gibt. Daneben stehen die Indizes $\alpha_{i,j} \geq 0$ (für eine Hypothese eine Teilmenge aus der Menge der Indizierung der Messungen $\{1,2,...,m(k + 1)\}$) für die Verknüpfung der entsprechenden zugeordneten Messungen. Insgesamt werden aus allen im Takt $k$ vorliegenden Hypothesen $j$ der $i$-ten Zielspur $n_{i,hyp}^{pre}(k + 1)$ neue Hypothesen mit

$$n_{i,hyp}^{\text{pre}}(k+1) = n_{i,\text{hyp}}(k) + \sum_{j=1}^{n_{i,\text{hyp}}(k)} n_{i,j}(k+1)$$

erzeugt. Für diese neuen Hypothesen $h$ werden die Zustandsvektoren, Kovarianzen und Gewichte gemäß den Gleichungen

$$x_{i,h}(k+1) = \begin{cases} x_{i,j}^{\text{pre}}(k+1) - K_{i,j,\alpha_{i,j}}(k+1) \cdot y_{i,j,\alpha_{i,j}}(k+1) & \text{für } \alpha_{i,j} > 0, \\ y_{i,j}^{\text{pre}}(k+1) & \text{für } \alpha_{i,j} = 0 \end{cases}$$

für die Zustandsvektoren,

$$P_{i,h}(k+1)$$
$$= \begin{cases} P_{i,j}^{\text{pre}}(k+1) - K_{i,j,\alpha_{i,j}}(k+1) \cdot S_{i,j,\alpha_{i,j}}(k+1) \cdot K_{i,j,\alpha_{i,j}}^{\text{T}}(k+1) & \text{für } \alpha_{i,j} > 0, \\ P_{i,j}^{\text{pre}}(k+1) & \text{für } \alpha_{i,j} = 0 \end{cases}$$

für die Kovarianzen und

$$c_{i,h}(k+1)$$

$$= \begin{cases} \dfrac{c_{i,j}(k)}{c_j(k)} \cdot \dfrac{P_D^{i,j}(k+1)}{\rho_F} \cdot \dfrac{e^{-\frac{1}{2} y_{i,j,\alpha_{i,j}}^{\mathsf{T}}(k+1) s_{i,j,\alpha_{i,j}}^{-1}(k+1) y_{i,j,\alpha_{i,j}}(k+1)}}{\sqrt{\det\left(2\pi \cdot S_{i,j,\alpha_{i,j}}(k+1)\right)}} & \text{für } \alpha_{i,j} > 0, \\[4ex] \dfrac{c_{i,j}(k)}{c_j(k)} \cdot \left(1 - P_D^{i,j}(k+1)\right) & \text{für } \alpha_{i,j} = 0 \end{cases}$$

für die Gewichte berechnet. Die Größe $K_{i,j\alpha i,j}(k+1)$ in den vorstehenden Gleichungen ist durch

$$K_{i,j,\alpha_{i,j}}(k+1) = P_{i,j}^{\mathsf{pre}}(k+1) \cdot H^{\mathsf{T}} \cdot S_{i,j,\alpha_{i,j}}^{-1}(k+1)$$

gegeben. Der Term det(...) bezeichnet die Determinante einer Matrix, $\rho_F$ ist eine geeignet zu wählende Konstante und

$P_D^{i,j}(k+1)$ ist eine für jede prädizierte Hypothese $j$ des Tracks $i$ nach der Gleichung

$$P_D^{i,j}(k+1) = \frac{P_D^{\mathsf{max}}}{2}\, \mathrm{erfc}\left(\frac{D_{\mathsf{thr}} - a_{i,j}^{\mathsf{pre}}(k+1)}{\sigma_{a_{i,j}}^{\mathsf{pre}}(k+1) \cdot \sqrt{2}}\right)$$

zu berechnende Detektionswahrscheinlichkeit. In letztgenannter Gleichung bedeutet $\mathit{erfc}(...)$ die komplementäre Gauß'sche Fehlerfunktion, $P_D^{\mathsf{max}}$ und $D_{thr}$ sind geeignet zu wählende Konstanten, $a_{i,j}^{\mathit{pre}}(k+1)$ ist die prädizierte Amplitude der Hypothese $j$ des Tracks $i$ und $\sigma_{a_{i,j}}^{\mathit{pre}}(k+1)$ der zugehörige Schätzfehler.

Die Löschung unwahrscheinlicher Hypothesen wird folgendermaßen durchgeführt: Unterschreitet das Gewicht einer wie zuvor beschriebenen neu erzeugten Hypothese h' einen kritischen Wert, d.h.

$$c_{i,h'}(k+1) < c_{\mathsf{krit}}$$

dann wird die Hypothese aus der Hypothesenliste der Zielspur $i$ gelöscht. Die Anzahl $n_{i,hyp}^{\mathit{pre}}(k+1)$ der neuen Hypothesen reduziert sich um die Zahl der gefundenen Hypothesen, welche die Bedingung aus letztgenannter Gleichung erfüllen.

Auflösungskonflikte werden folgendermaßen behandelt: Im Fall der Breitbandsignalverarbeitung werden aus der Trackliste alle Tracks $i$ mit $SA_i(k) = 1$ und $IN_i(k) = j \neq 0$ gesucht. Dies bedeutet, dass diese bestätigten Tracks in einem Auflösungskonflikt mit den entsprechenden bestätigten Tracks $j$ stehen. Der Auflösungskonflikt besteht darin, dass die führenden Hypothesen der Tracks $i$ und $j$ in der Datenzuordnung des Zeittakts $k$-1 nach $k$ dieselbe Messung $z_g(k)$ verarbeitet haben. Die führenden Hypothesen sind die Hypothesen $i_h$ und $j_h$ der Tracks $i$ und $j$, die für $c_{i,ih}(k) \geq c_{i,\alpha}(k)$ für alle $\alpha \neq i_h$ bzw. $C_{j,jh}(k) \geq c_{j,\beta}(k)$ für alle $\beta \neq j_h$ gilt. Bleibt der Auflösungskonflikt auch in diesem Takt erhalten, d.h. bekommen die führenden Hypothesen der Tracks $i$ und $j$ erneut ein und dieselbe Messung $z_f(k+1)$ der aktuellen Messdaten zugeordnet, wird eine modifizierte Korrektur der betreffenden Zielspuren vorgenommen.

Der Auflösungskonflikt für das Trackpaar $i$ und $j$ wird beendet, wenn ein weiter unten erläuterter Abstand einer Hypothese aus mindestens einem der beiden Tracks zu der führenden Hypothese $\omega_h$ eines bereits im letzten Track bestätigten Tracks $\omega$ kleiner als eine kritischer Wert $d_{Aufl}^2$ ist. Der Track $\omega$ darf nicht älter als der betreffende Auflösungskonflikt sein. Gilt dies für die Hypothese $i_a$ des Tracks $i$, wird der Track $\omega$ mit der Vergangenheit des Tracks $i$

verknüpft, der Track ω aus der Trackliste entfernt und die Zahl der bestätigten Tracks um eins reduziert. Gilt dies für eine Hypothese $j_a$ des Tracks $j$, wird der Track ω mit der Vergangenheit des Tracks $j$ verknüpft, der Track ω aus der Hypothesenliste entfernt und die Zahl der bestätigten Tracks um eins reduziert.

Findet sich sowohl für Track $i$ als auch für Track $j$ eine Hypothese, welche hinreichend nah an der führenden Hypothese ω$_h$ des Tracks ω liegt, wird die Peilrate $\dot{\Theta}_{i,ih}(k^{i,j}_{Aufl} - 1)$ bzw. $\dot{\Theta}_{j,jh}(k^{i,j}_{Aufl} - 1)$ beider Hypothesen von vor Beginn des Auflösungskonflikts zur Zeit $k^{i,j}_{Aufl}$ mit der Peilrate $\Theta_{\omega,\omega_h}(k + 1)$ der jetzt gefundenen Hypothese ω$_h$ des Tracks ωverglichen. Stimmt die frühere Peilrate nur einer der beiden Hypothesen mit der aktuellen der Hypothesen m$_h$ im Vorzeichen überein, wird der Track ω mit der Vergangenheit des betreffenden Tracks verknüpft, der Track ω aus der Trackliste entfernt und die Zahl der bestätigten Tracks um eins reduziert. Stimmen die Peilraten beider im Auflösungskonflikt befindlichen Tracks von vor dem Auflösungskonflikt im Vorzeichen mit der der Hypothese ω$_h$ des Tracks ω überein, werden die Amplituden von vor dem Auflösungskonflikt miteinander verglichen. Gilt

$$\left| a_{\omega,\omega_h}(k+1) - a_{i,ih}\left(k^{i,j}_{Aufl} - 1\right) \right| < \left| a_{\omega,\omega_h}(k+1) - a_{j,jh}\left(k^{i,j}_{Aufl} - 1\right) \right|$$

wird der Track ω mit der Vergangenheit des Tracks $i$ verknüpft, der Track ω aus der Hypothesenliste entfernt und die Zahl der bestätigten Tracks um eins reduziert. Gilt

$$\left| a_{\omega,\omega_h}(k+1) - a_{j,jh}\left(k^{i,j}_{Aufl} - 1\right) \right| < \left| a_{\omega,\omega_h}(k+1) - a_{i,ih}\left(k^{i,j}_{Aufl} - 1\right) \right|$$

wird der Track ω mit der Vergangenheit des Tracks $j$ verknüpft, der Track ω aus der Hypothesenliste entfernt und die Zahl der bestätigten Tracks um eins reduziert.

Für den unwahrscheinlichen Fall der Gleichheit beider Differenzen kann die Amplitude der Hypothesen der Tracks $i$ und $j$ von der Zeit $k^{i,j}_{Aufl} - 2$ genommen werden. Eine weitere Möglichkeit besteht darin, die Mittelung der Amplituden in einem Fenster $\left[ k^{i,j}_{Aufl} - n_{mittel}, k^{i,j}_{Aufl} - 1 \right]$ zu nehmen.

Ist der Auflösungskonflikt für Tracks $i$ und $j$ noch nicht beendet, wird die Korrektur der Zielspuren wie folgt durchgeführt: Solange keine Konfliktbehandlung ausgelöst worden ist, gibt es bei einem (bestätigten) Ziel und $n_k$ Messungen im $k$-ten Zeittakt $n_k$ + 1 Interpretationsmöglichkeiten: (1) Das Ziel ist nicht detektiert worden. Folglich sind alle $n_k$ Messungen falsch (1 Hypothese) oder (2) das Ziel wurde detektiert und die Messung $j$ stammt vom Ziel, während die übrigen $n_k$ - 1 Messungen falsch sind ($n_k$ Hypothesen). Im Fall der Konfliktbehandlung existieren weitere Deutungsmöglichkeiten für die Messdaten: (1) Zwei Objekte sind unaufgelöst, aber als Gruppe detektiert; eine der $n_k$ Messungen ist als eine Messung des Gruppenschwerpunkts, während alle anderen Messungen falsch sind ($n_k$ Hypothesen). (2) Zwei Objekte sind weder aufgelöst noch detektiert; alle Messungen sind falsch (1 Hypothese). (3) Zwei Objekte sind aufgelöst und einzeln detektiert; $n_k$ -2 Messungen sind falsch ($n_k(n_k$ - 1) Hypothesen). (4) Zwei Objekte sind zwar aufgelöst, aber nur eines wurde detektiert; $n_k$ -1 Messungen sind falsch ($2n_k$ Hypothesen). (5) Zwei Hypothesen sind zwar auflösbar, wurden aber beide nicht detektiert; alle Messungen sind falsch (1 Hypothese).

Die Wahrscheinlichkeit, eine unaufgelöste Messung zweier Ziele zu erhalten, ist eine Funktion des Auflösungsvermögens des eingesetzten Sensors und des Abstands, d.h. dem regelmäßigen Abstand der Ziele. In diesem Sinne ist das Auftreten einer unaufgelösten Messung als zusätzliche Abstandsmessung mit dem Ergebnis "null" interpretierbar und kann vom Trackingalgorithmus verarbeitet werden. Da in diesem Fall die zu verarbeitende Messung nicht mehr nach (4) in Beziehung zum Zustandsvektor eines einzelnen Ziels zu setzen ist, sondern von den Zustandsvektoren zweier Ziele abhängt, ist es nötig, den Schwerpunkt und den Abstand zweier Ziele als neue Zustandsgrößen einzuführen und in Bezug zu den Größen Peilung θ und Amplitude a zu setzen. Es ergibt sich der unaufgelöst Zustandsvektor

$$y^u(k) = \begin{bmatrix} \theta_i(k) - \theta_j(k) \\ \theta_i(k) + \frac{1}{2}\left(\theta_j(k) - \theta_i(k)\right) \\ \frac{1}{2}\left(a_i(k) - a_j(k)\right) \end{bmatrix}.$$

Mittels Unscented-Transformation werden aus den prädizierten Hypothesen der im Konflikt befindlichen Ziele die prädizierten unaufgelösten Messungen und die zugehörigen Kovarianzen berechnet. Da die Behandlung des Auflösungskonflikts im Programmablauf erst nach dem gewöhnlichen Kalman-Update der einzelnen Zielzustandshypothesen vorgenommen wird, erfolgt eine Umgewichtung und Modifikation der einzelnen Zielhypothesen unter Berücksichtigung der zusätzlichen Interpretationsmöglichkeiten der Messdaten. Die gemeinsamen Zustandshypothesen der im Konflikt stehenden Ziele werden aus den Einzelzielhypothesen gebildet. Konnten bspw. einem ersten Ziel im aktuellen Zeitschritt $n_1$ Messungen und einem zweiten Ziel $n_2$ Messungen zugeordnet werden, müssen für den kombinierten Zielzustand $n_1, \times n_2$ Hypothesen betrachtet werden. Um die Komplexität des Algorithmus zu reduzieren, werden die gemeinsamen Zielhypothesen direkt nach dem Update zurück in Einzelzielhypothesen gewandelt, so dass die Anzahl der betrachteten Einzelzielhypothesen konstant bleibt. Der Einzelzielzustand berechnet sich dabei als Summe der in Frage kommenden gemeinsamen Zielhypothesen und approximiert die Wahrscheinlichkeitsdichte

$$p(x_1) = \int p(x_1, x_2)\, dx_2$$

über sog. second order moment matching. Zum Update der Einzelzielhypothesen ist also die Berechnung der gemeinsamen Wahrscheinlichkeitsdichte $p(x_1(k + 1), x_2(k + 1)|Z^{k+1})$ auf der Basis aller Messungen $Z^{k+1} = \{Z_{k+1}, Z^k\}$ bis zum aktuellen Zeitpunkt nötig. Unter Annahme der Unabhängigkeit der Zielzustände zu vorherigen Zeitpunkten lässt sich die Dichte über

$$p\big(x_1(k + 1), x_2(k + 1) \mid Z^{k+1}\big) =$$
$$p(Z_{k+1} \mid x_1(k + 1), x_2(k + 1)) p\big(x_1(k + 1) \mid Z^k\big) p\big(x_2(k + 1) \mid Z^k\big)$$

berechnen. Die Berechnung der gemeinsamen Hypothesengewichte erfolgt entsprechend den verschiedenen Dateninterpretationen (1) bis (5) und nach folgendem Schema:

$$p\big(x_1(k + 1), x_2(k + 1) \mid Z^{k+1}\big) = p_i\, p\big(x_1(k) \mid Z^k\big) p\big(x_2(k) \mid Z^k\big), \quad i = 1, \ldots, 5$$

wobei $p_i$ von der Dateninterpretation (1) bis (5) abhängt.

Das Update des gemeinsamen Zielzustands erfolgt jeweils gemäß der Kalman-Updateformeln für jede mögliche Kombination aus Einzelzielhypothesen. Es bezeichne $P_D^u$ die Entdeckungswahrscheinlichkeit für den unaufgelösten Zielzustand, $P_D^i$ sei die Entdeckungswahrscheinlichkeit für den $i$-ten Zielzustand und $P_u$ die Wahrscheinlichkeit, dass zwei Ziele nicht aufgelöst sind.

(1) Der gemeinsame Zielzustand wird über ein Update mit der unaufgelösten Messung $z_i(k + 1)$ und der fiktiven Messung "Abstand = 0" berechnet. Die Neugewichtung erfolgt gemäß

$$p_1 = P_u P_D^u \big/ f_c\, p\big(z_i(k + 1) \mid x_1(k + 1), x_2(k + 1)\big)$$

'Messung unaufgelöst'.

(2) Nur die fiktive Messung wird zum Update des gemeinsamen Zielzustands verwendet. Die Neugewichtung erfolgt gemäß

$$p_2 = P_u\big(1 - P_D^u\big).$$

(3) Der gemeinsame Zielzustand wird über ein Update mit den beiden aufgelösten Messungen $z_i(k + 1)$ und $z_j(k +$

1) bestimmt:

$$p_3 =$$
$$(1 - P_u)P_D^1 P_D^2 / f_c^2 \, p\big(z_i(k+1), z_j(k+1) \,|\, x_1(k+1), x_2(k+1)\big)$$

'Messung aufgelöst')

(4) Ohne Einschränkung der Allgemeinheit sei das erste Ziel über die Messung $z_i(k+1)$ detektiert, dann ergibt sich der gemeinsame Zielzustand aus der Kombination des mit der Messung $z_i(k+1)$ aktualisierten Zielzustandes Ziel 1 und dem prädizierten Zielzustand Ziel 2:

$$p_4 = (1 - P_u)\big(1 - P_D^2\big)P_D^1 / f_c \, p\big(z_i(k+1) \,|\, x_1(k+1)\big)$$

'Messung aufgelöst').

(5) Der gemeinsame Zielzustand setzt sich zusammen aus den beiden prädizierten Einzelzielzuständen:

$$p_5 = (1 - P_u)\big(1 - P_D^1\big)\big(1 - P_D^2\big).$$

Nachfolgend wird die Spaltung von Zielspuren erläutert. Für jeden Track wird überprüft, ob die Hypothesen $h_1$ und $h_2$ mit dem stärksten Gewicht einen zu großen Abstand $d_{i,h1,h2}$, berechnet über die Formel

$$d_{i,h_1,h_2}^2 = \big(x_{i,h_1}(k+1) - x_{i,h_2}(k+1)\big)^{\mathrm{T}}\big(P_{i,h_1}(k+1) + P_{i,h_2}(k+1)\big)^{-1}\big(x_{i,h_1}(k+1) - x_{i,h_2}(k+1)\big)$$

voneinander haben. Ist die Beziehung

$$d_{i,h_1,h_2}^2 > d_{\mathrm{split}}^2$$

mit geeignet gewähltem $d_{split}$ erfüllt, wird eine der beiden Hypothesen als neuer Track $i'$ mit nur einer Hypothese im Takt $k+1$ abgespalten. Dieser abgespaltene Track bekommt die Vergangenheit bis zum Track $k$ von Track $i$ angehängt. Die Anzahl an bestätigten oder vorläufigen Tracks - je nach Status des Ausgangstracks $i$ - wird um eins erhöht.
Nachfolgend wird die Verschmelzung von Zielspuren erläutert: Die vorliegenden Tracks werden paarweise miteinander verglichen. Der Abstand $d_{i1,i2}$ zwischen zwei Tracks $i_1$ und $i_2$ ist durch

$$d_{i_1,i_2}^2 = \big(x_{i_1}(k+1) - x_{i_2}(k+1)\big)^{\mathrm{T}}\big(P_{i_1}(k+1) + P_{i_2}(k+1)\big)^{-1}\big(x_{i_1}(k+1) - x_{i_2}(k+1)\big)$$

gegeben. Sind die Kovarianzen nicht zu groß und gilt $SA_{i1}(k+1) \neq SA_{i2}(k+1)$, d.h. nur einer der beiden Tracks bereits bestätigt und gilt ferner

$$d_{i_1,i_2}^2 < d_{\mathrm{merge}}^2$$

mit geeignet gewähltem $d_{merge}$, dann wird der jüngere der beiden Tracks gelöscht. Je nachdem, ob es sich bei diesem um einen bestätigten oder um einen vorläufigen Track handelt, wird die entsprechende Anzahl $n_B(k)$ bzw. $n_T(k)$ um eins reduziert.

Nachfolgend wird die Verschmelzung von Hypothesen erläutert: Die Hypothesen eines Tracks $i$ werden paarweise miteinander verglichen. Genügt der Abstand zweier Hypothesen $H_1$ und $H_2$ der Bedingung

$$d^2_{i,h_1,h_2} < d^2_{merge,hyp}$$

mit geeignet gewähltem $d_{merye,hyP}$ ,dann werden die beiden Hypothesen über die Formeln

$$x_{i,h_{12}}(k+1) = \sum_{r=1,2} c_{i,h_r}(k+1) x_{i,h_r}(k+1)$$

$$P_{i,h_{12}}(k+1) = \sum_{r=1,2} c_{i,h_r}(k+1)$$

$$\times \left[ P_{i,h_r}(k+1) + \left( x_{i,h_r}(k+1) - x_{i,h_{12}}(k+1) \right) \left( x_{i,h_r}(k+1) - x_{i,h_{12}}(k+1) \right)^{\mathsf{T}} \right]$$

$$c_{i,h_{12}}(k+1) = \sum_{r=1,2} c_{i,h_r}(k+1)$$

zu einer neuen Hypothese zusammengefasst. Die Anzahl der Hypothesen für den Track $i$ reduziert sich um die Anzahl gefundener Hypothesenpaare, welche die Bedingung $d^2_{i,h_1,h_2} < d^2_{merge,hyp}$ erfüllen.

Nachfolgend wird die Bildung neuer vorläufiger Zielspuren erläutert: Aus allen $n^{new}_T(k+1)$ Messungen $z_i(k+1)$, die keiner prädizierten Hypothese zugeordnet werden, werden neue vorläufige Zielspuren, $\tau$ gebildet. Wie in der Initialisierungsphase wird jede so neu entstandene Zielspur aus einer Hypothese gebildet, mit dem o.g. Hypothesenzustandsvektor $x_{i,1}(1) = H^{\mathsf{T}} + z_i(k)$, einer Kovarianz $P_{\tau,1}(k+1) = P^0$, dem Gewicht $c_{\tau,1}(k+1) = 1$ und den Werten $SA_\tau(k+1) = 0$, $ZÄ_\tau(k+1) = 0$ und $IN_\tau(k+1) = 0$. Die Anzahl der vorläufigen Zielspuren erhöht sich um diese Zahl nicht zugeordneter Messungen.

Nachfolgend wird die Berechnung des Likelihood-Quotienten $LR$ erläutert. Für jeden Track $i$ lässt sich der Wahrscheinlichkeits-Quotient $LR_i(k+1)$ für den Zeittakt $k+1$ aus den Gewichten $c_{i,h}(k+1)$ aller zu diesem Track gehörenden Hypothesen h über die Gleichung

$$LR_i(k+1) = \sum_h c_{i,h}(k+1)$$

berechnen und ist damit formal identisch mit der Gesamtwahrscheinlichkeit $c_i(k+1)$ der $i$ -ten Zielspur.

Nachfolgend wird die Prüfung der vorhandenen Tracks erläutert: Für jeden Track $i$ wird der sequenzielle Wahrscheinlichkeits-Quotienten-Test durchgeführt. Dazu wird der Wert von $LR_i(k+1)$ mit zwei Schranken $A$ und $B$ verglichen. Handelt es sich beim Track $i$ um einen bestätigten Track, wird der Zähler von Track $i$ bei Überschreiten der Schranke $B$ um eins erhöht, d.h. $ZÄ_i(k+1) = ZÄ_i(k) + 1$, und bei Unterschreiten der Schranke $A$ um eins verringert, d.h. $ZÄ_i(k+1) = ZÄ_i(k)-1$. Liegt der Wert von $LR_i(k+1)$ zwischen den beiden Werten, bleibt der Zähler unverändert. Ist der Track $i$ ein vorläufiger Track, wird der Zähler bei Überschreiten der Schranke $B$ um eins erhöht, d.h. $ZÄ_i(k+1) = ZÄ_i(k) + 1$, bei

Unterschreiten der Schranke $A$ wird der Zähler um eins reduziert, d.h. $Z\ddot{A}_i(k + 1) = Z\ddot{A}_i(k)$-1, vorausgesetzt $Z\ddot{A}_i(k) \neq 0$ . Wenn jedoch $Z\ddot{A}_i(k) = 0$ gilt, wird $Z\ddot{A}_i(k + 1) = 0$ gesetzt. Liegt $LR_i(k + 1)$ zwischen den beiden Schranken, bleibt der Zähler auch für vorläufige Tracks unverändert. Sowohl für bestätigte Tracks als auch für vorläufige Tracks $i$ werden die Gewichte der zugehörigen Hypothesen bei Überschreiten der Schranke $B$ normiert, d.h. jedes Gewicht $c_{i,h}(k + 1)$ wird gemäß der Beziehung

$$c_{i,h}(k + 1) \rightarrow \frac{c_{i,h}(k + 1)}{\sum_{h=1}^{n_{i,\text{hyp}}(k+1)} c_{i,h}(k + 1)}$$

durch die Summe aller Gewichte geteilt.

Nachfolgend wird das Setzen des Trackstatus erläutert: Für jeden Track $i$ mit $Z\ddot{A}_i(k + 1) > Z\ddot{A}_{krit}$ wird der Statusanzeiger $SA_i(k + 1)$ auf 1 gesetzt, d.h. auf "bestätigt". Wenn im vorherigen Zeittakt $SA_i(k) = 0$ war, wird die Anzahl $n_B(k)$ bestätigter Tracks um eins erhöht. Für Tracks mit $Z\ddot{A}_i(k + 1) < Z\ddot{A}_{krit}$ wird der Statusanzeiger $SA_i(k + 1)$ auf 0 gesetzt, d.h. auf "vorläufig". Falls im vorigen Zeittakt $SA_i(k) = 1$ war, wird die Anzahl bestätigter Tracks um eins reduziert und die Anzahl $n_T(k)$ um eins erhöht. Der Wert $Z\ddot{A}_{krit}$ ist eine geeignet zu wählende kritische Anzahl an Überschreitungen der oberen Schranke B.

Nachfolgend wird die Neubewertung vergangener Zustände erläutert: Da mit Hilfe jeder neuen Messung das Wissen über den Trackzustand vergrößert wird, kann die Historie eines Tracks $i$ neu berechnet und bewertet werden. Speziell werden dabei alle Hypothesen $h$ eines Tracks $i$ mit $SA_i(k + 1) = 1$ maximal $n_{retro}$ Zeitschritte in die Vergangenheit zurückgerechnet. Existiert der Track erst $n_{exist} < n_{retro}$ Zeitschritte, wird nur diese Anzahl an Schritten gemacht.

Die für die Hypothesen der Zeittakte 1,1 = $k,l$-1,...,$k + 1$- $n_{retro}$ neu berechneten Zustandsvektoren und Kovarianzen ergeben sich über die Gleichungen

$$x_{i,h}^{\text{retro}}(l) = x_{i,h}(l) + W_{i,h}(l) \cdot \left( x_{i,h}^{\text{retro}}(l + 1) - x_{i,h}^{\text{pre}}(l + 1) \right)$$

$$P_{i,h}^{\text{retro}}(l) = P_{i,h}(l) + W_{i,h}(l) \cdot \left( P_{i,h}^{\text{retro}}(l + 1) - P_{i,h}^{\text{pre}}(l + 1) \right) \cdot W_{i,h}^{\mathsf{T}}(l)$$

und

$$W_{i,h}(l) = P_{i,h}(l) \cdot F^{\mathsf{T}} \cdot P_{i,h}^{\text{pre}^{-1}}(l + 1)$$

wobei F die Übergangsmatrix des Prozessmodells ist. Das retrodizierte Hypothesengewicht der $h$-ten Hypothese im Takt 1 ergibt sich aus der Summe der Gewichte aller retrodizierten Hypothesen im $l + 1$-ten Takt, welche aus der Hypothese $h$ im normalen Multihypothesenzyklus im Takt $l$ nach $l + 1$ gebildet werden:

$$c_{i,h}^{\text{retro}} = \sum_{\xi=1}^{n_{i,\text{hyp}}(l+1)} c_{i,\xi}(l + 1)$$

Nach Ablauf des Taktes liegt dann eine aktualisierte Trackliste mit $n_B(k + 1)$ bestätigten und $n_T(k+1)$ vorläufigen Tracks $i$ mit Zustandsvektor $x_i(k+1)$, Kovarianz $P_i(k + 1)$ und Gesamtgewicht $c_i(k+1)$ vor, die jeweils aus $n_i(k+1)$ Hypothesen $j$ mit Zustandsvektoren $x_{i,j}(k + 1)$, Kovarianzen $P_{i,j}(k +1)$ und Hypothesengewichten $c_{i,h}(k + 1)$ gebildet werden.

Hinzu kommen die aktualisierten Statusanzeiger $SA_i(k+1)$ und Zähler $Z\ddot{A}_i(k+1)$ bzw. $IN_i(k +1)$.

Aus dem oben beschriebenen Trackingsystem werden Trackdaten in einem Ausleseblock 43 ausgelesen und weiterverarbeitet. Dabei wird je nach Signalverarbeitung unterschieden, ob die Trackdaten wie im Fall der Breitbandsignalverarbeitung gleich an ein entsprechendes Ausgabesystem 44 weitergegeben werden oder ob die Trackdaten wie im Fall der Schmalbandsignalverarbeitung noch einen weiteren Verwaltungsblock 45 durchlaufen, bevor sie an das entsprechende Ausgabesystem weitergegeben werden. Für einen beliebig herausgegriffenen $k$-ten Zeittakt werden die folgenden Listen der $n(k) = n_B(k) + n_T(k)$ Tracks als Trackdaten weitergegeben und zwar für den Fall der Breitbandsignalverarbeitung:

$$1: \quad \theta_1(k), \quad \dot{\theta}_1(k), \quad a_1(k), \quad \dot{a}_1(k), \quad \sigma_{\theta_1}(k), \quad \sigma_{\dot{\theta}_1}(k), \quad \sigma_{a_1}(k), \quad \sigma_{\dot{a}_1}(k), \quad SA_1(k)$$

$$2: \quad \theta_2(k), \quad \dot{\theta}_2(k), \quad a_2(k), \quad \dot{a}_2(k), \quad \sigma_{\theta_2}(k), \quad \sigma_{\dot{\theta}_2}(k), \quad \sigma_{a_2}(k), \quad \sigma_{\dot{a}_2}(k), \quad SA_2(k)$$

$$\vdots$$

$$n(k): \quad \theta_n(k), \quad \dot{\theta}_n(k), \quad a_n(k), \quad \dot{a}_n(k), \quad \sigma_{\theta_n}(k), \quad \sigma_{\dot{\theta}_n}(k), \quad \sigma_{a_n}(k), \quad \sigma_{\dot{a}_n}(k), \quad SA_n(k)$$

und für den Fall der Schmalbandsignalverarbeitung:

$$1: \quad \text{wie BDT plus zusätzlich} \quad v_1(k), \quad \dot{v}_1(k), \quad \sigma_{v_1}(k), \quad \sigma_{\dot{v}_1}(k)$$

$$2: \quad \text{wie BDT plus zusätzlich} \quad v_2(k), \quad \dot{v}_2(k), \quad \sigma_{v_2}(k), \quad \sigma_{\dot{v}_2}(k)$$

$$\vdots$$

$$n(k): \quad \text{wie BDT plus zusätzlich} \quad v_n(k), \quad \dot{v}_n(k), \quad \sigma_{v_n}(k), \quad \sigma_{\dot{v}_n}(k)$$

Der o.g. Verwaltungsblock 45 für den Fall der Schmalbandsignalverarbeitung dient dazu, die im Schmalbandfall vom Tracking-System erzeugten bestätigten Einzel-Linien-Tracks, d.h. Tracks von einzelnen Frequenzlinien, kurz als SLT (Single-Line-Track) bezeichnet, zu sog. Multi-Linien-Tracks, kurz MLT (Multi-Line-Track) bezeichnet, zu kombinieren. Dabei werden diejenigen SLTs miteinander kombiniert, für die die Peilung und die Peilrate hinreichend gut übereinstimmen. Damit werden die Frequenzlinien zusammengefasst, die alle aus einer Richtung stammen. Darüber hinaus wird in diesem Block für jeden bestehenden MLT geprüft, ob die Peilung oder Peilrate eines bestimmten SLTs zu stark von der Peilung oder der Peilrate des MLTs abweicht, welche ihrerseits aus der Mittelung der Peilung bzw. der Peilrate aller im MLT zusammengefassten SLTs berechnet wird. Wird ein solcher SLT gefunden, wird er aus dem MLT entfernt und als neuer MLT geführt, einer, der nur aus einer Frequenzlinie besteht. Alle weiteren nicht zu bestehenden MLTs zuzuordnenden und nicht untereinander zu kombinierenden SLTs werden ebenso als MLTs mit nur einer Frequenzlinie geführt.

Als verbleibende Blöcke 44 und 46 gibt es die Ausgabesysteme HMI-1 bzw. HMI-2. Im Fall der Breitbandsignalverarbeitung werden zunächst diejenigen Tracks ausgewählt, deren Status im betreffenden Zeittakt $k$ bestätigt ist. Aus den im MHT-Verfahren erkannten Zielspuren wird für jeden Track $i$ diejenige Hypothese $j$ gewählt, deren Gewicht $c_{i,j}(k)$ am größten ist. Der entsprechende Wert der Peilung dieser Hypothese, $\theta_{i,j}(k)$ wird dann in einer sog. Wasserfalldarstellung des Peilwinkels über die Zeit eingezeichnet, indem die Peilung aller Detektionen im Verlauf der Zeit farbkodiert nach der Stärke der jeweiligen Amplitude dargestellt ist.

Im Fall der Schmalbandsignalverarbeitung wird für jeden MLT $i$ (kombinierte bestätigte SLTs) des $k$-ten Zeittakts die aus allen dem MLT zugeordneten SLTs ermittelten Peilung $\theta_i(k)$ genommen, wobei aus jedem $j$-ten SLT jeweils die Peilung $\theta_{j,l}(k)$ der Hypothese $l$ des stärksten Gewichts $c_{j,l}(k)$ zur Mittelung beisteuert und in einer Wasserfalldarstellung gezeichnet. Zusätzlich wird die Frequenz $v_{j,l}(k)$ der stärksten Hypothese $l$ aller SLTs $j$ jedes einzelnen MLTs $i$ genommen, und in einer Wasserfalldarstellung dargestellt.

Fig. 5 veranschaulicht den Datenfluss gemäß dem Multihypothesentrackingverfahren in dem mit MHT bezeichneten Block 42 gemäß Fig. 4. Im Block 50 werden Daten aus der Sonaranlage eingelesen und zwar vorzugsweise Peilwinkel und Amplituden sowie im Fall der Schmalbandsignalverarbeitung auch eine Frequenz. Die eingelesenen Daten werden sodann einem Datenzuordnungsblock 51 übergeben, der die eingelesenen Daten im Block 52 prädizierten Spurzustandsvektoren zuordnet.

Die zugeordneten Daten werden sodann vom Block 51 dem Block 53 übergeben, der die Schätzung des Zustandsvektors anhand der Messdaten und den zugeordneten prädizierten Daten des prädizierten Zustandsvektors vornimmt. Der Block 53 wird daher auch als Schätzfilterblock bezeichnet. Er übernimmt auch die Korrektur von Zielspuren.

In einem dem Schätzfilterblock 53 nachgeordneten Verwaltungsblock 54 erfolgt die beschriebene Löschung unwahrscheinlicher Hypothesen, die Auflösungskonflikt-Behandlung, die Spaltung von Zielspuren, die Verschmelzung von Zielspuren, die Verschmelzung von Hypothesen sowie die Bildung neuer vorläufiger Zielspuren.

In einem dem Verwaltungsblock 54 nachgeschalteten Likelihood-Quotienten-Berechnungsblocks 55 erfolgt die oben beschriebene Berechnung des Likelihood-Quotienten LR.

Dem Likelihood-Quotienten-Berechnungsblock 55 ist ein Prüfblock 56 nachgeordnet, der die oben beschriebene Prüfung von Tracks durchführt. In einem diesem Prüfblock nachgeschalteten Trackstatusblock 57 wird das oben beschriebene Setzen des Trackstatus bewerkstelligt.

In einem dem Trackstatusblock 57 nachgeordneten Neubewertungsblock 58 erfolgt eine Neubewertung vergangener Zustände, wie oben ausgeführt. Aufgrund der Neubewertung der Vergangenheit wird sodann im Tracklistenblock 59 eine aktualisierte Trackliste hinterlegt. Diese Trackliste wird vom Prädiktionsblock 52 wiederum verwendet, um neue Prädiktionen durchzuführen.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

**Patentansprüche**

1. Peilverfahren zum Detektieren und Tracken zeitlich aufeinanderfolgender Peilwinkel ($\Theta$) von schallabstrahlenden Zielen über das gesamte Azimut-Panorama oder einen vorgebbaren Azimut-Sektor mit einer Peilantenne (1) mit einer Vielzahl von elektroakustischen oder optoakustischen Wandlern (2.1, 2.2, 2.n) zum Empfangen von Schallwellen und Erzeugen von Empfangssignalen, wobei je Zeittakt im Abstand von Zeitintervallen Empfangssignale jeweils aller oder einer Gruppe der Wandler nach Laufzeitverzögerung und/oder Phasenverschiebung abhängig von ihrer geometrischen Anordnung bezüglich einer Bezugslinie (B) konphas zu Gruppensignalen addiert werden, denen jeweils eine Richtcharakteristik mit einer einem Peilwinkel zugeordneten Hauptempfangsrichtung (I, II, III) senkrecht zur Bezugslinie (B) zugehörig ist, und Intensitäten entsprechend der Amplitude oder des Pegels der Gruppensignale in Abhängigkeit des Peilwinkels ($\Theta$) je Zeittakt ($T$) als Intensitätsschrieb angezeigt werden, wobei Intensitätsschriebe aufeinanderfolgender Zeittakte ($T$) in einer Wasserfalldarstellung Peilspuren von zeitlich aufeinanderfolgenden Peilwinkeln zeigen und bevorzugte Peilspuren durch einen Tracker markiert werden,
**dadurch gekennzeichnet,**
**dass** ausgehend von zur Zeit $t = k$ - 1 ermittelten, jeweils einer Peilspur zugeordneten Spurzustandsvektoren ($\hat{x}(k$-1$/k$ -1$)$ ), welche jeweils einen Peilwinkel ($\Theta$) sowie dessen als Peilrate ($\dot{\Theta}$) bezeichnete zeitliche Ableitung und ggf. eine Intensität (a) sowie deren als Intensitätsrate ($\dot{a}$) bezeichnete zeitliche Ableitung aufweisen, und den Spurzustandsvektoren ($\hat{x}(k$ - 1$/k$ - 1)) zugeordneten Spurfehlern für die Zeit $t = k$ prädizierte Spurzustandsvektoren ($x^{pre}(k|k$ - 1)), welche jeweils einen prädizierten Peilwinkel ($\Theta^{pre}$) sowie deren als prädizierte Peilrate ($\dot{\Theta}e^{pre}$) bezeichnete zeitliche Ableitung und ggf. eine prädizierte Intensität ($a^{pre}$) sowie deren als prädizierte Intensitätsrate ($\dot{a}^{pre}$) bezeichnete zeitliche Ableitung aufweisen, zusammen mit prädizierten Schätzfehlern prädiziert werden,
**dass** der Prädiktion jedes prädizierten Spurzustandsvektors ($x^{pre}(k/k$-1)) und seines Schätzfehlers die Approximation eines zeitlichen Verlaufs einer Peilspur mit geradlinigen Teilstücken als Zielbewegungsmodelldynamik zugrundegelegt werden,
**dass** jeder prädizierte Peilwinkel ($\Theta^{pre}(k/k$ - 1)) aus der Summe aus dem zuletzt zur Zeit $t = k$ - 1 ermittelten Peilwinkel ($\Theta(k$ - 1)) und einer zuletzt ermittelten und mit dem Zeittakt ( $T$ ) multiplizierten Peilrate ($\dot{\Theta}(k$ - 1)) der gleichen Peilspur und ggf. jede prädizierte Intensität ($a^{pre}(k/k$ - 1)) aus der Summe aus der zuletzt zur Zeit $t = k$ - 1 ermittelten Intensität ($a(k$ - 1)) und einer zuletzt ermittelten und mit dem Zeittakt ($T$) multiplizierten Intensitätsrate ($\dot{a}(k$ - 1)) der gleichen Peilspur berechnet werden,
**dass** jeweils eine Zuordnungs-Wahrscheinlichkeit einer Zuordnung eines gemessenen Peilwinkels ($\Theta^{mess}(k)$) und ggf. einer gemessenen Intensität ($a^{mess}(k)$) zu einer der Peilspuren ermittelt wird,
**dass** in Abhängigkeit einer ermittelten Zuordnungs-Wahrscheinlichkeit ein gemessener Peilwinkel ($\Theta^{mess}(k)$) und ggf. eine gemessene Intensität ($a^{mess}(k)$) zusammen mit einem prädizierten Peilwinkel ($\Theta^{pre}(k/k$-1)) und ggf. einer prädizierten Intensität *($a^{pre}(k/k$-1))* zu einem geschätzten Peilwinkel ($\hat{\Theta}(k)$) und ggf. einer geschätzten Intensität ($\hat{a}(k)$) zur Zeit $t = k$ verrechnet wird und
der bzw. die somit ermittelten Schätzwerte zusammen mit der geschätzten Peilrate und ggf. geschätzten Intensitätsrate den Spurzustandsvektor ($\hat{x}(k|k)$) der betreffenden Peilspur bilden oder bei einer Zuordnung mehrerer gemessener Peilwinkel und ggf. mehrerer gemessener Intensitäten zu einer Peilspur die jeweiligen Schätzwerte gewichtet aufsummiert werden und den Spurzustandsvektor ($\hat{x}(k/k)$) dieser Peilspur bilden und dieser Spurzustandsvektor ($\hat{x}(k/k)$) die Ausgangsgrößen des im nächsten Zeittakt ($T$) prädizierten Spurzustandsvektors der betreffenden Peilspur zur Prädiktion von $t = k$ auf $t = k$ + 1 bereitstellt und
**dass** derartig gebildete Peilspuren in Abhängigkeit einer Spurgüte angezeigt werden.

2. Peilverfahren nach Anspruch 1, **dadurch gekennzeichnet, dass** aus der Zuordnungs-Wahrscheinlichkeit unter Vorgabe einer Detektionswahrscheinlichkeit ($P_D$) und Falschalarmwahrscheinlichkeit ($P_{FA}$) für einen Peilwinkel und ggf. eine Intensität in einem Winkelabstand ($\Delta\Theta$) zweier benachbarter Richtcharakteristiken eine über eine vorgebbare Anzahl von Zeittakten aufsummierte Spurgüte ($L$) berechnet wird, die mit Schranken ($T_1$) und ($T_2$) zum Einleiten einer neuen Peilspur oder zum Löschen einer Peilspur verglichen wird, wobei die Schranken

$$\left(T_1 = \ln\left(\frac{\beta}{1-\alpha}\right), \ T_2 = \ln\left(\frac{1-\beta}{\alpha}\right)\right)$$ durch vorgegebene Wahrscheinlichkeiten ($\alpha$, $\beta$) für die Bestätigung einer falschen Peilspur oder das Löschen einer wahren Peilspur vorgegeben werden und dass der Beginn bestätigter Peilspuren die Detektion eines Ziels angeben und diese Peilspuren zur Zielverfolgung angezeigt werden.

3. Peilverfahren nach der Anspruch 1 oder 2, **dadurch gekennzeichnet, dass** die Zuordnungs-Wahrscheinlichkeit eines gemessenen Peilwinkels $\Theta^{mess}(k)$ und ggf. einer gemessenen Intensität $a^{mess}(k)$ zu einer der Peilspuren in Abhängigkeit des von $k - 1$ auf $k$ prädizierten Peilwinkels $\Theta^{pre}(k/k - 1)$ und ggf. der von $k - 1$ auf $k$ prädizierten Intensität $a^{pre}(k/k - 1)$ durch einen quadrierten, normierten statistischen Abstand

$$d_\Theta^2 = \frac{(\Theta^{pre}(k/k-1) - \Theta^{mess}(k))^2}{\sigma_\Theta^{2\,mess} + \sigma_{\hat{\Theta}}^2(k/k-1)} \ \text{bzw.}$$

$$d_a^2 = \frac{(a^{pre}(k/k-1) - a^{mess}(k))^2}{\sigma_a^{2\,mess} + \sigma_{\hat{a}}^2(k/k-1)}$$

bestimmt wird, wobei die quadrierte Peilwinkeldifferenz $(\Theta^{pre}(k/k-1) - \Theta^{mess}(k))^2$ bzw. quadrierte Intensitätsdifferenz $(a^{pre}(k/k - 1) - a^{mess}(k))^2$ auf die Summe aus quadriertem Messfehler $\sigma_\Theta^{2\,mess}$ bzw. $\sigma_a^{2\,mess}$ mess und quadriertem prädizierten Schätzfehler $\sigma_{\hat{\Theta}}^2(k/k-1)$ bzw. $\sigma_{\hat{a}}^2(k/k-1)$ von Peilwinkel bzw. Intensität bezogen und die Zuordnungs-Wahrscheinlichkeit am größten ist, wenn der quadrierte, normierte statistische Abstand $d_\theta^2$ bzw. $d_a^2$ am kleinsten ist.

4. Peilverfahren nach einem der vorhergehenden Ansprüche, **dadurch gekennzeichnet, dass** die Spurgüte $L(k)$ jeder Peilspur ausgehend von der Spurgüte $L(k - 1)$ des vorangegangenen Zeittaktes und einem Güte-Inkremente $\Delta L$ bestimmt wird zu $L(k) = L(k - 1) + \Delta L$,
wobei das Güte-Inkrement $\Delta L$ einer Detektionswahrscheinlichkeit $P_D$ für einen echten Peilwinkel im Winkelabstand $\Delta\Theta$ der Hauptempfangsrichtung zweier Richtcharakteristiken aus einer vorgebbaren Dichte $\beta_{NT}$ neu detektierter Peilwinkel $\Theta$ je Zeitintervall im Azimut-Panorama oder Azimutsektor, dem Winkelabstand $\Delta\Theta$, einer Falschalarm-wahrscheinlichkeit $P_{FA}$ aus einer vorgebbaren Dichte $\beta_{FT}$ von Falschalarmen im Azimut-Panorama oder Azimutsektor und einer radizierten Fehlersumme $S$ aus quadriertem Messfehler ($\sigma_\Theta^{2\,mess}$ bzw. $\sigma_a^{2\,mess}$) und quadriertem Spurfehler ($\sigma_{\hat{\Theta}}^2(k/k)$ bzw. $\sigma_{\hat{a}}^2(k/k)$) und dem quadrierten, normierten statistischen Abstand ($d^2(k/k - 1)$) bestimmt wird zu

$$\Delta L = \ln\frac{P_D \cdot \Delta\Theta}{P_{FA}\sqrt{|S|}} - \frac{d^2(k/k-1) + M\cdot\ln 2\pi}{2},$$

wobei $M$ eine Messvektordimensionalität mit $M = 1,2,3,...$ bezeichnet und das Güte-Inkrement ($\Delta L$) für jeden Zeittakt neu berechnet und zu der zuletzt ermittelten Spurgüte ($L(k - 1)$) über alle oder eine vorgebbare Anzahl von Zeittakten addiert wird.

5. Peilverfahren nach einem der vorhergehenden Ansprüche, **dadurch gekennzeichnet, dass** die Gruppensignale schmalbandig verarbeitet werden, zu jedem gemessenen Peilwinkel eine Intensität gemessen und eine Frequenz bestimmt wird und somit jeder Messvektor einen gemessenen Peilwinkel, eine gemessene Intensität und eine gemessene Frequenz aufweist und jeder geschätzte Spurzustandsvektor jeweils einen geschätzten Peilwinkel, eine geschätzte Peilrate, eine geschätzte Intensität, eine geschätzte Intensitätsrate, eine geschätzte Frequenz und eine geschätzte Frequenzrate aufweist.

6. Peilverfahren nach einem der Ansprüche 3 bis 5, **dadurch gekennzeichnet, dass** die Peilantenne eine Linearantenne umfasst, wobei der Messfehler $\sigma_\theta^{mess}$ des Peilwinkels gemäß

$$\sigma_{\theta^{mess}} = \frac{\sigma_\theta^0}{\left|\sin(\theta_j^{mess}(k) - \theta_0(k))\right| \cdot \sqrt{a_j^{mess}(k)}}$$

von dem aktuell gemessenen Peilwinkel $\theta_j^{mess}(k)$ und der aktuell gemessenen Intensität $a_j^{mess}(k)$, dem Eigenkurs $\theta_0(k)$ eines die Peilantenne tragenden oder schleppenden Wasserfahrzeugs und einer Konstanten $\sigma_\theta^0$ abhängt, wobei der Index $j$ eine zur Zeit $t = k$ erhaltenen Messung einer Anzahl von m(k) Messungen mit $j = 1,...,m$ (k) bezeichnet.

7. Peilverfahren nach einem der vorhergehenden Ansprüche, **dadurch gekennzeichnet, dass** bei einer Zuordnung mehrerer gemessener Peilwinkel und ggf. gemessener Intensitäten zu einer Peilspur einer Peilspur $i$ zu einer Zeit $t = k$ ein Zustandsvektor $x_i(k)$, eine Kovarianzmatrix $P_i(k)$ zur Angabe eines Schätzfehlers und eine Gesamtwahrscheinlichkeit $c_i(k)$ zugeordnet werden, wobei der Zustandsvektor $x_i(k)$ aus einer gewichteten Summe mehrerer einzelner Zustandsvektoren approximiert wird, die aus einer Mehrzahl $n_{i,hyp}(k)$ von Interpretationshypothesen für eine Zuordnung von gemessenen Peilwinkein und ggf. gemessenen Intensitäten und ggf. gemessenen Frequenzen zu einer bereits bestehenden Zielspur ermittelt werden, wobei $c_{i,j}(k), j = 1,..., n_{i,hyp}(k)$ die Gewichte der Hypothesen angibt und zwar gemäß

$$x_i(k) = \frac{1}{c_i(k)} \sum_{j=1}^{n_{i,\text{hyp}}(k)} c_{i,j}(k) \, x_{i,j}(k),$$

wobei die Gesamtwahrscheinlichkeit $c_i(k)$ ermittelt wird zu

$$c_i(k) = \sum_{j=1}^{n_{i,\text{hyp}}(k)} c_{i,j}(k)$$

und die Kovarianzmatrix $P_i(k)$ ermittelt wird zu

$$P_i(k) = \frac{1}{c_i(k)} \sum_{j=1}^{n_{i,\text{hyp}}(k)} c_{i,j}(k) \left[ P_{i,j}(k) + \left( x_{i,j}(k) - x_i(k) \right) \cdot \left( x_{i,j}(k) - x_i(k) \right)^{\mathsf{T}} \right].$$

8. Peilverfahren nach Anspruch 7, **dadurch gekennzeichnet, dass** in einer Peilspurliste die möglichen Peilspuren fortlaufend abgelegt werden, die für eine Peilspur $i$ zur Zeit $t = k$ einen Zustandsvektor $x_i(k)$, eine Kovarianzmatrix $P_i(k)$, eine Gesamtwahrscheinlichkeit $c_i(k)$ sowie einen Statusanzeiger $SA_i(k)$ zum Anzeigen, ob die Peilspur bestätigt oder vorläufig ist und einen Zähler $ZÄ_i(k)$, der inkrementiert bzw. dekrementiert wird in Abhängigkeit vom Bestehen bzw. Nichtbestehen eines sequenziellen Likelihood-Quotienten-Tests zur Zeit $t = k$ und einen Indikator $IN_i(k)$ aufweist, der anzeigt, mit welcher Peilspur eine bestätigte Peilspur in einen möglichen Auflösungskonflikt steht.

9. Peilverfahren nach Anspruch 7 oder 8, **dadurch gekennzeichnet, dass** jede Peilspur auf das Bestehen eines möglichen Auflösungskonflikts untersucht wird, der dann vorliegt, wenn die zwei Peilspuren zugeordneten Ziele unter einem im wesentlichen gleichen Peilwinkel erscheinen,

wobei auf das Bestehen eines Auflösungskonflikts erkannt wird, wenn die nach Gewicht führenden Hypothesen zweier Peilspuren dieselbe Messung verarbeiten,

ein Auflösungskonflikt als beendet erkannt wird, wenn ein Abstand einer Hypothese aus wenigstens einer der beiden Peilspuren zu der führenden Hypothese einer im letzten Takt bestätigten Peilspur kleiner als ein vorbestimmter Wert ist.

10. Peilverfahren nach Anspruch 9, **dadurch gekennzeichnet, dass**, sofern die bestätigte Peilspur nicht älter ist als der Auflösungskonflikt, die bestätigte Peilspur mit der Vergangenheit derjenigen Peilspur verknüpft wird, der diejenige Hypothese zugeordnet ist, deren Abstand zur führenden Hypothese kleiner als der vorbestimmte Wert ist, wobei die bestätigte Peilspur verworfen bzw. aus einer Peilspurliste entfernt wird und die Anzahl der bestätigten Peilspuren um eins reduziert wird.

11. Peilverfahren nach Anspruch 9 oder 10, **dadurch gekennzeichnet, dass**, sofern für beide in einem Auflösungskonflikt stehende Peilspuren eine Hypothese besteht, die einen kleineren Abstand zur führenden Hypothese aufweist als ein vorbestimmter Wert, die Peilrate beider Hypothesen von vor Beginn des Auflösungskonflikts mit der Peilrate der aktuell gefundenen Hypothese des bestätigten Tracks verglichen wird und

bei Übereinstimmung des Vorzeichens der Peilrate von vor Beginn des Auflösungskonflikts nur einer der beiden Hypothesen mit dem Vorzeichen der aktuellen Hypothese der bestätigten Peilspur, die bestätigte Peilspur mit der Vergangenheit der betreffenden Peilspur verknüpft, die bestätigte Peilspur verworfen bzw. aus der Peilspurliste entfernt und die Anzahl der bestätigten Peilspuren um eins reduziert wird und

bei Übereinstimmung der Vorzeichen der Peilrate von vor Beginn des Auflösungskonflikts beider Hypothesen mit dem Vorzeichen der aktuellen Hypothese der bestätigten Peilspur die Intensitäten der Peilspuren verglichen werden und

falls der Betrag der Differenz aus der aktuellen Intensität der bestätigten Peilspur und der Intensität einer der beiden im Auflösungskonflikt stehenden Peilspuren von vor Beginn des Auflösungskonflikts kleiner ist als

der Betrag der Differenz aus der aktuellen Intensität der bestätigten Peilspur und der Intensität der anderen der beiden im Auflösungskonflikt stehenden Peilspuren von vor Beginn des Auflösungskonflikts,

die bestätigte Peilspur mit der Vergangenheit der betreffenden Peilspur verknüpft, die bestätigte Peilspur verworfen bzw. aus der Peilspurliste entfernt und die Anzahl der bestätigten Peilspuren um eins reduziert wird.

12. Peilverfahren nach einem der vorhergehenden Ansprüche in Kombination mit Anspruch 5, **dadurch gekennzeichnet, dass** Peilspuren von einzelnen Frequenzlinien erzeugt werden, wobei bestätigte Peilspuren einzelner Frequenzlinien zu sog. Multi-Linien-Peilspuren einer Mehrzahl von Frequenzlinien kombiniert werden, für die die Peilung und Peilrate innerhalb eines vorbestimmten Rahmens übereinstimmen.

13. Peilverfahren nach Anspruch 12, **dadurch gekennzeichnet, dass** Multi-Linien-Peilspuren im Hinblick darauf geprüft werden, ob die Peilung oder Peilrate einer bestimmten Peilspur einer einzelnen Frequenzlinie mehr als ein jeweiliger vorbestimmter Grenzwert von der Peilung oder der Peilrate der jeweiligen Multi-Linien-Peilspur abweicht, welche aus der Mittelung der Peilung bzw. der Peilrate aller in dieser Multi-Linien-Peilspur zusammengefassten Peilspuren einzelner Frequenzlinien berechnet worden sind und sofern$ eine solche Peilspur einer einzelnen Frequenzlinie gefunden wird, diese aus der betreffenden Multi-Linien-Peilspur entfernt und als neue Multi-Linien-Peilspur geführt wird, die jedoch nur aus einer Frequenzlinie besteht, und alle weiteren nicht zu bestehenden Multi-Linien-Peilspuren zuzuordnenden und nicht untereinander zu kombinierenden Peilspuren einzelner Frequenzlinien ebenso als Multi-Linien-Peilspuren mit nur einer Frequenzlinie geführt werden.

14. Peilanlage zum Detektieren und Tracken zeitlich aufeinanderfolgender Peilwinkel ($\Theta$) von schallabstrahlenden Zielen über das gesamte Azimut-Panorama oder einen vorgebbaren Azimut-Sektor, insbesondere zur Durchführung eines Peilverfahrens nach einem der Ansprüche 1 bis 13, mit einer Peilantenne (1) mit einer Vielzahl von elektroakustischen oder optoakustischen Wandlern (2.1, 2.2, 2.n) zum Empfangen von Schallwellen und Erzeugen von Empfangssignalen und mit einem Richtungsbildner, der derart ausgebildet ist, dass er je Zeittakt im Abstand von Zeitintervallen Empfangssignale jeweils aller oder einer Gruppe der Wandler nach Laufzeitverzögerung und/oder Phasenverschiebung abhängig von ihrer geometrischen Anordnung bezüglich einer Bezugslinie (B) konphas zu Gruppensignalen addiert, denen jeweils eine Richtcharakteristik mit einer einem Peilwinkel zugeordneten Hauptempfangsrichtung (I, II, III) senkrecht zur Bezugslinie (B) zugehörig ist, und mit Anzeigemitteln (4), die zum Anzeigen von Intensitäten entsprechend der Amplitude oder des Pegels der Gruppensignale in Abhängigkeit des Peilwinkels ($\Theta$) je Zeittakt ($T$) als Intensitätsschrieb ausgebildet ist, wobei Intensitätsschriebe aufeinanderfolgender Zeittakte ($T$) in einer Wasserfalldarstellung Peilspuren von zeitlich aufeinanderfolgenden Peilwinkeln zeigen und bevorzugte Peilspuren durch einen Tracker markierbar sind,

**dadurch gekennzeichnet,**

**dass** die Peilanlage ein Kalman-Filter (5) aufweist, in dem ausgehend von zur Zeit $t = k - 1$ ermittelten, jeweils einer Peilspur zugeordneten Spurzustandsvektoren ($\hat{x}(k\text{-}1/k$ -1$)$), welche jeweils einen Peilwinkel ($\Theta$) sowie deren als Peilrate ($\dot{\Theta}$) bezeichnete zeitliche Ableitung und ggf. eine Intensität ($a$) sowie deren als Intensitätsrate ($\dot{a}$) bezeichnete zeitliche Ableitung aufweisen, und den Spurzustandsvektoren ($\hat{x}(k\text{-}1/k$ -1$)$) zugeordneten Spurfehler ($\hat{P}(k$ - $1/k$ - 1$)$) in einer Prädiktionsstufe (5.1) für die Zeit $t = k$ je Peilspur prädizierte Spurzustandsvektoren ($x^{pre}(k/k$ -1$)$), welche jeweils einen prädizierten Peilwinkel ($\Theta^{pre}$) sowie deren als prädizierte Peilrate ($\dot{\Theta}^{pre}$) bezeichnete zeitliche Ableitung und ggf. eine prädizierte Intensität ($a^{pre}$) sowie deren als prädizierte Intensitätsrate ($\dot{a}^{pre}$) bezeichnete zeitliche Ableitung aufweisen, zusammen mit prädizierten Schätzfehlern prädizierbar sind, wobei der Prädiktion jedes prädizierten Spurzustandsvektors ($x^{pre}(k/k$ - 1$)$) und seines Schätzfehlers die Approximation eines zeitlichen Verlaufs einer Peilspur mit geradlinigen Teilstücken als Zielbewegungsmodelldynamik zugrundeliegt,

wobei jeder prädizierte Peilwinkel ($\Theta^{pre}(k/k$ - 1$)$) aus der Summe aus dem zuletzt zur Zeit $t = k$ -1 ermittelten Peilwinkel ($\Theta(k$ - 1$)$) und einer zuletzt ermittelten und mit dem Zeittakt ( $T$ ) multiplizierten Peilrate ($\dot{\Theta}(k$ - 1$)$) der gleichen Peilspur und ggf. jede prädizierte Intensität ($a^{pre}(k/k$ - 1$)$) aus der Summe aus der zuletzt zur Zeit $t = k$ - 1 ermittelten Intensität ($a(k\text{-}1)$) und einer zuletzt ermittelten und mit dem Zeittakt ($T$) multiplizierten Intensitätsrate ($\dot{a}(k$ -1$)$) der gleichen Peilspur berechenbar sind,

**dass** die Peilanlage eine Messdatenzuordnungsstufe (8) aufweist, die derart ausgebildet ist, dass sie jeweils eine Zuordnungs-Wahrscheinlichkeit einer Zuordnung eines gemessenen Peilwinkels ($\Theta^{mess}(k)$) und ggf. einer gemessenen Intensität ($a^{mess}(k)$) zu einer der Peilspuren ermittelt, wobei in Abhängigkeit einer ermittelten Zuordnungs-Wahrscheinlichkeit ein gemessener Peilwinkel ($\Theta^{mess}(k)$) und ggf. eine gemessene Intensität ($a^{mess}(k)$) zusammen mit einem prädizierten Peilwinkel ($\Theta^{pre}(k/k$ - 1$)$) und ggf. einer prädizierten Intensität ($\hat{a}^{pre}(k/k$ - 1$)$) zu einem geschätzten Peilwinkel ($\hat{\Theta}(k)$) und ggf. einer geschätzten Intensität ($\hat{a}(k)$) zur Zeit $t = k$ verrechnet wird und der bzw. die somit ermittelten Schätzwerte zusammen mit der geschätzten Peilrate und ggf. geschätzten Intensitätsrate den Spurzustandsvektor ($\hat{x}(k/k)$) der betreffenden Peilspur bilden oder bei einer Zuordnung mehrerer gemessener Peilwinkel und ggf. mehrerer gemessener Intensitäten zu einer Peilspur die jeweiligen Schätzwerte gewichtet aufsummiert werden und den Spurzustandsvektor $(\hat{x}(k/k))$ dieser Peilspur bilden und dieser Spurzustandsvektor ($\hat{x}(k/k)$) die Ausgangsgrößen des im nächsten Zeittakt ($T$) prädizierten Spurzustandsvektors der betreffenden Peilspur zur Prädiktion von $t = k$ auf $t = k + 1$ bereitstellt und

**dass** die Anzeigemittel (13, 14, 4) derart ausgebildet sind, dass derartig gebildete Peilspuren in Abhängigkeit einer Spurgüte anzeigbar sind.

**15.** Peilanlage nach Anspruch 14, **dadurch gekennzeichnet, dass** zur Prädiktion des prädizierten Zustandsvektors

$$x^{pre}(k/k-1) = \begin{bmatrix} \Theta^{pre}(k/k-1) \\ \dot{\Theta}^{pre}(k/k-1) \end{bmatrix} = F \cdot \hat{x}(k-1/k-1)$$

bzw.

$$x^{pre}(k/k-1) = \begin{bmatrix} \Theta^{pre}(k/k-1) \\ \dot{\Theta}^{pre}(k/k-1) \\ a^{pre}(k/k-1) \\ \dot{a}^{pre}(k/k-1) \end{bmatrix} = F \cdot \hat{x}(k-1/k-1)$$

für die Peilspur ein prädizierter Peilwinkel ($\Theta^{pre}(k/k$ - 1$)$) und dessen geschätzte zeitliche Änderung oder Peilrate ($\dot{\Theta}^{pre}(k/k$ -1$)$) und ggf. eine prädizierte Intensität ($a^{pre}(k/k$ - 1$)$) und deren zeitliche Änderung ($\dot{a}^{pre}(k/k$ - 1$)$) entsprechend einem geradlinigen Teilstück einer Peilspur aus einem zuletzt zur Zeit $t = k$ - 1 ermittelten Spurvektor ($\hat{x}(k$ - $1/k$ - 1$)$) mit dem Peilwinkel ($\hat{\Theta}(k$ - 1$/k$-1$)$) und ggf. der Spurintensität ($\hat{a}(k$ - 1$/k$-1$)$) und der zuletzt ermittelten, mit dem Zeittakt ($T$) multiplizierten Peilrate ($\dot{\Theta}(k$ - 1$/k$ - 1$)$) bzw. Intensitätsrate ($\dot{a}(k$ - 1$/k$ - 1$)$) bestimmt wird zu

$$\Theta^{pre}(k/k-1) = \hat{\Theta}(k-1/k-1) + \dot{\hat{\Theta}}(k-1/k-1)\cdot T$$

$$\dot{\Theta}^{pre}(k/k-1) = \dot{\hat{\Theta}}(k-1/k-1)$$

und ggf.

$$a^{pre}(k/k-1) = \hat{a}(k-1/k-1) + \dot{\hat{a}}(k-1/k-1)\cdot T$$

$$\dot{a}^{pre}(k/k-1) = \dot{\hat{a}}(k-1/k-1),$$

dass in einer der Prädiktionsstufe (5.1) des Kalman-Filters (5) nachgeordneten Abstandsrechenstufe (6) Zuordnungs-Wahrscheinlichkeiten einer Zuordnung zwischen den zur Zeit $t = k$ gemessenen Messwerten ($z(k)$) mit Messfehlern ($\sigma_{\Theta}^{2\,mess}$ bzw. $\sigma_{a}^{2\,mess}$) einer Messkovarianzmatrix und den prädizierten Zustandsvektoren ($x^{pre}(k/k$ - 1)) mit den prädizierten Peilwinkeln ($\Theta^{pre}(k/k$ - 1)) und ggf. Intensitäten $\hat{a}^{pre}(k/k$ - 1)) mit Schätzfehlern ($\theta P^{pre}(k/k$ - 1)) über die Bestimmung eines quadrierten, normierten Abstands ($d_1^2$) zwischen der Differenz ($y$) des Messvektors ($z(k)$) und des prädizierten Zustandsvektors bezogen auf die Summe ($S$) ihrer Fehler ermittelt werden, dass die Abstandsrechenstufe (6) über eine Messdatenzuordnungsstufe (8) den Rückführungszweig des Kalman-Filters (5) zu einer Filterstufe (5.2) des Kalman-Filters (5) bilden, dass in der Filterstufe (5.2) aus dem prädizierten Zustandsvektor ($x^{pre}(k/k$ - 1)) und seinem Schätzfehler ($P^{pre}(k/k$ - 1)) und den Messwerten ($z^{mess}(k)$) und ihrer Messkovarianzmatrix ($R$) ein Spurvektor ($\hat{x}(k)$) für die Zeit $t = k$ je Peilspur

$$\hat{x}(k/k) = x^{pre}(k/k-1) + K(k)\left[z(k) - Hx^{pre}(k/k-1)\right]$$

mit der Messmatrix

$$H = \begin{bmatrix} 1 & 0 & 0 & 0 \\ 0 & 0 & 1 & 0 \end{bmatrix}$$

und der Matrix

$$K(k) = P^{pre}(k/k-1)H^T\left[H\cdot P^{pre}(k/k-1)\cdot H^T + R\right]^{-1}$$

geschätzt wird,
sowie die Kovarianzmatrix des Spurfehlers zu

$$\hat{P}(k/k) = \left[I - K(k)H\right]\cdot P^{pre}(k/k-1)\cdot\left[I - K(k)H\right]^T + K(k)\cdot R\cdot K(k)^T$$

mit der Einheitsmatrix $I$ bestimmt wird,
dass hieraus im nächsten Zeittakt zur Zeit $t = k + 1$ in der Prädiktionsstufe (5.1) des Kalman-Filters (5) der nächste prädizierte Zustandsvektor ($x^{pre}(k+1/k)$) und der nächste prädizierte Schätzfehler ($P^{pre}(k + 1/k)$) prädiziert werden.

16. Peilanlage nach Anspruch 14 oder 15, **dadurch gekennzeichnet, dass** der Abstandsrechenstufe (6) zum Bestimmen der Zuordnungs-Wahrscheinlichkeit einer Zuordnung des zur Zeit ($k$) gemessenen Messwerts ($z(k)$) mit Messfehler ($R$) und des prädizierten Zustandsvektors ($x^{pre}(k/k - 1)$) und Schätzfehlers ($P^{pre}(k/k - 1)$) ein Spurgüterechner (9) nachgeordnet ist mit einer eingangsseitig vorgesehenen Rechenstufe (11) zum Berechnen des Likelihood-Quotienten als Spurgüte ($L$), an deren weiteren Eingängen die Detektionswahrscheinlichkeit ($P_D$) und Falschalarmwahrscheinlichkeit ($P_{FA}$) eines Peilwinkels im Winkelabstand ($\Delta\Theta$) der Hauptempfangsrichtung zweier benachbarter Richtcharakteristiken vorgegeben werden, und einer nachgeschalteten Schrankenvergleichseinrichtung (12), an deren Eingängen Wahrscheinlichkeiten $\alpha$ und $\beta$ für die Bestätigung einer falschen Spur oder das Löschen einer wahren Spur vorgegeben sind, dass in der Schrankenvergleichseinrichtung (12) die Spurgüte ($L$) am Ausgang der Rechenstufe (11) mit einer oberen und unteren Schranke ($T_2$, $T_1$) verglichen wird zum Hinzufügen des Peilwinkels ($\hat{\Theta}(k/k)$) und ggf. der Spurintensität ($\hat{a}(k/k)$) zu einer vorläufigen und/oder bestätigten Peilspur, zum Einleiten einer neuen Peilspur oder zum Löschen der Peilspur, dass die Peilwinkel ($\Theta(k/k)$) und ggf. Spurintensitäten ($\hat{a}(k/k)$) am Ausgang des Kalman-Filters (5) zusammen mit dem Ausgangssignal der Schrankenvergleichsanordnung (12) für die zugehörigen Spurgüten ($L$) einer Registratur (13) für Peilspuren geschaltet sind, dass Peilwinkel ($\Theta(k/k)$) und ggf. Spurintensität ($a(k/k)$) über ein Tor (14), das von der Schrankenvergleichsanordnung (12) ansteuerbar ist, mit den Anzeigemitteln (4) verbunden ist, auf der die Peilspuren angezeigt sind.

17. Peilanlage nach einem der Ansprüche 14 bis 16, **dadurch gekennzeichnet, dass** in der Abstands-Rechenstufe (6) für die Prüfung der Zuordnungs-Wahrscheinlichkeit der Zuordnung eines gemessenen Peilwinkels ($\Theta^{mess}(k)$) und ggf. einer gemessenen Intensität ($a^{mess}(k)$) zu einer Peilspur nach der Global-Nearest-Neighbor-Methode ein quadrierter, normierter statistischer Abstand ($d^2(k/k-1)$)

$$d^2(k/k-1) = y^T(k/k-1) \cdot S^{-1}(k/k-1) \cdot y(k/k-1)$$

mit

$$y(k/k-1) = z(k) - H\hat{x}^{pre}(k/k-1)$$

bestimmt wird, wobei die quadrierte Peilwinkeldifferenz auf die Fehlersumme ($S(k/k-1)$) aus Messfehler ($R$) und dem von $t = k - 1$ auf $t = k$ prädizierten Schätzfehler ($P^{pre}(k/k-1)$) bezogen sind und die Wahrscheinlichkeit der Zuordnung am größten ist, wenn der quadrierte, normierte statistische Abstand ($d^2$) am kleinsten ist.

18. Peilanlage nach Anspruch 17, **dadurch gekennzeichnet, dass** zwischen der Abstandsrechenstufe (6) und der Messdatenzuordnungsstufe (8) eine Gate-Schaltung (7) zum Vergleich des quadrierten normierten statistischen Abstands ($d^2$) zwischen Messwert und prädiziertem Schätzwert mit einem vorgebbaren Gate-Wert vorgesehen ist, dass die Gate-Schaltung (7) das Durchschalten des quadrierten, normierten statistischen Abstands ($d^2$) am Ausgang der Abstandsrechenstufe (6) sperrt, wenn dieser Abstand größer als ein vorgegebener Gate-Wert ist, dass der Gate-Wert $G$ gemäß

$$G = 2 \cdot \ln \frac{P_D \cdot \Delta\Theta}{(1 - P_D) \cdot (2\pi)^{M/2} P_{FA} \sqrt{|S|}}$$

durch Vorgabe einer Detektionswahrscheinlichkeit ($P_D$) für einen echten Peilwinkel im Winkelabstand ($\Delta\Theta$) der Hauptempfangsrichtung zweier benachbarter Richtcharakteristiken und einer Falschalarmwahrscheinlichkeit ($P_{FA}$) unter Berücksichtigung der Summe aus quadriertem Messfehler ($\sigma_\Theta^{2\,mess}$) und Schätzfehler ($P_\Theta^{pre}(k/k-1)$) bestimmt wird, wobei $M$ eine Messvektordimensionalität mit $M = 1,2,3...$ bezeichnet.

**Claims**

1. Direction-finding method for detection and tracking of successive bearing angles (Θ) of sound-emitting targets over the entire azimuth panorama or a predeterminable azimuth sector using a direction-finding antenna (1) having a multiplicity of electroacoustic or optoacoustic transducers (2.1, 2.2, 2.n) for receiving sound waves and producing received signals, wherein, in each clock cycle and separated by time intervals, received signals from in each case all or a group of the transducers are added cophase to form array signals after a propagation time delay and/or phase shift, as a function of their geometric arrangement with respect to a reference line (B), with each of which array signals a directional characteristic is associated with a main reception direction (I, II, III) which is associated with a bearing angle and is at right angles to the reference line (B), and intensities are indicated as an intensity plot, corresponding to the amplitude or the level of the array signals as a function of the bearing angle (Θ) in each clock cycle (T), wherein intensity plots of successive clock cycles (T) in a waterfall plot show bearing traces of successive bearing angles, and preferred bearing traces are marked by a tracker,
**characterized**
**in that**, starting from trace state vectors ($\hat{x}(k\text{-}1/k\text{-}1)$), which are determined at the time $t = k$ -1, are each associated with one bearing trace and each have a bearing angle (Θ) as well as its time derivative, which is referred to as the bearing rate ($\dot{\Theta}$), and possibly an intensity ($a$) and its time derivative, which is referred to as the intensity rate ($\dot{a}$), and trace errors associated with the trace state vectors ($\hat{x}(k\text{-}1/k\text{-}1)$) for the time $t = k$, predicted trace state vectors ($x^{pre}(k/k\text{-}1)$), which each have a predicted bearing angle ($\Theta^{pre}$) and its time derivative, which is referred to as the predicted bearing rate ($\dot{\Theta}^{pre}$), and possibly a predicted intensity ($a^{pre}$) and its time derivative, which is referred to as the predicted intensity rate ($\dot{a}^{pre}$), are predicted together with predicted estimation errors,
**in that** the prediction of each predicted trace state vector ($x^{pre}(k/k$ - 1) and of its estimation error are used as the basis for the approximation of a time profile of a bearing trace with linear subelements as target motion model dynamics,
**in that** each predicted bearing angle ($\Theta^{pre}(k/k\text{-}1)$) is calculated from the sum of the bearing angle ($\Theta(k\text{-}1)$) determined most recently at the time $t = k$ -1 and a most recently determined bearing rate ($\dot{\Theta}(k\text{-}1)$), multiplied by the clock cycle (T), for the same bearing trace, and possibly each predicted intensity ($a^{pre}(k/k\text{-}1)$) is calculated from the sum of the intensity ($a(k\text{-}1)$) determined most recently at the time $t = k$ -1 and a most recently determined intensity rate ($\dot{a}(k\text{-}1)$), multiplied by the clock cycle (T), of the same bearing trace,
**in that** an association probability is in each case determined for association of a measured bearing angle ($\Theta^{mess}(k)$) and possibly a measured intensity ($a^{mess}(k)$) with one of the bearing traces,
**in that**, as a function of a determined association probability, a measured bearing angle ($\Theta^{mess}(k)$) and possibly a measured intensity ($a^{mess}(k)$) are calculated, together with a predicted bearing angle ($\Theta^{pre}(k/k\text{-}1)$) and possibly a predicted intensity ($a^{pre}(k/k\text{-}1)$), to form an estimated bearing angle ($\hat{\Theta}(k)$) and possibly an estimated intensity ($\hat{a}(k)$) at the time $t = k$,
and
the estimated value or values determined in this way, together with the estimated bearing rate and possibly estimated intensity rate, form the trace state vector ($\hat{x}(k/k)$) of the relevant bearing trace and, when a plurality of measured bearing angles and possibly a plurality of measured intensities are associated to form a bearing trace, the respective estimated values are added in a weighted form, forming the trace state vector ($\hat{x}(k/k)$) of this bearing trace, and this trace state vector ($\hat{x}(k/k)$) provides the output variables of the trace state vector, predicted in the next clock cycle (T), for the relevant bearing trace for prediction from $t = k$ to $t = k + 1$, and
**in that** bearing traces formed in this way are indicated as a function of a trace quality.

2. Direction-finding method according to Claim 1, **characterized in that** a trace quality (L), which is added over a predeterminable number of clock cycles, is calculated from the association probability, presetting a detection probability ($P_D$) and false alarm probability ($P_{FA}$) for a bearing angle and possibly an intensity with an angle interval (ΔΘ) between two adjacent direction characteristics, which trace quality (L) is compared with bounds ($T_1$) and ($T_2$) for initiation of a new bearing trace or for deletion of a bearing trace, wherein the bounds

$$\left(T_1 = \ln\left(\frac{\beta}{1-\alpha}\right), \quad T_2 = \ln\left(\frac{1-\beta}{\alpha}\right)\right)$$ are predetermined by predetermined probabilities (α, β) for the confirmation of a false bearing trace or the deletion of a true bearing trace, and **in that** the start of confirmed bearing traces indicates the detection of a target, and these bearing traces are indicated for target tracking.

3. Direction-finding method according to Claim 1 or 2, **characterized in that** the association probability of a measured bearing angle $\Theta^{mess}(k)$ and possibly a measured intensity $a^{mess}(k)$ are determined to form one of the bearing traces as a function of the bearing angle $\Theta^{pre}(k/k\text{-}1)$ predicted from $k\text{-}1$ to $k$, and possibly the intensity $a^{pre}(k/k\text{-}1)$ predicted from $k\text{ -}1$ to $k$, by a squared, normalized statistical interval

$$d_\Theta^2 = \frac{(\Theta^{pre}(k/k-1) - \Theta^{mess}(k))^2}{\sigma_\Theta^{2\,mess} + \sigma_{\hat\Theta}^2(k/k-1)}$$

respectively

$$d_a^2 = \frac{(a^{pre}(k/k-1) - a^{mess}(k))^2}{\sigma_a^{2\,mess} + \sigma_{\hat a}^2(k/k-1)}$$

wherein the squared bearing angle difference $(\Theta^{pre}(k/k\text{ -}1)\text{-}\Theta^{mess}(k))^2$ or squared intensity difference $(a^{pre}(k/k\text{ -}1)\text{-}a^{mess}(k))^2$ is related to the sum of the squared measurement error $\sigma_\Theta^{2\,mess}$ respectively $\sigma_a^{2\,mess}$ and the squared predicted estimation error $\sigma_{\hat\Theta}^2(k/k-1)$ respectively $\sigma_{\hat a}^2(k/k-1)$ of the bearing angle and intensity, respectively, and the association probability is a maximum when the squared, normalized statistical interval $d_\theta^2$ or $d_a^2$ is a minimum.

4. Direction-finding method according to one of the preceding claims, **characterized in that** the trace quality $L(k)$ of each bearing trace is determined on the basis of the trace quality $L(k\text{- }1)$ of the previous clock cycle and a quality increment $\Delta L$ to be:

$$L(k) = L(k-1) + \Delta L\ ,$$

wherein the quality increment $\Delta L$ of a detection probability $P_D$ for a real bearing angle in the angle interval $\Delta\Theta$ of the main reception direction of two directional characteristics is determined from a predeterminable density $\beta_{NT}$ of newly detected bearing angles $\Theta$ in each time interval in the azimuth panorama or azimuth sector, the angle interval $\Delta\Theta$, a false alarm probability $P_{FA}$ from a predeterminable density $\beta_{FT}$ of false alarms in the azimuth panorama or azimuth sector, and a square root of an error sum S from the squared measurement error ($\sigma_\Theta^{2\,mess}$ respectively $\sigma_a^{2\,mess}$) and the squared trace error ($\sigma_{\hat\Theta}^2(k/k)$ respectively $\sigma_{\hat a}^2(k/k)$) and the squared, normalized statistical interval ($d^2(k/k\text{ -}1)$) to be:

$$\Delta L = \ln\frac{P_D \cdot \Delta\Theta}{P_{FA}\sqrt{|S|}} - \frac{d^2(k/k-1) + M \cdot \ln 2\pi}{2}\ ,$$

where $M$ denotes a measurement vector dimensionality where $M = 1,2,3,...$ and the quality increment ($\Delta L$) is recalculated for each clock cycle and is added over all or a predeterminable number of clock cycles to form the most recently determined trace quality ($L(k\text{- }1)$).

5. Direction-finding method according to one of the preceding claims, **characterized in that** the array signals are processed in a narrowband form, an intensity is measured and a frequency is determined for each measured bearing angle, and each measurement vector therefore has a measured bearing angle, a measured intensity and a measured frequency, and each estimated trace state vector in each case has an estimated bearing angle, an estimated bearing rate, an estimated intensity, an estimated intensity rate, an estimated frequency and an estimated frequency rate.

6. Direction-finding method according to one of Claims 3 to 5, **characterized in that** the direction-finding antenna comprises a linear antenna, wherein the measurement error $\sigma_\theta mess$ of the bearing angle is a function of the currently measured bearing angle $\theta_j^{mess}(k)$ and the currently measured intensity $a_j^{mess}(k)$, the own course $\theta_0(k)$ of a watercraft which is fitted with or is towing the direction-finding antenna and a constant $\sigma_\theta^0$, as follows:

$$\sigma_{\theta mess} = \frac{\sigma_\theta^0}{\left|\sin(\theta_j^{mess}(k) - \theta_0(k))\right| \cdot \sqrt{a_j^{mess}(k)}}$$

where the index $j$ denotes a measurement obtained at the time $t = k$ of a total of $m(k)$ measurements, where $j = 1,..., m(k)$.

7. Direction-finding method according to one of the preceding claims, **characterized in that**, when a plurality of measured bearing angles and possibly measured intensities are associated to form a bearing trace, a state vector $x_i(k)$, a covariance matrix $P_i(k)$ for indication of an estimation error and an overall probability $c_i(k)$ are associated with a bearing trace i at a time $t=k$, wherein the state vector $x_i(k)$ is approximated from a weighted sum of a plurality of individual state vectors which are determined from a plurality $n_{i,hyp}(k)$ of interpretation hypotheses for association of measured bearing angles and possibly measured intensities and possibly measured frequencies with an already existing target trace, wherein $c_{i,j}(k), j =1,..., n_{i,hyp}(k)$ indicates the weights of the hypotheses, to be as follows:

$$x_i(k) = \frac{1}{c_i(k)} \sum_{j=1}^{n_{i,\text{hyp}}(k)} c_{i,j}(k) \, x_{i,j}(k),$$

where the overall probability $c_i(k)$ is determined to be:

$$c_i(k) = \sum_{j=1}^{n_{i,\text{hyp}}(k)} c_{i,j}(k)$$

and the covariance matrix $P_i(k)$ is determined to be:

$$P_i(k) = \frac{1}{c_i(k)} \sum_{j=1}^{n_{i,\text{hyp}}(k)} c_{i,j}(k)\left[P_{i,j}(k) + \left(x_{i,j}(k) - x_i(k)\right) \cdot \left(x_{i,j}(k) - x_i(k)\right)^{\mathsf{T}}\right].$$

8. Direction-finding method according to Claim 7, **characterized in that** the possible bearing traces are stored continuously in a bearing trace list, which bearing trace list has, for a bearing trace $i$ at the time $t = k$, a state vector $x_i(k)$, a covariance matrix $P_i(k)$, an overall probability $c_i(k)$ and a status indicator $SA_i(k)$ in order to indicate whether the bearing trace is confirmed or is provisional, and a counter $Z\ddot{A}_i(k)$, which is incremented or decremented as a function of the existence or non-existence of a sequential likelihood quotient test at the time $t = k$, and an indicator $IN_i(k)$ which indicates the bearing trace for which there is a possible resolution conflict with a confirmed bearing trace.

9. Direction-finding method according to Claim 7 or 8, **characterized in that** each bearing trace is investigated for the existence of a possible resolution conflict, which occurs when the two bearing traces of associated targets appear at essentially the same bearing angle,
wherein the existence of a resolution conflict is identified when the leading hypotheses, on the basis of the weight, of two bearing traces process the same measurement,
a resolution conflict is identified as having ended when a separation between a hypothesis from at least one of the two bearing traces and the leading hypothesis of a bearing trace confirmed in the last clock cycle is less than a predetermined value.

10. Direction-finding method according to Claim 9, **characterized in that**, if the confirmed bearing trace is no older than the resolution conflict, the confirmed bearing trace is linked to the history of that bearing trace which is associated with that hypothesis whose separation from the leading hypothesis is less than the predetermined value, wherein the confirmed bearing trace is rejected, or is removed from a bearing trace list, and the number of confirmed bearing traces is reduced by one.

11. Direction-finding method according to Claim 9 or 10, **characterized in that** if, for both of the bearing traces which are subject to a resolution conflict, a hypothesis exists whose separation from the leading hypothesis is less than a predetermined value, the bearing rate of both hypotheses from before the start of the resolution conflict is compared with the bearing rate of the currently found hypothesis of the confirmed track, and
if there is a match between the mathematical sign of the bearing rate from before the start of the resolution conflict of only one of the two hypotheses with the mathematical sign of the current hypothesis of the confirmed bearing trace, the confirmed bearing trace is linked to the history of the relevant bearing trace, the confirmed bearing trace is rejected, or is removed from the bearing trace list, and the number of confirmed bearing traces is reduced by one, and
if there is a match between the mathematical signs of the bearing rate from before the start of the resolution conflict of the two hypotheses with the mathematical sign of the current hypothesis of the confirmed bearing trace, the intensities of the bearing traces are compared, and
if the magnitude of the difference between the current intensity of the confirmed bearing trace and the intensity of one of the two bearing traces involved in the resolution conflict from before the start of the resolution conflict is less than the magnitude of the difference between the current intensity of the confirmed bearing trace and the intensity of the other of the two bearing traces involved in the resolution conflict from before the start of the resolution conflict, the confirmed bearing trace is linked to the history of the relevant bearing trace, the confirmed bearing trace is rejected, or is removed from the bearing trace list, and the number of confirmed bearing traces is reduced by one.

12. Direction-finding method according to one of the preceding claims in combination with Claim 5, **characterized in that** bearing traces of individual frequency lines are produced, wherein confirmed bearing traces of individual frequency lines are combined to form so-called multi-line bearing traces of a plurality of frequency lines for which the bearing and bearing rate match within a predetermined limit.

13. Direction-finding method according to Claim 12, **characterized in that** multi-line bearing traces are checked to determine whether the bearing or bearing rate of a specific bearing trace of an individual frequency line differs by more than a respective predetermined limit value from the bearing or the bearing rate of the respective multi-line bearing trace which has been calculated from the averaging of the bearing or bearing rate of all the bearing traces of individual frequency lines combined in this multi-line bearing trace and, if such a bearing trace of an individual frequency line is found, this is removed from the relevant multi-line bearing trace and is managed as a new multi-line bearing trace which, however, comprises only one frequency line, and all the further bearing traces of individual frequency lines which cannot be associated with existing multi-line bearing traces and cannot be combined with one another are managed in the same way as multi-line bearing traces with only one frequency line.

14. Direction-finding installation for detection and tracking of successive bearing angles (Θ) of sound-emitting targets over the entire azimuth panorama or a predeterminable azimuth sector, in particular for carrying out a direction-finding method according to one of Claims 1 to 13, having a direction-finding antenna (1) with a multiplicity of electroacoustic or optoacoustic transducers (2.1, 2.2, 2.n) for receiving sound waves and producing received signals, and having a beamformer, which is designed such that, in each clock cycle and separated by time intervals, it adds received signals of in each case all or a group of the transducers cophase to form array signals after a propagation time delay and/or phase shift as a function of their geometric arrangement with respect to a reference line (B), with each of which array signals a directional characteristic is associated with a main reception direction (I, II, III) which is associated with a bearing angle and is at right angles to the reference line (B), and having display means (4), which are designed to display intensities corresponding to the amplitude or the level of the array signals as a function of the bearing angle ($\Theta$) in each clock cycle ($T$) as an intensity plot, wherein intensity plots of successive clock cycles ($T$) in a waterfall plot show bearing traces of successive bearing angles, and preferred bearing traces can be marked by a tracker,

**characterized**

**in that** the direction-finding installation has a Kalman filter (5) in which starting from trace state vectors ($\hat{x}(k\text{-}1/k\text{-}1)$), which are determined at the time $t = k$ -1, are each associated with one bearing trace and each have a bearing angle ($\Theta$) as well as its time derivative, which is referred to as the bearing rate ($\dot{\Theta}$), and possibly an intensity ($a$) and its time derivative, which is referred to as the intensity rate ($\dot{a}$), and trace errors ($P(k\text{-}1/k\text{-}1)$), which are associated with the trace state vectors ($\hat{x}(k\text{-}1/k\text{-}1)$), trace state vectors ($x^{pre}(k/k\text{-}1)$), which are predicted for each bearing trace for the time $t = k$ and each have a predicted bearing angle ($\Theta^{pre}$) and its time derivative, which is referred to as the predicted bearing rate ($\dot{\Theta}^{pre}$), and possibly a predicted intensity ($a^{pre}$), and its time derivative which is referred to as the predicted intensity rate ($\dot{a}^{Pre}$), can be predicted together with predicted estimation errors in a prediction stage (5.1), wherein the prediction of each predicted trace state vector ($x^{pre}(k/k\text{-}1)$) and its estimation error are used as the basis for the approximation of a time profile of a bearing trace with linear subelements as target motion model dynamics,

wherein each predicted bearing angle ($\Theta^{pre}(k/k\text{-}1)$) can be calculated from the sum of the bearing angle ($\Theta(k\text{-}1)$) determined most recently at the time $t = k$-1 and a most recently determined bearing rate ($\dot{\Theta}(k\text{-}1)$), multiplied by the clock cycle ($T$), for the same bearing trace, and possibly each predicted intensity ($a^{pre}(k/k\text{-}1)$) can be calculated from the sum of the intensity ($a(k$ -1)$) determined most recently at the time $t = k$ -1 and a most recently determined intensity rate ($\dot{a}(k\text{-}1)$), multiplied by the clock cycle ($T$), of the same bearing trace,

**in that** the direction-finding installation has a measurement data association stage (8) which is designed such that it in each case determines an association probability of association of a measured bearing angle ($\Theta^{mess}(k)$) and possibly a measured intensity ($a^{mess}(k)$) for one of the bearing traces, wherein as a function of a determined association probability, a measured bearing angle ($\Theta^{mess}(k)$) and possibly a measured intensity ($a^{mess}(k)$) are calculated, together with a predicted bearing angle ($\Theta^{pre}(k/k\text{-}1)$) and possibly a predicted intensity ($a^{pre}(k/k\text{-}1)$)$,$ to form an estimated bearing angle ($\hat{\Theta}(k)$) and possibly an estimated intensity ($\hat{a}(k)$) at the time $t = k$, and the estimated value or values determined in this way, together with the estimated bearing rate and possibly estimated intensity rate, form the trace state vector ($\hat{x}(k/k)$) of the relevant bearing trace or, when a plurality of measured bearing angles and possibly a plurality of measured intensities are associated to form a bearing trace, the respective estimated values are added in a weighted form, forming the trace state vector ($\hat{x}(k/k)$) of this bearing trace, and this trace state vector ($\hat{x}(k/k)$) provides the output variables of the trace state vector, predicted in the next clock cycle ($T$), for the relevant bearing trace for prediction from $t = k$ to $t = k$ +1, and

**in that** the display means (13, 14, 4) are designed such that bearing traces formed in this way can be displayed as a function of a trace quality.

15. Direction-finding installation according to Claim 14, **characterized in that**, in order to predict the predicted state vector

$$x^{pre}(k\,/\,k-1) = \begin{bmatrix} \Theta^{pre}(k\,/\,k-1) \\ \dot{\Theta}^{pre}(k\,/\,k-1) \end{bmatrix} = F \cdot \hat{x}(k-1/\,k-1)$$

respectively

$$x^{pre}(k\,/\,k-1) = \begin{bmatrix} \Theta^{pre}(k\,/\,k-1) \\ \dot{\Theta}^{pre}(k\,/\,k-1) \\ a^{pre}(k\,/\,k-1) \\ \dot{a}^{pre}(k\,/\,k-1) \end{bmatrix} = F \cdot \hat{x}(k-1/\,k-1)$$

for the bearing trace, a predicted bearing angle ($\Theta^{pre}(k/k$ -1)$) and its estimated rate of change or bearing rate ($\dot{\Theta}^{pre}(k/k$-1)$) and possibly a predicted intensity ($a^{pre}(k/k$-1)$) and its rate of change ($\dot{a}^{pre}(k/k$ -1)$) are determined, corresponding to a linear subelement of a bearing trace from a trace vector ($\hat{x}(k\text{-}1/k\text{-}1)$) determined most recently at the time $t=k$-1 with the bearing angle ($\Theta(k\text{-}1/k\text{-}1)$) and possibly the trace intensity ($\hat{a}(k\text{-}1/k\text{-}1)$) and the most recently

determined bearing rate ($\dot{\Theta}(k\text{-}1/k\text{-}1)$) or intensity rate ($\dot{a}(k\text{-}1/k\text{-}1)$) multiplied by the clock cycle ($T$), to give:

$$\Theta^{pre}(k\,/\,k-1) = \hat{\Theta}(k-1/\,k-1) + \dot{\hat{\Theta}}(k-1/\,k-1)\cdot T$$

$$\dot{\Theta}^{pre}(k\,/\,k-1) = \dot{\hat{\Theta}}(k-1/\,k-1)$$

and possibly

$$a^{pre}(k\,/\,k-1) = \hat{a}(k-1/\,k-1) + \dot{\hat{a}}(k-1/\,k-1)\cdot T$$

$$\dot{a}^{pre}(k\,/\,k-1) = \dot{\hat{a}}(k-1/\,k-1),$$

**in that**, in a separation calculation stage (6) which is arranged downstream from the prediction stage (5.1) of the Kalman filter (5), association probabilities are determined of an association between the measured values ($z(k)$), measured at the time $t = k$, with measurement errors ($\sigma_\Theta^{2\,mess}$ respectively $\sigma_a^{2\,mess}$) of a measurement covariance matrix and the predicted state vectors ($x^{pre}(k/k\text{-}1)$) with the predicted bearing angles ($\Theta^{pre}(k/k\text{-}1)$) and possibly intensities ($\hat{a}^{pre}(k/k\text{-}1)$) with estimation errors ($P^{pre}(k/k\text{-}1)$) by determining a squared, normalized separation ($d_1^2$) between the difference ($y$) between the measurement vector ($z(k)$) and the predicted state vector with respect to the sum ($S$) of their errors,
**in that** the separation calculation stage (6) forms the feedback path from the Kalman filter (5) via a measurement data association stage (8), to a filter stage (5.2) of the Kalman filter (5),
**in that** a trace vector ($\hat{x}(k)$) for the time $t=k$ for each bearing trace

$$\hat{x}(k\,/\,k) = x^{pre}(k\,/\,k-1) + K(k)\big[z(k) - Hx^{pre}(k\,/\,k-1)\big]$$

is estimated in the filter stage (5.2) from the predicted state vector ($x^{pre}(k/k\text{-}1)$) and its estimation error ($P^{pre}(k/k\text{-}1)$) and the measured values ($z^{mess}(k)$) and their measurement covariance matrix ($R$) using the measurement matrix

$$H = \begin{bmatrix} 1 & 0 & 0 & 0 \\ 0 & 0 & 1 & 0 \end{bmatrix}$$

and the matrix

$$K(k) = P^{pre}(k\,/\,k-1)H^T\big[H\cdot P^{pre}(k\,/\,k-1)\cdot H^T + R\big]^{-1}$$

and the covariance matrix of the trace error is determined to be:

$$\hat{P}(k\,/\,k) = \big[I - K(k)H\big]\cdot P^{pre}(k\,/\,k-1)\cdot\big[I - K(k)H\big]^T + K(k)\cdot R\cdot K(k)^T$$

with the unit matrix $I$,

**in that** the next predicted state vector ($x^{pre}(k +1/k)$) and the next predicted estimation error ($P^{pre}(k +1/k)$) are predicted therefrom in the next clock cycle for the time $t = k + 1$ in the prediction stage (5.1) of the Kalman filter (5).

16. Direction-finding installation according to Claim 14 or 15, **characterized in that**, in order to determine the association probability of an association of the measured value ($z(k)$) measured at the time ($k$) with the measurement error ($R$) and the predicted state vector ($x^{pre}(k/k\text{-}1)$) and estimation error ($P^{pre}(k/k\text{-}1)$), the separation calculation stage (6) is followed by a trace quality calculator (9) having a calculation stage (11) provided on the input side in order to calculate the likelihood quotient as the trace quality ($L$), the detection probability ($P_D$) and false alarm probability ($P_{FA}$) of a bearing angle in the angle separation ($\Delta\Theta$) of the main reception direction of two adjacent directional characteristics are predetermined at the further inputs thereof, and a downstream bound comparison device (12), at whose inputs probabilities $\alpha$ and $\beta$ are predetermined for confirmation of a false trace or deletion of a true trace, **in that** the trace quality ($L$) at the output of the calculation stage (11) is compared in the bound comparison device (12) with an upper and a lower bound ($T_2$, $T_1$) for addition of the bearing angle ($\hat{\Theta}(k/k)$) and possibly the trace intensity ($\hat{a}(k/k)$) to form a provisional and/or confirmed bearing trace, in order to initiate a new bearing trace or in order to delete the bearing trace, **in that** the bearing angles ($\hat{\Theta}(k/k)$) and possibly trace intensities ($\hat{a}(k/k)$) at the output of the Kalman filter (5), together with the output signal from the bound comparison arrangement (12) for the associated trace qualities ($L$) are passed to a register (13) for bearing traces, **in that** bearing angle ($\Theta(k/k)$) and possibly trace intensity ($a(k/k)$) is connected via a port (14), which can be controlled by the bound comparison arrangement (12), to the display means (4) on which the bearing traces are displayed.

17. Direction-finding installation according to one of Claims 14 to 16, **characterized in that** a squared, normalized statistical separation ($d^2(k/k\text{-}1)$)

$$d^2(k/k-1) = y^T(k/k-1)\cdot S^{-1}(k/k-1)\cdot y(k/k-1)$$

where

$$y(k/k-1) = z(k) - H\hat{x}^{pre}(k/k-1)$$

is determined in the separation calculation stage (6) for testing the association probability of the association of a measured bearing angle ($\Theta^{mess}(k)$) and possibly a measured intensity ($a^{mess}(k)$) to form a bearing trace using the global nearest neighbor method, wherein the squared bearing angle difference is related to the error sum ($S(k/k\text{-}1)$) of the measurement error ($R$) and the estimation error ($P^{pre}(k/k\text{-}1)$) predicted from $t = k$ -1 to $t = k$ , and the probability of the association is a maximum when the squared, normalized statistical separation ($d^2$) is a minimum.

18. Direction-finding installation according to Claim 17, **characterized in that** a gate circuit (7) is provided between the separation calculation stage (6) and the measurement data association stage (8), for comparison of the squared normalized statistical separation ($d^2$) between the measured value and the predicted estimated value with a predeterminable gate value, **in that** the gate circuit (7) prevents the squared, normalized statistical separation ($d^2$) being passed on at the output of the separation calculation stage (6) if this separation is greater than a predetermined gate value, **in that** the gate value G is determined using:

$$G = 2\cdot\ln\frac{P_D\cdot\Delta\Theta}{(1-P_D)\cdot(2\pi)^{M/2}P_{FA}\sqrt{|S|}}$$

by presetting a detection probability ($P_D$) for a real bearing angle in the angle separation ($\Delta\Theta$) of the main reception direction of two adjacent directional characteristics and a false alarm probability ($P_{FA}$) taking account of the sum of the squared measurement error ($\sigma_\Theta^{2\,mess}$) and estimation error ($P_\Theta^{pre}(k/k-1)$), where $M$ denotes a measurement vector dimensionality, where $M$ = 1,2,3....

**Revendications**

1. Procédé de relèvement pour détecter et suivre des angles de relèvement ($\Theta$) successifs dans le temps de cibles rayonnant du son sur l'ensemble du panorama azimutal ou un secteur azimutal prédéfinissable avec une antenne de relèvement (1) munie d'une pluralité de convertisseurs électroacoustiques ou optoacoustiques (2.1, 2.2, 2.n) destinés à recevoir des ondes sonores et à générer des signaux de réception, à chaque cycle temporel et à des intervalles de temps donnés, les signaux de réception respectifs de la totalité ou d'un groupe de convertisseurs étant additionnés de manière cophasée d'après le retard de temps de propagation et/ou le déphasage en fonction de leur disposition géométrique par rapport à une ligne de référence (B) pour former des signaux groupés, lesquels sont respectivement accompagnés d'une caractéristique directionnelle ayant une direction de réception principale (I, II, III) associée à un angle de relèvement perpendiculaire à la ligne de référence (B), et les intensités sont affichées conformément à l'amplitude ou au niveau des signaux groupés en fonction de l'angle de relèvement ($\Theta$) par cycle temporel ($T$) sous la forme de tracés d'intensité, les tracés d'intensité de cycles temporels ($T$) successifs indiquant dans une représentation en cascade les traces de relèvement d'angles de relèvement qui se suivent dans le temps et les traces de relèvement préférentielles étant marquées par un traceur,
   **caractérisé en ce**
   **qu'**à partir de vecteurs d'état de trace ($\hat{x}(k\text{-}1/k\text{-}1)$) déterminés à l'instant $t=k\text{-}1$ et respectivement associés à une trace de relèvement, lesquels présentent respectivement un angle de relèvement ($\Theta$) ainsi que sa dérivée dans le temps appelée taux de relèvement ($\dot{\Theta}$) et éventuellement une intensité (a) ainsi que sa dérivée dans le temps appelée taux d'intensité ($\dot{a}$), et d'erreurs de trace associées aux vecteurs d'état de trace ($\hat{x}(k\text{-}1/k\text{-}1)$) pour l'instant $t = k$, des vecteurs d'état de trace prédits ($x^{pre}(k/k\text{-}1)$), lesquels présentent respectivement un angle de relèvement prédit ($\Theta^{pre}$) ainsi que sa dérivée dans le temps appelée taux de relèvement prédit ($\Theta^{pre}$) et éventuellement une intensité prédite ($a^{pre}$) ainsi que sa dérivée dans le temps appelée taux d'intensité prédit ($\dot{a}^{pre}$), sont prédits conjointement avec des erreurs d'estimation prédites,
   **que** la prédiction de chaque vecteur d'état de trace prédit ($x^{pre}(k/k\text{-}1)$) et de son erreur d'estimation sert de base pour l'approximation d'une évolution dans le temps d'une trace de relèvement aux portions rectilignes sous la forme d'un modèle dynamique de déplacement de la cible,
   **que** chaque angle de relèvement prédit ($\Theta^{pre}(k/k\text{-}1)$) est calculé à partir de la somme de l'angle de relèvement ($\Theta$ ($k\text{-}1$)) déterminé en dernier à l'instant $t=k\text{-}1$ et d'un taux de relèvement ($\dot{\Theta}(k\text{-}1)$) déterminé en dernier et multiplié par le cycle temporel ($T$) de la même trace de relèvement et éventuellement chaque intensité prédite ($a^{pre}(k/k\text{-}1)$) est calculée à partir de la somme de l'intensité ($a(k\text{-}1)$) déterminée en dernier à l'instant $t=k\text{-}1$ et d'un taux d'intensité ($\dot{a}(k\text{-}1)$) déterminé en dernier et multiplié par le cycle temporel ($T$) de la même trace de relèvement,
   **qu'**une probabilité d'association d'une association d'un angle de relèvement mesuré ($a^{mess}(k)$) et éventuellement d'une intensité mesurée ($a^{mess}(k)$) avec l'une des traces de relèvement est déterminée à chaque fois,
   **qu'**un angle de relèvement mesuré ($\Theta^{mess}(k)$) et éventuellement une intensité mesurée ($a^{mess}(k)$), conjointement avec un angle de relèvement prédit ($\Theta^{pre}(k/k\text{-}1)$) et éventuellement une intensité prédite ($a^{pre}(k/k\text{-}1)$) sont convertis en fonction d'une probabilité d'association déterminée en un angle de relèvement estimé ($\hat{\Theta}(k)$) et éventuellement une intensité estimée ($\hat{a}(k)$) à l'instant $t = k$ et
   la ou les valeurs d'estimation ainsi déterminées, conjointement avec les taux de relèvement estimés et éventuellement les taux d'intensité estimés, forment le vecteur d'état de trace ($\hat{x}(k/k)$) de la trace de relèvement concernée ou, dans le cas de l'association de plusieurs angles de relèvement mesurés et éventuellement de plusieurs intensités mesurées à une trace de relèvement, les valeurs d'estimation respectives sont additionnées de manière pondérée et forment le vecteur d'état de trace ($\hat{x}(k/k)$) de cette trace de relèvement et ce vecteur d'état de trace ($\hat{x}(k/k)$) fournit les grandeurs initiales du vecteur d'état de trace prédit au cycle temporel ($T$) suivant de la trace de relèvement concernée en vue de la prédiction de $t = k$ à $t = k + 1$ et
   **que** les traces de relèvement ainsi formées sont affichées en fonction d'une qualité de trace.

2. Procédé de relèvement selon la revendication 1, **caractérisé en ce qu'**une qualité de trace ($L$) additionnée sur un nombre prédéfinissable de cycles temporels est calculée à partir de la probabilité d'association en indiquant une probabilité de détection ($P_D$) et une probabilité d'alarme intempestive ($P_{FA}$) pour un angle de relèvement et éventuellement une intensité dans un écart angulaire ($\Delta\Theta$) de deux caractéristiques directionnelles voisines, laquelle qualité de trace est comparée avec des limites ($T_1$) et ($T_2$) en vue d'induire une nouvelle trace de relèvement ou en vue d'effacer une trace de relèvement, les limites ($T_1 = \ln\left(\dfrac{\beta}{1-\alpha}\right), T_2 = \ln\left(\dfrac{1-\beta}{\alpha}\right)$) étant prédéfinies par des probabilités ($\alpha$, $\beta$) prédéfinies de confirmation d'une trace de relèvement erronée ou d'effacement d'une trace de relèvement correcte et **en ce que** le début de traces de relèvement confirmées indique la détection d'une cible et ces traces de relèvement sont affichées pour le suivi de la cible.

3. Procédé de relèvement selon la revendication 1 ou 2, **caractérisé en ce que** la probabilité d'association d'un angle de relèvement mesuré $\Theta^{mess}(k)$ et éventuellement d'une intensité mesurée $a^{mess}(k)$ à l'une des traces de relèvement est déterminée en fonction de l'angle de relèvement prédit $\Theta^{pre}(k/k\text{-}1)$ de $k$-1 à $k$ et éventuellement de l'intensité prédite $a^{pre}(k/k\text{-}1)$ de $k$ -1 à $k$ par un écart statistique normalisé élevé au carré

$$d_\Theta^2 = \frac{(\Theta^{pre}(k/k-1) - \Theta^{mess}(k))^2}{\sigma_\Theta^{2\,mess} + \sigma_{\hat{\Theta}}^2(k/k-1)}$$

ou

$$d_a^2 = \frac{(a^{pre}(k/k-1) - a^{mess}(k))^2}{\sigma_a^{2\,mess} + \sigma_{\hat{a}}^2(k/k-1)}$$

la différence des angles de relèvement élevée au carré $(\Theta^{pre}(k/k\text{-}1)\text{-}\Theta^{mess}(k))^2$ ou la différence des intensités élevée au carré $(a^{pre}(k/k\text{-}1)\text{-}a^{mess}(k))^2$ se rapportant à la somme du carré de l'erreur de mesure $\sigma_\Theta^{2\,mess}$ ou $\sigma_a^{2\,mess}$ avec le carré de l'erreur d'estimation prédite $\sigma_{\hat{\Theta}}^2(k/k-1)$ ou $\sigma_{\hat{a}}^2(k/k-1)$ de l'angle de relèvement ou de l'intensité et la probabilité d'association étant la plus grande lorsque l'écart statistique normalisé élevé au carré $d_\theta^2$ ou $d_a^2$ est le plus faible.

4. Procédé de relèvement selon l'une des revendications précédentes, **caractérisé en ce que** la qualité de trace $L$ ($k$) de chaque trace de relèvement est déterminée à partir de la qualité de trace $L(k$ - 1) du cycle temporel précédent et d'un incrément de qualité $\Delta L$ sous la forme

$$L(k) = L(k-1) + \Delta L \ ,$$

l'incrément de qualité $\Delta L$ d'une probabilité de détection $P_D$ pour un angle de relèvement réel à l'écart angulaire $\Delta\Theta$ de la direction de réception principale de deux caractéristiques directionnelles étant déterminé à partir d'une densité $\beta_{NT}$ prédéfinissable d'un angle de relèvement $\Theta$ nouvellement détecté à chaque intervalle de temps dans le panorama azimutal ou le secteur azimutal, de l'écart angulaire $\Delta\Theta$, celui d'une probabilité d'alarme intempestive $P_{FA}$ étant déterminé à partir d'une densité $\beta_{FT}$ prédéfinissable d'alarmes intempestives dans le panorama azimutal ou le secteur azimutal et de la racine d'une sommes des erreurs S du carré de l'erreur de mesure ($\sigma_\Theta^{2\,mess}$ ou $\sigma_a^{2\,mess}$) et du carré de l'erreur de trace ($\sigma_{\hat{\Theta}}^2(k/k)$ ou $\sigma_{\hat{a}}^2(k/k)$) et de l'écart statistique normalisé élevé au carré ($d^2(k/k$ - 1)) sous la forme

$$\Delta L = \ln \frac{P_D \cdot \Delta\Theta}{P_{FA}\sqrt{|S|}} - \frac{d^2(k/k-1) + M \cdot \ln 2\pi}{2}$$

*M* désignant ici une dimension du vecteur de mesure avec *M* = 1, 2, 3, ... et l'incrément de qualité ($\Delta L$) étant recalculé pour chaque cycle temporel et additionné à la qualité de trace déterminée en dernier (*L* (*k*- 1)) sur la totalité ou un nombre prédéfinissable de cycles temporels.

5. Procédé de relèvement selon l'une des revendications précédentes, **caractérisé en ce que** les signaux groupés sont traités en bande étroite, une intensité est mesurée et une fréquence est définie pour chaque angle de relèvement mesuré et chaque vecteur de mesure présente ainsi un angle de relèvement mesuré, une intensité mesurée et une fréquence mesurée et chaque vecteur d'état de trace estimé présente à chaque fois un angle de relèvement estimé, un taux de relèvement estimé, une intensité estimée, un taux d'intensité estimé, une fréquence estimée et un taux de fréquence estimé.

6. Procédé de relèvement selon l'une des revendications 3 à 5, **caractérisé en ce que** l'antenne de relèvement comprend une antenne linéaire, l'erreur de mesure $\alpha_\theta{}^{mess}$ de l'angle de relèvement étant dépendante de l'angle de relèvement mesuré actuellement $\theta_j^{mess}(k)$ et de l'intensité mesurée actuellement $a_j^{mess}(k)$, de la route propre $\theta_0(k)$ d'un navire qui transporte ou qui remorque l'antenne de relèvement ou d'une constante $\sigma_\theta^0$ conformément à

$$\sigma_{\theta^{mess}} = \frac{\sigma_\theta^0}{\left|\sin(\theta_j^{mess}(k) - \theta_0(k))\right| \cdot \sqrt{a_j^{mess}(k)}},$$

l'indice j désignant une mesure obtenue à l'instant *t = k* d'un ensemble de *m(k)* mesures, avec *j* =1,...,*m(k)*.

7. Procédé de relèvement selon l'une des revendications précédentes, **caractérisé en ce que** lors de l'association de plusieurs angles de relèvement mesurés et éventuellement d'intensités mesurées à une trace de relèvement, un vecteur d'état $x_i(k)$, une matrice de covariance $P_i(k)$ destinée à indiquer une erreur d'estimation et une probabilité totale $c_i(k)$ sont associés à une trace de relèvement *i* à un instant *t=k,* le vecteur d'état $x_i(k)$ étant obtenu approximativement à partir d'une somme pondérée de plusieurs vecteurs d'état individuels qui sont déterminés à partir d'une pluralité $n_{i,hyp}(k)$ d'hypothèses d'interprétation pour une association d'angles de relèvement mesurés et éventuellement d'intensités mesurées et éventuellement de fréquences mesurées à une trace de cible déjà existante, $c_{i,j}(k)$, *j* =1,..., $n_{i,hyp}(k)$ indiquant les poids des hypothèses, et ce conformément à

$$x_i(k) = \frac{1}{c_i(k)} \sum_{j=1}^{n_{i,\mathrm{hyp}}(k)} c_{i,j}(k)\, x_{i,j}(k),$$

la probabilité totale $c_i(k)$ étant déterminée sous la forme

$$c_i(k) = \sum_{j=1}^{n_{i,\mathrm{hyp}}(k)} c_{i,j}(k)$$

et la matrice de covariance $P_i(k)$ étant déterminée sous la forme

$$P_i(k) = \frac{1}{c_i(k)} \sum_{j=1}^{n_{i,\text{hyp}}(k)} c_{i,j}(k)\left[P_{i,j}(k) + \left(x_{i,j}(k) - x_i(k)\right)\cdot\left(x_{i,j}(k) - x_i(k)\right)^{\mathsf{T}}\right].$$

**8.** Procédé de relèvement selon la revendication 7, **caractérisé en ce que** les traces de relèvement possibles sont continuellement consignées dans une liste de traces de relèvement, laquelle présente, pour une trace de relèvement $i$ à l'instant $t=k$, un vecteur d'état $x_i(k)$, une matrice de covariance $P_i(k)$, une probabilité totale $c_i(k)$ ainsi qu'un indicateur d'état $SA_i(k)$ pour indiquer si la trace de relèvement est confirmée ou provisoire et aussi un compteur $Z\ddot{A}_i(k)$ qui est incrémenté ou décrémenté en fonction de la présence ou de l'absence d'un test de quotient de probabilité séquentiel à l'instant $t = k$ et un indicateur $IN_i(k)$, lequel indique la trace de relèvement avec laquelle une trace de relèvement confirmée se trouve dans un possible conflit de résolution.

**9.** Procédé de relèvement selon la revendication 7 ou 8, **caractérisé en ce que** chaque trace de relèvement est analysée en vue de détecter la présence d'un éventuel conflit de résolution, lequel est alors présent lorsque les cibles associées à deux traces de relèvement apparaissent sous un angle de relèvement sensiblement identique, la présence d'un conflit de résolution étant constatée lorsque les hypothèses de deux traces de relèvement dont les poids sont les plus importants traitent la même mesure,
un conflit de résolution étant reconnu terminé lorsqu'un écart entre une hypothèse d'au moins l'une des deux traces de relèvement et l'hypothèse la plus importante d'une trace de relèvement confirmée dans le dernier cycle est inférieur à une valeur prédéterminée.

**10.** Procédé de relèvement selon la revendication 9, **caractérisé en ce que** sous réserve que la trace de relèvement n'est pas plus ancienne que le conflit de résolution, la trace de relèvement confirmée est combinée avec le passé de la trace de relèvement à laquelle est associée l'hypothèse dont l'écart par rapport à l'hypothèse la plus importante est inférieur à la valeur prédéterminée, la trace de relèvement confirmée étant rejetée ou supprimée d'une liste des traces de relèvement et le nombre de traces de relèvement confirmées étant réduit de un.

**11.** Procédé de relèvement selon la revendication 9 ou 10, **caractérisé en ce que** sous réserve qu'il existe, pour les deux traces de relèvement se trouvant dans un conflit de résolution, une hypothèse qui présente par rapport à l'hypothèse la plus importante un écart inférieur à une valeur prédéterminée, le taux de relèvement des deux hypothèses d'avant le début du conflit de résolution est comparé avec le taux de relèvement de l'hypothèse trouvée actuellement de la route confirmée et
en cas de concordance du signe du taux de relèvement d'avant le début du conflit de résolution d'une seule des deux hypothèses avec le signe de l'hypothèse actuelle de la trace de relèvement confirmée, la trace de relèvement confirmée est combinée avec le passé de la trace de relèvement concernée, la trace de relèvement confirmée est rejetée ou supprimée de la liste des traces de relèvement et le nombre de traces de relèvement confirmées est réduit de un et en cas de concordance du signe du taux de relèvement d'avant le début du conflit de résolution des deux hypothèses avec le signe de l'hypothèse actuelle de la trace de relèvement confirmée, les intensités des traces de relèvement sont comparées et
si le montant de la différence de l'intensité actuelle de la trace de relèvement confirmée et de l'intensité de l'une des deux traces de relèvement qui se trouvent en conflit de résolution d'avant le début du conflit de résolution est inférieur au montant de la différence de l'intensité actuelle de la trace de relèvement confirmée et de l'intensité de l'autre des deux traces de relèvement qui se trouvent en conflit de résolution d'avant le début du conflit de résolution, la trace de relèvement confirmée est combinée avec le passé de la trace de relèvement concernée, la trace de relèvement confirmée est rejetée ou supprimée de la liste des traces de relèvement et le nombre de traces de relèvement confirmées est réduit de un.

**12.** Procédé de relèvement selon l'une des revendications précédentes en combinaison avec la revendication 5, **caractérisé en ce que** les traces de relèvement des lignes de fréquence individuelles sont générées, les traces de relèvement confirmées des lignes de fréquence individuelles étant combinées en traces de relèvement dites à lignes multiples d'une pluralité de lignes de fréquence pour lesquelles le relèvement et le taux de relèvement coïncident à l'intérieur d'un cadre prédéfini.

**13.** Procédé de relèvement selon la revendication 12, **caractérisé en ce que** les traces de relèvement à lignes multiples sont soumises à un contrôle pour vérifier si le relèvement ou le taux de relèvement d'une trace de relèvement donnée d'une ligne de fréquence individuelle présente un écart supérieur à une valeur limite respective prédéterminée par rapport au relèvement ou au taux de relèvement de la trace de relèvement à lignes multiples respective qui a été calculée à partie de la moyenne du relèvement ou du taux de relèvement de toutes les traces de relèvement des lignes de fréquence individuelles regroupées dans cette trace de relèvement à lignes multiples et, dans la mesure où une telle trace de relèvement d'une ligne de fréquence individuelle est découverte, celle-ci est supprimée de la trace de relèvement à lignes multiples concernée et gérée comme une nouvelle trace de relèvement à lignes multiples, laquelle ne se compose cependant que d'une seule ligne de fréquences, et toutes les autres traces de relèvement des lignes de fréquence individuelles qui ne peuvent pas être associées aux traces de relèvement à lignes multiples existantes et qui ne peuvent pas être combinées entre elles sont également gérées comme des traces de relèvement à lignes multiples n'ayant qu'une seule ligne de fréquence.

**14.** Équipement de relèvement pour détecter et suivre des angles de relèvement ($\Theta$) successifs dans le temps de cibles rayonnant du son sur l'ensemble du panorama azimutal ou un secteur azimutal prédéfinissable, notamment pour mettre en oeuvre un procédé de relèvement selon l'une des revendications 1 à 13, comprenant une antenne de relèvement (1) munie d'une pluralité de convertisseurs électroacoustiques ou optoacoustiques (2.1, 2.2, 2.n) destinés à recevoir des ondes sonores et à générer des signaux de réception et comprenant un formateur directionnel qui est configuré de telle sorte qu'à chaque cycle temporel et à des intervalles de temps donnés, il additionne les signaux de réception respectifs de la totalité ou d'un groupe de convertisseurs de manière cophasée d'après le retard de temps de propagation et/ou le déphasage en fonction de leur disposition géométrique par rapport à une ligne de référence (B) pour former des signaux groupés, lesquels sont respectivement accompagnés d'une caractéristique directionnelle ayant une direction de réception principale (I, II, III) associée à un angle de relèvement perpendiculaire à la ligne de référence (B), et comprenant des moyens d'affichage (4) qui sont configurés pour afficher les intensités conformément à l'amplitude ou au niveau des signaux groupés en fonction de l'angle de relèvement ($\Theta$) par cycle temporel ($T$) sous la forme de tracés d'intensité, les tracés d'intensité de cycles temporels ($T$) successifs indiquant dans une représentation en cascade les traces de relèvement d'angles de relèvement qui se suivent dans le temps et les traces de relèvement préférentielles pouvant être marquées par un traceur,

**caractérisé en ce**

**que** l'équipement de relèvement présente un filtre de Kalman (5) dans lequel, à partir des vecteurs d'état de trace ($\hat{x}(k-1/k-1)$) déterminés à l'instant $t = k-1$ et respectivement associés à une trace de relèvement, lesquels présentent respectivement un angle de relèvement ($\Theta$) ainsi que sa dérivée dans le temps appelée taux de relèvement ($\dot{\Theta}$) et éventuellement une intensité ($a$) ainsi que sa dérivée dans le temps appelée taux d'intensité ($\dot{a}$), et des erreurs de trace ($\hat{P}(k-1/k-1)$) associées aux vecteurs d'état de trace ($\hat{x}(k-1/k-1)$), les vecteurs d'état de trace prédits ($x^{pre}(k/k-1)$) de chaque trace de relèvement, lesquels présentent respectivement un angle de relèvement prédit ($\Theta^{pre}$) ainsi que sa dérivée dans le temps appelée taux de relèvement prédit ($\dot{\Theta}^{pre}$) et éventuellement une intensité prédite ($a^{pre}$) ainsi que sa dérivée dans le temps appelée taux d'intensité prédit ($\dot{a}^{pre}$), peuvent être prédits dans un étage de prédiction (5.1) pour l'instant $t = k$ conjointement avec des erreurs d'estimation prédites, la prédiction de chaque vecteur d'état de trace prédit ($x^{pre}(k/k-1)$) et de son erreur d'estimation servant de base pour l'approximation d'une évolution dans le temps d'une trace de relèvement aux portions rectilignes sous la forme d'un modèle dynamique de déplacement de la cible,

chaque angle de relèvement prédit ($x^{pre}(k/k-1)$) pouvant être calculé à partir de la somme de l'angle de relèvement ($\Theta(k-1)$) déterminé en dernier à l'instant $t=k-1$ et d'un taux de relèvement ($\dot{\Theta}(k-1)$) déterminé en dernier et multiplié par le cycle temporel ($T$) de la même trace de relèvement et éventuellement chaque intensité prédite ($a^{pre}(k/k-1)$) pouvant être calculée à partir de la somme de l'intensité ($a(k-1)$) déterminée en dernier à l'instant $t=k-1$ et d'un taux d'intensité ($\dot{a}(k-1)$) déterminé en dernier et multiplié par le cycle temporel ($T$) de la même trace de relèvement,

**que** l'équipement de relèvement présente un étage d'association des données mesurées (8) qui est configuré de telle sorte qu'il détermine à chaque fois une probabilité d'association d'une association d'un angle de relèvement mesuré ($\Theta^{mess}(k)$) et éventuellement d'une intensité mesurée ($a^{mess}(k)$) avec l'une des traces de relèvement, un angle de relèvement mesuré ($\Theta^{mess}(k)$) et éventuellement une intensité mesurée ($a^{mess}(k)$), conjointement avec un angle de relèvement prédit ($\Theta^{pre}(k/k-1)$) et éventuellement une intensité prédite ($a^{pre}(k/k-1)$), sont convertis en fonction d'une probabilité d'association déterminée en un angle de relèvement estimé ($\hat{\Theta}(k)$) et éventuellement une intensité estimée ($\hat{a}(k)$) à l'instant $t = k$ et la ou les valeurs d'estimation ainsi déterminées, conjointement avec les taux de relèvement estimés et éventuellement les taux d'intensité estimés, forment le vecteur d'état de trace ($\hat{x}(k/k)$) de la trace de relèvement concernée ou, dans le cas de l'association de plusieurs angles de relèvement mesurés et éventuellement de plusieurs intensités mesurées à une trace de relèvement, les valeurs d'estimation respectives sont additionnées de manière pondérée et forment le vecteur d'état de trace ($\hat{x}(k/k)$) de cette trace de relèvement et ce vecteur d'état de trace ($\hat{x}(k/k)$) fournit les grandeurs initiales du vecteur d'état de trace prédit au cycle temporel (*T*) suivant de la trace de relèvement concernée en vue de la prédiction de *t* = *k* à *t* = *k* + 1 et
**que** les moyens d'affichage (13, 14, 4) sont configurés de telle sorte que les traces de relèvement ainsi formées peuvent être affichées en fonction d'une qualité de trace.

**15.** Équipement de relèvement selon la revendication 14, **caractérisé en ce que** pour la prédiction du vecteur d'état prédit

$$x^{pre}(k/k-1) = \begin{bmatrix} \Theta^{pre}(k/k-1) \\ \dot{\Theta}^{pre}(k/k-1) \end{bmatrix} = F \cdot \hat{x}(k-1/k-1)$$

ou

$$x^{pre}(k/k-1) = \begin{bmatrix} \Theta^{pre}(k/k-1) \\ \dot{\Theta}^{pre}(k/k-1) \\ a^{pre}(k/k-1) \\ \dot{a}^{pre}(k/k-1) \end{bmatrix} = F \cdot \hat{x}(k-1/k-1)$$

pour la trace de relèvement, un angle de relèvement prédit ($\Theta^{pre}(k/k\text{-}1)$) et sa variation dans le temps ou taux de relèvement ($\dot{\Theta}^{pre}(k/k\text{-}1)$) estimé(e) et éventuellement une intensité prédite ($a^{pre}(k/k\text{-}1)$) et sa variation dans le temps ($\dot{a}^{pre}(k/k\text{-}1)$) sont déterminés conformément à une portion rectiligne d'une trace de relèvement, à partir d'un vecteur de trace ($\hat{x}(k\text{-}1/k\text{-}1)$) déterminé en dernier à l'instant *t* = *k*-1 avec l'angle de relèvement ($\hat{\Theta}(k\text{-}1/k\text{-}1)$) et éventuellement l'intensité de trace ($\hat{a}(k\text{-}1/k\text{-}1)$) et le taux de relèvement ($\dot{\hat{\Theta}}(k\text{-}1/k\text{-}1)$) ou le taux d'intensité ($\dot{\hat{a}}(k\text{-}1/k\text{-}1)$) déterminé en dernier et multiplié par le cycle temporel (*T*), sous la forme

$$\Theta^{pre}(k/k-1) = \hat{\Theta}(k-1/k-1) + \dot{\hat{\Theta}}(k-1/k-1) \cdot T$$

$$\dot{\Theta}^{pre}(k/k-1) = \dot{\hat{\Theta}}(k-1/k-1)$$

ou éventuellement

$$a^{pre}(k/k-1) = \hat{a}(k-1/k-1) + \dot{\hat{a}}(k-1/k-1) \cdot T$$

$$\dot{a}^{pre}(k/k-1) = \dot{\hat{a}}(k-1/k-1)$$

**en ce que** dans l'un des étages de calcul de l'écart (6) disposés à la suite de l'étage de prédiction (5.1) du filtre de Kalman (5), les probabilités d'association d'une association entre les valeurs mesurées (*z*(*k*)) mesurées à l'instant *t* = *k* ayant les erreurs de mesure ($\sigma_\Theta^{2\,mess}$ ou $\sigma_a^{2\,mess}$) d'une matrice de covariance et les vecteurs d'état prédits ($x^{pre}(k/k\text{-}1)$) ayant les angles de relèvement prédits ($\Theta^{pre}(k/k\text{-}1)$) et éventuellement les intensités ($\hat{a}^{pre}(k/k\text{-}1)$) ayant les erreurs d'estimation ($P^{pre}(k/k\text{-}1)$) sont déterminées en déterminant un écart normalisé élevé au carré ($d_1^2$) entre la différence (*y*) du vecteur de mesure (*z*(*k*)) et le vecteur d'état prédit rapportée à la somme (*S*) de ses erreurs,

**en ce que** les étages de calcul de l'écart (6) forment, par le biais d'un étage d'association des données mesurées (8), la branche de retour du filtre de Kalman (5) pour un étage de filtrage (5.2) du filtre de Kalman (5),

**en ce que** dans l'étage de filtrage (5.2), à partir du vecteur d'état prédit ($x^{pre}(k/k$-1)) et de son erreur d'estimation ($P^{pre}(k/k$-1)) et des valeurs mesurées ($z^{mess}(k)$) et leur matrice de covariance de mesure ($R$) est estimé un vecteur de trace ($\hat{x}(k)$) pour l'instant $t = k$ de chaque trace de relèvement

$$\hat{x}(k/k) = x^{pre}(k/k-1) + K(k)\left[z(k) - Hx^{pre}(k/k-1)\right]$$

avec la matrice de mesure

$$H = \begin{bmatrix} 1 & 0 & 0 & 0 \\ 0 & 0 & 1 & 0 \end{bmatrix}$$

et la matrice

$$K(k) = P^{pre}(k/k-1)H^T\left[H \cdot P^{pre}(k/k-1) \cdot H^T + R\right]^{-1}$$

et aussi la matrice de covariance de l'erreur de trace est déterminée sous la forme

$$\hat{P}(k/k) = \left[I - K(k)H\right] \cdot P^{pre}(k/k-1) \cdot \left[I - K(k)H\right]^T + K(k) \cdot R \cdot K(k)^T$$

avec la matrice unitaire I,

**en ce que** le vecteur d'état prédit suivant ($x^{pre}(k+1/k)$) et l'erreur d'estimation prédite suivante ($P^{pre}(k+1/k)$) sont prédits à partir de cela dans le cycle temporel suivant à l'instant $t = k + 1$ dans l'étage de prédiction (5.1) du filtre de Kalman (5).

16. Équipement de relèvement selon la revendication 14 ou 15, **caractérisé en ce qu'**à la suite de l'étage de calcul de l'écart (6), en vue de déterminer la probabilité d'association d'une association de la valeur mesurée ($z(k)$) mesurée à l'instant ($k$) ayant l'erreur de mesure ($R$) et du vecteur d'état prédit ($x^{pre}(k/k$-1)) et l'erreur d'estimation ($P^{pre}(k/k$-1)), est disposé un calculateur de qualité de trace (9) comprenant un étage de calcul (11) prévu du côté de l'entrée pour calculer le quotient de probabilité sous la forme d'une qualité de trace ($L$), aux entrées supplémentaires duquel sont préappliquées la probabilité de détection ($P_D$) et la probabilité d'alarme intempestive ($P_{FA}$) d'un angle de relèvement à l'écart angulaire ($\Delta\Theta$) de la direction de réception principale de deux caractéristiques directionnelles voisines, et un dispositif de comparaison de limites (12) branché en aval aux entrées duquel sont préappliquées les probabilités $\alpha$ et $\beta$ pour la confirmation d'une trace erronée ou l'effacement d'une trace correcte, **en ce que** dans le dispositif de comparaison de limites (12), la qualité de la trace ($L$) à la sortie de l'étage de calcul (11) est comparée avec une limite supérieure et une limite inférieure ($T_2$, $T_1$) en vue d'ajouter l'angle de relèvement ($\Theta(k/k)$) et éventuellement l'intensité de trace ($\hat{a}(k/k)$) à une trace de relèvement provisoire et/ou confirmée afin d'induire une nouvelle trace de relèvement ou en vue d'effacer la trace de relèvement, **en ce que** les angles de relèvement ($\Theta(k/k)$) et éventuellement les intensités de trace ($\hat{a}(k/k)$) à la sortie du filtre de Kalman (5) sont connectés conjointement avec le signal de sortie du dispositif de comparaison de limites (12) pour les qualités de trace ($L$) associées à un registre (13) des traces de relèvement, **en ce que** l'angle de relèvement ($\Theta(k/k)$) et éventuellement l'intensité de trace ($a(k/k)$) sont reliés par le biais d'une porte (14), laquelle peut être commandée par le dispositif de comparaison de limites (12), avec les moyens d'affichage (4) sur lesquels sont affichés les traces de relèvement.

17. Équipement de relèvement selon l'une des revendications 14 à 16, **caractérisé en ce que** dans l'étage de calcul de l'écart (6), pour contrôler la probabilité d'association de l'association d'un angle de relèvement mesuré ($\Theta^{mess}$(k)) et éventuellement d'une intensité mesurée ($a^{mess}$(k)) avec une trace de relèvement, un écart statistique normalisé élevé au carré ($d^2$(k/k-1))

$$d^2(k/k-1) = y^T(k/k-1) \cdot S^{-1}(k/k-1) \cdot y(k/k-1)$$

avec

$$y(k/k-1) = z(k) - H\hat{x}^{pre}(k/k-1)$$

est déterminé selon le procédé du voisin global le plus proche, la différence d'angle de relèvement élevée au carré se rapportant à la somme des erreurs ($S$(k/k-1)) des erreurs de mesure ($R$) et des erreurs d'estimation prédites ($P^{pre}$(k/k-1)) de $t$=k-1 à $t$=k et la probabilité de l'association est la plus élevée lorsque l'écart statistique normalisé élevé au carré ($d^2$) est le plus petit.

**18.** Équipement de relèvement selon la revendication 17, **caractérisé en ce qu'**entre l'étage de calcul de l'écart (6) et l'étage d'association des données mesurées (8) est prévu un circuit de porte (7) pour comparer l'écart statistique normalisé élevé au carré ($d^2$) entre la valeur mesurée et l'erreur d'estimation prédite avec une valeur de porte prédéfinissable, **en ce que** le circuit de porte (7) bloque le passage de l'écart statistique normalisé élevé au carré ($d^2$) à la sortie de l'étage de calcul de l'écart (6) lorsque cet écart est supérieur à une valeur de porte prédéfinie, **en ce que** la valeur de porte G est déterminée conformément à

$$G = 2 \cdot \ln \frac{P_D \cdot \Delta\Theta}{(1-P_D) \cdot (2\pi)^{M/2} P_{FA}\sqrt{|S|}}$$

en indiquant une probabilité de détection ($P_D$) pour un angle de relèvement réel à l'écart angulaire ($\Delta\Theta$) de la direction de réception principale de deux caractéristiques directionnelles voisines et une probabilité d'alarme intempestive ($P_{FA}$) en tenant compte de la somme des carrés de l'erreur de mesure ($\sigma_\Theta^{2\,mess}$) et de l'erreur d'estimation ($P_\Theta^{pre}(k/k-1)$), $M$ désignant une dimension du vecteur de mesure avec $M$ = 1, 2, 3, ...

*Fig. 1*

*Fig. 3*

*Fig. 2*

41

42 — MHT

43

SLTs ▬► MLTs — 45

44 — HMI-1    HMI-2 — 46

*Fig. 4*

50

51

52

53

59

54

57

58

55    56

*Fig. 5*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE  102007019445

**In der Beschreibung aufgeführte Nicht-Patentliteratur**

- **KOCH, W.** On Optimal Distributed Kalman Filtering and Retrodiction at Arbitrary Communication Rates for Maneuvering Targets. *IEEE International Conference on Multisensor Fusion and Integration for Intelligent Systems,* 20. August 2008, 457-462

- **Samuel Blackman ; Robert Popoli.** Design and Analysis of Modern Tracking Systems. Artec House, 1999